# NEUE EUROPÄISCHE PATENTSCHRIFT

(11) **EP 1 490 441 B2**
(45) Veröffentlichungstag und Bekanntmachung des Hinweises auf die Entscheidung über den Einspruch: **26.12.2012**
(45) Hinweis auf die Patenterteilung: 10.09.2008
(21) Anmeldenummer: 03718695.4
(22) Anmeldetag: 18.03.2003
(51) Int. Cl.: C09B 67/00

(54) **FARBSTOFFMISCHUNGEN VON FASERREAKTIVEN AZOFARBSTOFFEN, IHRE HERSTELLUNG UND IHRE VERWENDUNG**
DYE MIXTURES OF FIBER-REACTIVE AZO DYES, THEIR PRODUCTION AND USE
MELANGES DE COLORANTS AZOIQUES REAGISSANT AUX FIBRES, REALISATION ET UTILISATION ASSOCIEES

(30) Priorität: 22.03.2002 DE 10212769; 22.03.2002 DE 10212770; 19.04.2002 DE 10217476; 19.04.2002 DE 10217478; 05.03.2003 DE 10309406
(43) Veröffentlichungstag der Anmeldung: 29.12.2004
(73) Patentinhaber: DyStar Colours Distribution GmbH, 65926 Frankfurt am Main (DE)
(72) Erfinder: EICHHORN, Joachim, 65929 Frankfurt am Main (DE); RUSS, Werner, 65439 Flörsheim-Wicker (DE); MEIER, Stefan, 60529 Frankfurt (DE); MROTZECK, Uwe, Matthews, NC 28105 (DE)
(86) Internationale Anmeldenummer: PCT/EP2003/002836
(87) Internationale Veröffentlichungsnummer: WO 2003/080739

(56) Entgegenhaltungen:
- EP-A- 0 600 322
- EP-A- 0 731 145
- EP-A- 0 976 792
- EP-A- 0 976 794
- WO-A-00/06652
- WO-A-02/098988
- DE-A1- 19 600 765
- JP-A- 01 289 868
- DATABASE WPI Section Ch, Week 199001 Derwent Publications Ltd., London, GB; Class E21, AN 1990-005299 XP002246245 & JP 01 289868 A (KIWA KAGAKU KOGYO K), 21. November 1989 (1989-11-21)
- Künstliche Organische Farbstoffe und ihre Zwischenprodukte, H.R.Schweizer,Springer Verlag, Berlin-Göttingen-Heidelberg,1964, Seite 125

## Beschreibung

Die Erfindung liegt auf dem technischen Gebiet der faserreaktiven Azofarbstoffe.

Farbstoffmischung faserreaktiver Azofarbstoffe und deren Verwendung zum Färben von Hydroxy- und Carbonamidgruppen-haltigen Material in schwarzen Farbtönen sind beispielsweise aus den Dokumenten US 5,445,654, US 5,611,821, KR 94-2560, Sho 58-160362 und EP-A-0 870 807 bekannt. Diese besitzen jedoch gewisse anwendungstechnische Mängel, wie beispielsweise eine zu große Abhängigkeit der Farbausbeute von wechselnden Färbeparametern im Färbeprozeß, oder einen ungenügenden oder unegalen Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern). Folge dieser Mängel können beispielsweise schlechte Reproduzierbarkeiten der erhältlichen Färbungen sein, was letztendlich die Wirtschaftlichkeit des Färbeprozesses beeinträchtigt.
Infolgedessen besteht weiterhin ein Bedarf nach neuen Reaktivfarbstoffen bzw. Reaktivfarbstoffmischungen mit verbesserten Eigenschaften, wie hohe Substantivität bei gleichzeitig guter Auswaschbarkeit von nicht fixierten Anteilen.
Sie müssen darüberhinaus auch gute färberische Ausbeuten aufweisen und eine hohe Reaktivität besitzen, wobei insbesondere Färbungen mit hohen Fixiergraden geliefert werden sollen.

Mit der vorliegenden Erfindung wurden nunmehr Farbstoffmischungen gefunden, die diese oben beschriebenen Eigenschaften in hohem Maße besitzen. Die neuen Farbstoffmischungen zeichnen sich vor allem durch hohe Fixierausbeuten und leichte Auswaschbarkeit der nicht auf der Faser fixierten Anteile aus. Zudem weisen die Färbungen gute Allgemeinechtheiten, wie beispielsweise hohe Lichtechtheit und sehr gute Nassechtheiten auf und zeigen eine geringe Tendenz zum Anfärben von Polyamid bei Baumwolle/Polyamid-Mischgewebe.

Die Erfindung betrifft somit Farbstoffmischungen, die einen oder mehrere, wie zwei oder drei, bevorzugt 1 oder 2, Farbstoffe der nachstehend angegebenen und definierten allgemeinen Formel (I), 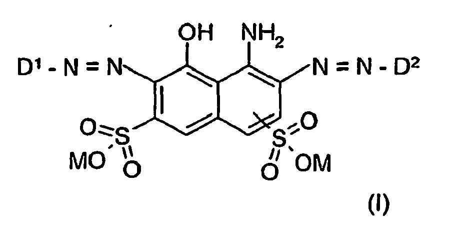 einen oder mehrere, wie zwei oder drei, bevorzugt 1 oder 2, Farbstoffe der nachstehend angegebenen und definierten allgemeinen Formel (II) 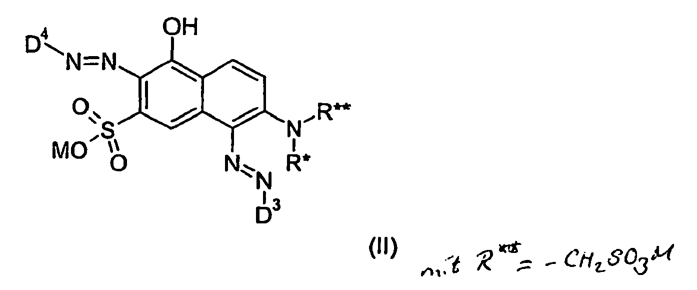 und optional einen oder mehrere, wie zwei oder drei, bevorzugt 1 oder 2, Farbstoffe der nachstehend angegebenen und definierten allgemeinen Formel (III) 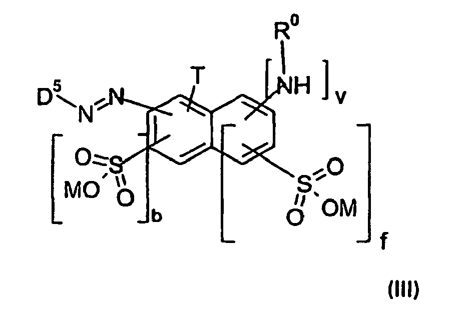 enthalten, in welchen bedeuten:
D¹, D², D³, D⁴ und D⁵ sind unabhängig voneinander eine Gruppe der allgemeinen Formel (1) 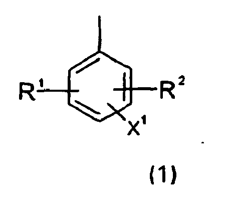 worin
   - R¹ und R²: unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
   - X¹: für Wasserstoff oder eine Gruppe der Formel -SO₂-Z steht,
   wobei
   Z -CH = CH₂, -CH₂CH₂Z¹ oder Hydroxy bedeutet,
   worin
   Z¹ Hydroxy oder eine unter Alkaliwirkung abspaltbare Gruppe ist oder
D¹, D², D³, D⁴ und D⁵ bedeuten unabhängig voneinander eine Naphthylgruppe der allgemeinen Formel (2) 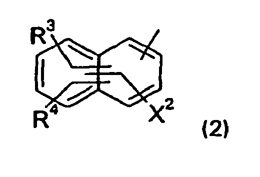 worin
   - R³ und R⁴: unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
   - X²: eine der Bedeutungen von X¹ hat; oder
D¹, D², D³, D⁴ und D⁵ sind unabhängig voneinander eine Gruppe der allgemeinen Formel (3) 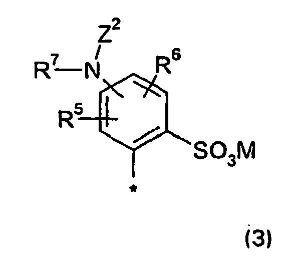 worin
   - R⁵ und R⁶: unabhängig voneinander eine der Bedeutungen von R¹ und R² haben;
   - R⁷: ist Wasserstoff, (C₁-C₄)-Alkyl, unsubstituiertes oder durch (C₁-C₄)-Alkyl, (C₁-C₄)-Alkoxy, Sulfo, Halogen oder Carboxy substituiertes Phenyl; und
   - Z²: ist eine Gruppe der allgemeinen Formel (4) oder (5) oder (6) 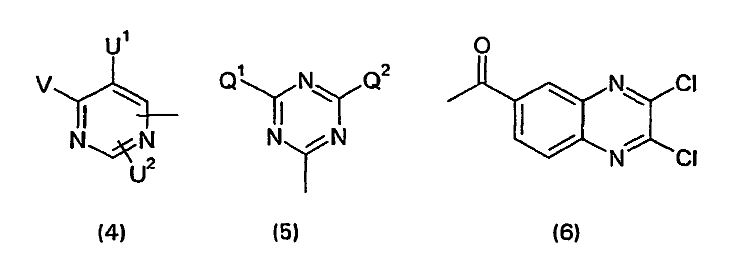 worin
   V Fluor oder Chlor bedeutet;
   U¹, U² unabhängig voneinander Fluor, Chlor oder Wasserstoff sind;
   und
   Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (7) oder (8) bedeuten 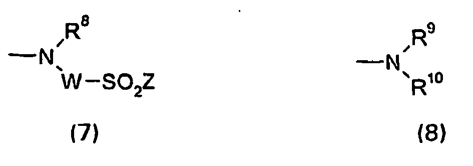 worin
   R⁸ Wasserstoff oder (C₁-C₆)-Alkyl, Sulfo-(C₁-C₆)-Alkyl oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
   R⁹ und R¹⁰ haben unabhängig voneinander eine der Bedeutungen von R⁸, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfonyl, -NR¹¹ mit R¹¹ = (C₁-C₆)-Alkyl ist;
   W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfonyl, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
   Z die obengenannte Bedeutung hat; oder
D¹, D², D³, D⁴ und D⁵ stehen unabhängig voneinander für eine Gruppe der allgemeinen Formel (9) 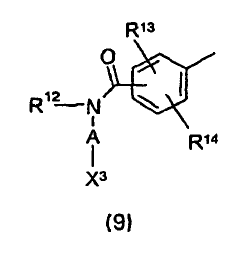 worin
   - R¹²: Wasserstoff, (C₁-C₄)-Alkyl, Aryl oder ein substituierter Arylrest ist;
   - R¹³ und R¹⁴: unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
   - A: eine Phenylengruppe der allgemeinen Formel (10) ist 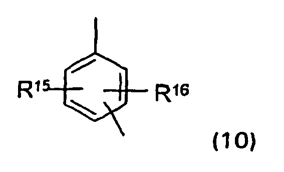 worin
   R¹⁵ und R¹⁶ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; oder
   - A: ist eine Naphthylengruppe der allgemeinen Formel (11) 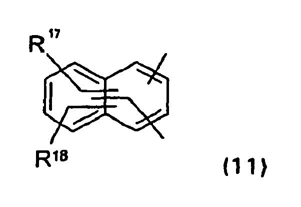 worin
   R¹⁷ und R¹⁸ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten;
   - X³: eine der Bedeutungen von X¹ hat; und
   - R⁰: für eine Gruppe der allgemeinen Formel (4) oder (5) steht oder eine Gruppe der allgemeinen Formel (13) 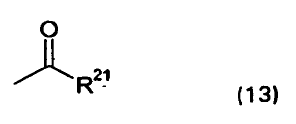 bedeutet, worin;
   - R²¹: (C₁-C₆)-Alkyl, Sulfo-(C₁-C₆)-Alkyl, Carboxy-(C₁-C₆)-Alkyl oder Phenyl ist, das unsubstituiert oder durch (C₁-C₄)-Alkyl, (C₁-C₄)-Alkoxy, Sulfo, Halogen, Carboxy, Acetamido, Ureido substituiert ist; und
b, f, v unabhängig voneinander für 0 oder 1 stehen;
   und
R*, Wasserstoff, (C₁-C₄)-Alkyl oder eine Gruppe der Formel (14)

   -CH₂-SO₃M (14)

   sind;
   - T: für Hydroxy oder NH₂ steht, wobei für T gleich NH₂ v für 0 steht
   und
   - M: Wasserstoff, ein Alkalimetall oder ein Äquivalent eines Erdalkalimetalls bedeutet, wobei in den Mischungen die Farbstoffe der allgemeinen Formeln (I) - (III) enthalten mindestens eine faserreaktive Gruppe der Formel -SO₂-Z oder -Z² enthalten.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Für Substituenten R stehende (C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl. Analoges gilt für (C₁-C₄)-Alkoxygruppen.

Für Substituenten R stehende Arylgruppen sind insbesondere die Phenylgruppe. Eine für R⁸ bis R¹⁰, R¹² oder R²¹ stehende substituierte Arylgruppe ist insbesondere eine mit ein, zwei oder drei voneinander unabhängigen Gruppen aus der Reihe (C₁-C₄)-Alkyl, (C₁-C₄)-Alkoxy, Hydroxy, Sulfo, Carboxy, Amido oder Halogen substituierte Phenylgruppe.
Für Substituenten R stehendes Halogen ist insbesondere Fluor, Chlor und Brom, wobei Fluor und Chlor bevorzugt sind.

Alkalisch eliminierbare Substituenten Z¹, die in β-Stellung der Ethylgruppe von Z stehen, sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino.

Z ist bevorzugt Vinyl, β-Chlorethyl und insbesondere bevorzugt β-Sulfatoethyl.

Die Gruppen "Sulfo", "Carboxy", "Thiosulfato", "Phosphato", und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, jeweils mit M der obengenannten Bedeutung.

Die Farbstoffe der allgemeinen Formel (I) bis (III) können innerhalb der Bedeutung von Z unterschiedliche faserreaktive Gruppen -SO₂Z besitzen. Insbesondere können die faserreaktiven Gruppen -SO₂Z zum einen Vinylsulfonylgruppen und zum anderen Gruppen -CH₂CH₂Z¹, bevorzugt β-Sulfatoethylsulfonyl-Gruppen, bedeuten. Enthalten die Farbstoffe der allgemeinen Formel (I) bis (III) teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

Der Rest R* in der allgemeinen Formel (II) bedeutet bevorzugt Wasserstoff, Methyl oder eine Gruppe der Formel (14), wobei Wasserstoff oder eine Gruppe der Formel (14) besonders bevorzugt sind.
Die Reste R¹ und R² sind bevorzugt Wasserstoff, (C₁-C₄)-Alkylgruppen, (C₁-C₄)-Alkoxygruppen, Sulfo oder Carboxy und besonders bevorzugt Wasserstoff, Methyl, Methoxy oder Sulfo.
Die Reste R³ bis R⁶ und R¹² bis R¹⁸ sind bevorzugt Wasserstoff, R³ bis R⁶, R¹⁷ und R¹⁸ sind außerdem bevorzugt Sulfo.
Die Reste R⁷ bis R¹⁰ sind bevorzugt Wasserstoff oder Methyl, R⁷ und R⁸ sind bevorzugt auch Phenyl und R⁹ und R¹⁰ sind bevorzugt 2-Sulfoethyl, 2-, 3- oder 4-Sulfophenyl oder R⁹ und R¹⁰ bilden ein cyclisches Ringsystem, das bevorzugt der Formel -(CH₂)₂-O-(CH₂)₂- entspricht.

Beispiele für Gruppen D¹ bis D⁵ der allgemeinen Formel (1) und (2) sind 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlör-4-(β-sulfatoethylsulfonyl)-phenyl, 2-Chlor-5-(β-sulfatoethylsulfonyl)-phenyl, 2-Brom-4-(β-sulfatoethylsulfonyl)-phenyl, 2-Sulfo-4-(β-sulfatoethylsulfonyl)-phenyl, 2-Sulfo-5-(β-sulfatoethylsulfonyl)-phenyl, 2-Methoxy-5-(β-sulfatoethylsulfonyl)-phenyl, 2-Ethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2- oder 3- oder 4-Vinylsulfonyl-phenyl, 2-Sulfo-4-vinylsulfonyl-phenyl, 2-Chlor-4-(β-chlorethylsulfonyl)-phenyl, 2-Chlor-5-(β-chlorethylsulfonyl)-phenyl, 3- oder 4-(β-Acetoxyethylsulfonyl)-phenyl, 6- oder 8-(β-Sulfatoethylsulfonyl)-naphth-2-yl, 6-(β-Sulfatoethylsulfonyl)-1-sulfo-naphth-2-yl und 8-(β-Sulfatoethylsulfonyl)-6-sulfonaphth-2-yl, hiervon bevorzugt sind 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl und 3- oder 4-Vinylsulfonyl-phenyl, oder D¹ bis D⁵ entsprechen einer Gruppe der allgemeinen Formeln (3) oder (9), wobei R⁵ bis R⁷ und R¹² bis R¹⁴ die oben beschriebenen bevorzugten Bedeutungen besitzen.

Im Falle, daß D¹ bis D⁵ für eine Gruppe der allgemeinen Formel (1) und X¹ für - SO₂Z stehen, steht die SO₂Z-Gruppe bevorzugt in meta- oder para-Stellung zur Diazogruppe und im Falle, daß D¹ bis D⁵ für eine Gruppe der allgemeinen Formel (2) steht, steht die Bindung, die zur Diazogruppe führt bevorzugt in β-Stellung an den Naphthalinkern gebunden.

Im Falle, daß A für Phenylen und X³ für -SO₂Z stehen, steht die SO₂Z-Gruppe bevorzugt in meta- oder para-Stellung zum Stickstoffatom. In der Gruppe der allgemeinen Formel (9) steht die Carbonamid-Gruppe bevorzugt in para- oder meta-Position zur Diazogruppe. Im Falle, daß A für Naphthylen steht, steht die Bindung, die zum Stickstoffatom führt, bevorzugt in β-Stellung an den Naphthalinkern gebunden.

Beispiele für für A stehende Substituenten sind insbesondere 1,2-Phenylen, 1,3-Phenylen, 1,4-Phenylen, 2-Chlor-1,4-phenylen, 2-Chlor-1 ,5-phenylen, 2-Brom-1,4-phenylen, 2-Sulfo-1,4-phenylen, 2-Sulfo-1,5-phenylen, 2-Methoxy-1,5-phenylen, 2-Ethoxy-1,5-phenylen, 2,5-Dimethoxy-1,4-phenylen, 2-Methoxy-5-methyl-1,4-phenylen, 2-Methyl-1,4-phenylen, 2,6-Naphthylen, 2,8-Naphthylen, 1-Sulfo-2,6-naphthylen, 6-Sulfo-2,8-naphthylen.

Besonders bevorzugt steht A für 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen bedeutet.

W ist bevorzugt 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen, 1,2-Ethylen, 1,3-Propylen.

Beispiele für die Gruppen Q¹ und Q² in der allgemeinen Formel (5) sind unabhängig voneinander Fluor, Chlor, Hydroxy, Methoxy, Ethoxy, Phenoxy, 3-Sulfophenoxy, 4-Sulfophenoxy, Methylmercapto, Cyanamido, Amino, Methylamino, Ethylamino, Morpholino, Piperidino, Phenylamino, Methylphenylamino, 2-Sulfophenylamino, 3-Sulfophenylamino, 4-Sulfophenylamino, 2,4-Disulfophenylamino, 2,5-Disulfophenylamino, 2-Sulfoethylamino, N-Methyl-2-sulfoethylamino, Pyridino, 3-Carboxypyridino, 4-Carboxypyridino, 3-Carbamoylpyridino, 4-Carbamoylpyridino, 2-(2-Sulfatoethylsulfonyl)-phenylamino, 3-(2-Sulfatoethylsulfonyl)-phenylamino, 4-(2-Sulfatoethylsulfonyl)-phenylamino, N-Ethyl-3-(2-sulfatoethylsulfonyl)-phenylamino, N-Ethyl-4-(2-sulfatoethylsulfonyl)-phenylamino, 2-Carboxy-5-(2-sulfatoethylsulfonyl)-phenylamino), 2-Chlor-4-(2-sulfatoethylsulfonyl)-phenylamino, 2-Chlor-5-(2-sulfatoethylsulfonyl)-phenylamino, 2-Brom-4-(2-sulfatoethylsulfonyl)-phenylamino, 2-Sulfo-4-(2-sulfatoethylsulfonyl)-phenylamino, 2-Sulfo-5-(2-sulfatoethylsulfonyl)-phenylamino, 2-Methoxy-5-(2-sulfatoethylsulfonyl)-phenylamino, 2,5-Dimethoxy-4-(2-sulfatoethylsulfonyl)-phenylamino, 2-Methoxy-5-methyl-4-(2-sulfatoethylsulfonyl)-phenylamino, 2-Methyl-4-(2-sulfatoethylsulfonyl)-phenylamino, 2-(Vinylsulfonyl)-phenylamino, 3-(Vinylsulfonyl)-phenylamino, 4-(Vinylsulfonyl)-phenylamino), N-Ethyl-3-(vinylsulfonyl)-phenylamino, N-Ethyl-4-(vinylsulfonyl)-phenylamino, 6-(2-Sulfatoethylsulfonyl)-naphth-2-ylamino, 8-(2-Sulfatoethylsulfonyl)-naphth-2-ylamino, 8-(2-Sulfatoethylsulfonyl)-6-sulfo-naphth-2-ylamino, 3-(2-(2-Sulfatoethylsulfonyl)-ethylcarbamoyl)-phenylamino, 4-(2-(2-Sulfatoethylsulfonyl)-ethylcarbamoyl)-phenylamino, 3-(2-(Vinylsulfonyl)-ethylcarbamoyl)-phenylamino, 4-(2-(2-Vinylsulfonyl)-ethylcarbamoyl)-phenylamino, 4-(N-Methyl-2-(2-sulfatoethylsulfonyl)-ethylcarbamoyl)-phenylamino, 4-(N-Phenyl-2-(2-sulfatoethylsulfonyl)-ethylcarbamoyl)-phenylamino, 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, 3-(2-Sulfatoethylsulfonyl)-propylamino, N-Methyl-N-(2-(2-sulfatoethylsulfonyl)-ethyl)-amino, N-Phenyl-N-(2-(2-sulfatoethylsulfonyl)-ethyl)-amino, N-Phenyl-N-(2-(2-sulfatoethylsulfonyl)-propyl)-amino.

Bevorzugt stehen die Gruppen Q¹ und Q² in der allgemeinen Formel (5) unabhängig voneinander für Fluor, Chlor, Cyanamido, Morpholino, 2-Sulfophenylamino, 3-Sulfophenylamino, 4-Sulfophenylamino, N-Methyl-2-sulfoethylamino, 3-Carboxypyridino, 4-Carboxypyridino, 3-Carbamoylpyridino, 4-Carbamoylpyridino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, N-Methyl-N-(2-(2-sulfatoethylsulfonyl)-ethyl)-amino, N-Phenyl-N-(2-(2-sulfatoethylsulfonyl)-ethyl)-amino.

Besonders bevorzugt stehen die Gruppen Q¹ und Q² in der allgemeinen Formel (5) unabhängig voneinander für Fluor, Chlor, Cyanamido, Morpholino, 2-Sulfophenylamino, 3-Sulfophenylamino, 4-Sulfophenylamino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), N-Methyl-N-(2-(2-sulfatoethylsulfonyl)-ethyl)-amino, N-Phenyl-N-(2-(2-sulfatoethylsulfonyl)-ethyl)-amino.

Beispiele für die Gruppe Z² sind 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 4,5-Difluor-pyrimidin-6-yl, 5-Chlor-4-fluor-pyrimidin-6-yl, 2,4,5-Trichlor-pyrimidin-6-yl, 4,5-Dichlor-pyrimidin-6-yl, 2,4-Dichlor-pyrimidin-6-yl, 4-Fluor-pyrimidin-6-yl, 4-Chlor-pyrimidin-6-yl, oder eine Gruppe der allgemeinen Formel (5) mit den oben angegebenen Beispielen für Q¹ und Q² oder eine Gruppe der allgemeinen Formel (6).

Bevorzugt bedeutet Z² 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl oder eine Gruppe der allgemeinen Formel (5) mit den oben angegebenen bevorzugten Gruppen Q¹ und Q².

Besonders bevorzugt steht Z² für 2,4-Difluor-pyrimidin-6-yl, 5-Chlor-2,4-difluor-pyrimidin-6-yl oder für eine Gruppe der allgemeinen Formel (5) mit den oben angegebenen besonders bevorzugten Gruppen Q¹ und Q².

In Formel (III) steht T bevorzugt für Hydroxy oder Amino, in α-Position an den Naphthalinkern gebunden, wobei Hydroxy besonders bevorzugt ist.
b und v stehen bevorzugt für 1 und f für 0.
R⁰ steht besonders bevorzugt für Acetyl, 2,4-Dichlor-1,3,5-triazin-6-yl oder 2,4-Difluor-pyrimidin-6-yl.

Die erfindungsgemäßen Farbstoffmischungen enthalten Bisazofarbstoffe der allgemeinen Formel (I) in einer Menge von 30 bis 95 Gew-%, bevorzugt 50 bis 90 Gew-% und Farbstoffe der allgemeinen Formel (II) in einer Menge von 1 bis 70 Gew-%, bevorzugt 5 bis 50 Gew-%.

Optional können die erfindungsgemäßen Farbstoffmischungen außerdem einen oder mehrere Monoazofarbstoffe der allgemeinen Formeln (15) bis (18) in einer Menge bis zu 10 Gew.-%, bevorzugt bis zu 5 Gew.-%, enthalten, 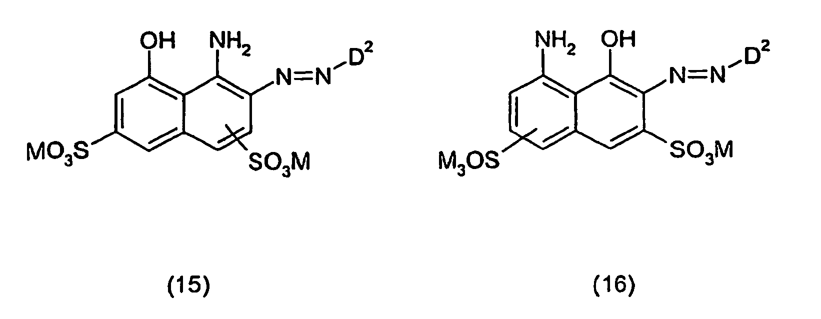 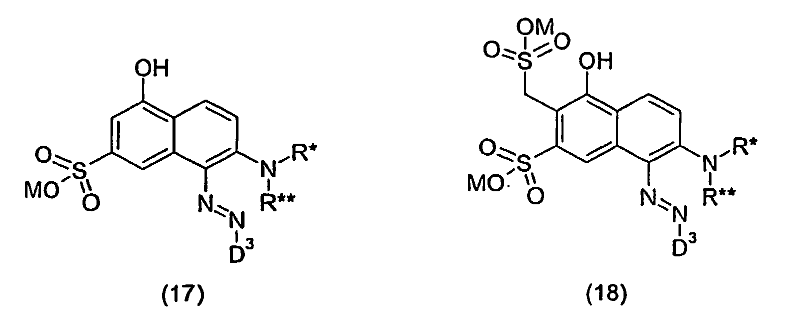 wobei D², D³, M, R* und R** die oben genannten Bedeutungen haben.

Bevorzugt stehen D² und D³ unabhängig voneinander für 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 3- oder 4-Vinylsulfonyl-phenyl, 2-Sulfo-4-(vinylsulfonyl)-phenyl, 2-Methoxy-5-(vinylsulfonyl)-phenyl, 2,5-Dimethoxy-4-(vinylsulfonyl)-phenyl oder 2-Methoxy-5-methyl-4-(vinylsulfonyl)-phenyl.

Die erfindungsgemäßen Farbstoffmischungen können gegebenenfalls noch einen oder mehrere, wie zwei oder drei, bevorzugt 1 oder 2, Farbstoffe mit beispielsweise den nachstehend angegebenen und definierten allgemeinen Formeln (Ga) - (Gf) als weitere Misch- bzw. Nuancierkomponenten enthalten 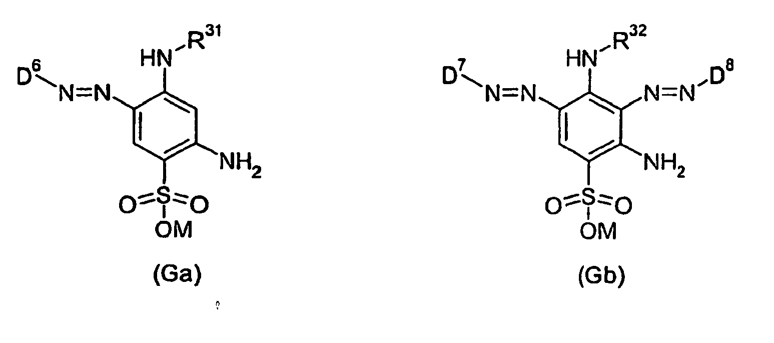 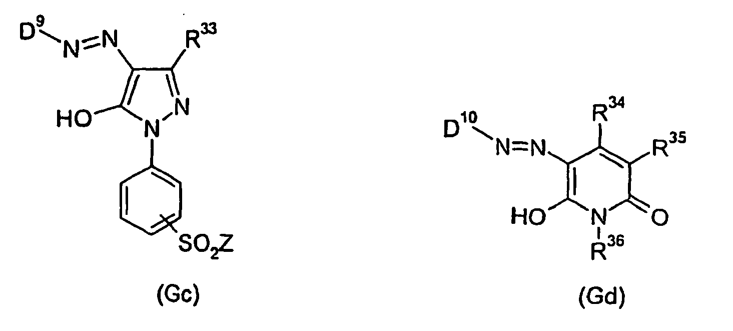 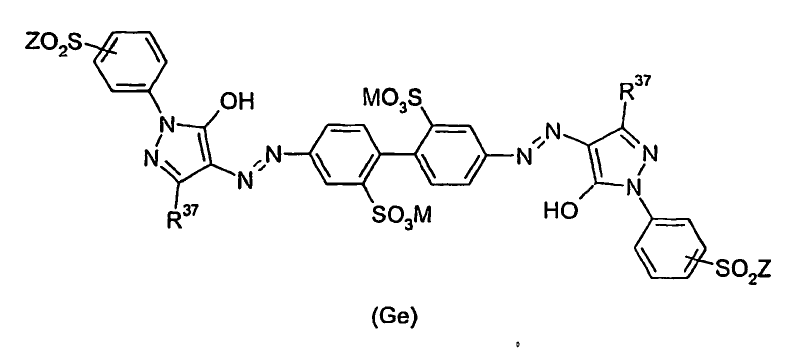 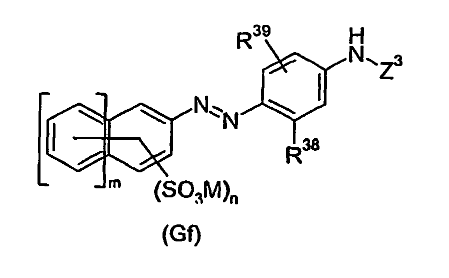 worin
- D⁶, D⁷, D⁸, D⁹, D¹⁰: eine der Bedeutungen von D¹, D², D³, D⁴ oder D⁵ besitzen, wobei D⁶, wenn R³¹ nicht für eine Gruppe der allgemeinen Formel (4) oder (5) steht, sowie D⁷ oder D⁸ und D¹⁰ mindestens eine faserreaktive Gruppe der Formel -SO₂Z oder Z² enthalten;
- R³¹: Wasserstoff, Acetyl, Carbamoyl, Sulfomethyl ist oder für eine Gruppe der allgemeinen Formel (4-1) oder (5-1) steht, 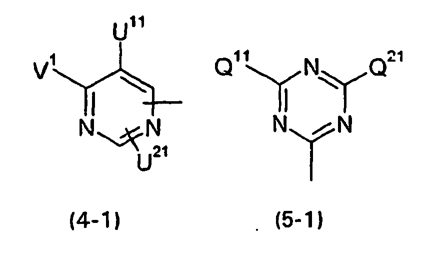
worin
- V¹: Fluor oder Chlor bedeutet;
- U¹¹, U²¹: unabhängig voneinander Fluor, Chlor oder Wasserstoff sind;
und
- Q¹¹, Q²¹: unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (7-1) oder (8-1) bedeuten 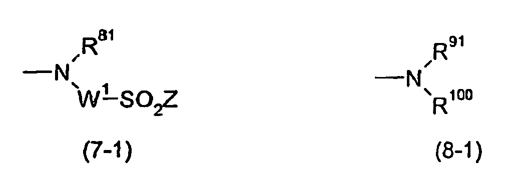
worin
- R⁸¹: Wasserstoff oder (C₁-C₆)-Alkyl, Sulfo-(C₁-C₆)-Alkyl, oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
- R⁹¹ und R¹⁰⁰: haben unabhängig voneinander eine der Bedeutungen von R⁸¹, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfonyl, -NR¹¹ mit R¹¹ = (C₁-C₆)-Alkyl ist;
- W¹: ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfonyl, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
- Z: die obengenannte Bedeutung hat, und

- R³²: Wasserstoff oder Sulfomethyl ist,
- R³³: Methyl, Carboxy oder Carboxyalkyl mit C₁- bis C₄-Alkyl ist,
- R³⁴: Wasserstoff oder Methyl ist,
- R³⁵: Wasserstoff, Cyano, Carbamoyl, Carboxy oder Sulfomethyl ist,
- R³⁶: Methyl, Ethyl oder β-Sulfoethyl ist,
- R³⁷: Methyl, Carboxy oder Carboxyalkyl mit C₁- bis C₄-Alkyl ist,
- R³⁸: Acetamido, Ureido oder Methyl ist,
- R³⁹: Wasserstoff, Methyl oder Methoxy ist,
- m: 0 oder 1 ist,
- n: 1, 2 oder 3 ist,
- Z³: eine der Bedeutungen von Z² hat, und
- M und Z: eine der oben genannten Bedeutungen haben.

Bevorzugte Farbstoffmischungen enthalten einen oder mehrere, wie zwei oder drei, bevorzugt 1 oder 2 Farbstoffe der angegebenen und definierten allgemeinen Formel (I), 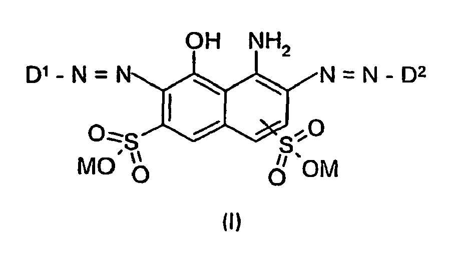 einen oder mehrere Farbstoffe der nachstehend angegebenen und definierten allgemeinen Formel (II) 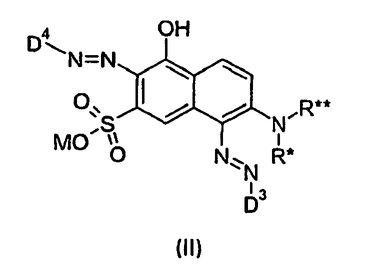 und einen oder mehrere Farbstoffe der nachstehend angegebenen und definierten allgemeinen Formel (III-a) 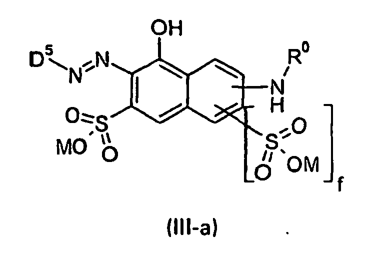 in welchen D¹, D², D³, D⁴ D⁵, R^{o}, R*, R**, f und M die oben genannten Bedeutungen haben.

Weiterhin enthalten bevorzugte Mischungen einen oder mehrere Farbstoffe der allgemeinen Formel (I) 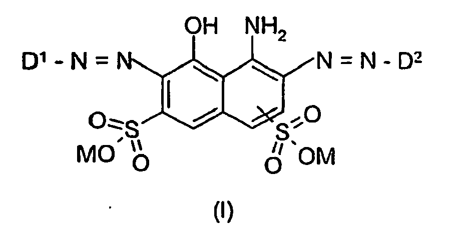 worin D¹, D² und M die oben genannten Bedeutungen haben und einen oder mehrere Farbstoffe der allgemeinen Formel (II) 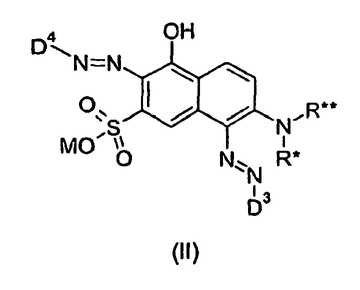 worin D³, D⁴, R*, R** und M die oben genannten Bedeutungen haben, sowie einen oder mehrere Farbstoffe der allgemeinen Formeln (Ga) bis (Gf).

Weitere bevorzugte Farbstoffmischungen enthalten einen oder mehrere, wie zwei oder drei, bevorzugt 1 oder 2, Farbstoffe der nachstehend angegebenen und definierten allgemeinen Formel (I), 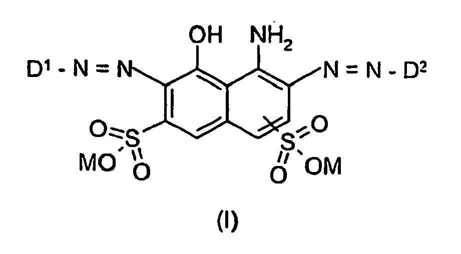 und einen oder mehrere, wie zwei oder drei, bevorzugt 1 oder 2, Farbstoffe der nachstehend angegebenen und definierten allgemeinen Formel (II-a) 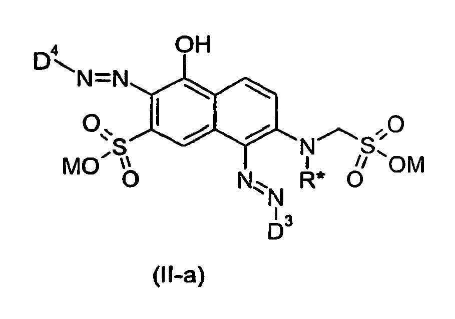 worin
D¹, D², D³, D⁴, R* und M die oben angegebenen Bedeutungen haben. Besonders bevorzugt stehen D¹, D², D³ und D⁴ unabhängig voneinander für 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 3- oder 4-Vinylsulfonyl-phenyl, 2-Sulfo-4-(vinylsulfonyl)-phenyl, 2-Methoxy-5-(vinylsulfonyl)-phenyl, 2,5-Dimethoxy-4-(vinylsulfonyl)-phenyl oder 2-Methoxy-5-methyl-4-(vinylsulfonyl)-phenyl.

Besonders bevorzugte erfindungsgemäße Mischungen enthalten einen oder mehrere Farbstoffe der allgemeinen Formel (I-b), 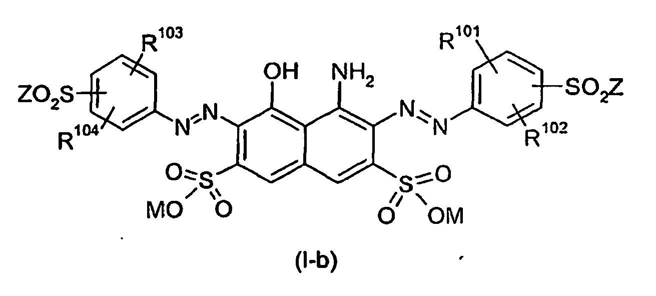 einen oder mehrere Farbstoffe der allgemeinen Formel (II-d) 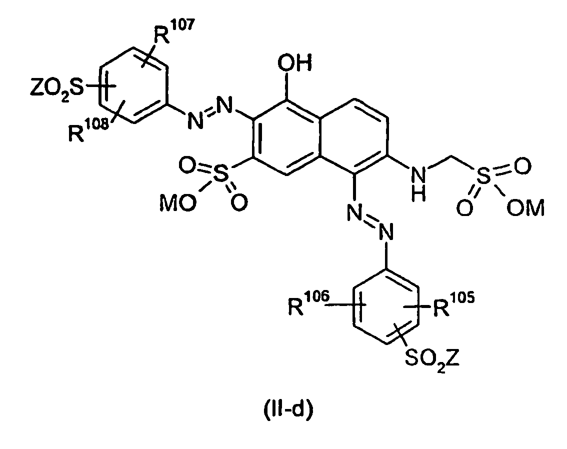 und einen oder mehrere Farbstoffe der allgemeinen Formel (III-b)

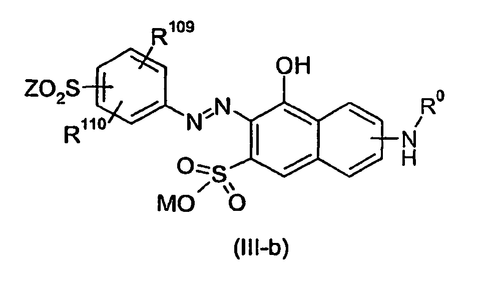

In den allgemeinen Formeln (I-b), (II-d) und (III-b) haben M und Z die obengenannten Bedeutungen.

In den allgemeinen Formeln (I-b), (II-d) und (III-b) stehen R¹⁰¹ bis R¹¹⁰ unabhängig voneinander bevorzugt für Wasserstoff, C₁-C₄-Alkyl, C₁-C₄-Alkoxy, Sulfo, Carboxy oder Halogen und Z für Vinyl oder β-Sulfatoethyl, ganz besonders bevorzugt sind in den Formeln (I-b), (II-d) und (III-b) R¹⁰¹ bis R¹¹⁰ unabhängig voneinander Wasserstoff, Methyl, Methoxy oder Sulfo und Z Vinyl oder β-Sulfatoethyl. In der allgemeinen Formel (III-b) hat R⁰ eine der obengenannten Bedeutungen.

Die erfindungsgemäßen Farbstoffmischungen können als Präparation in fester oder in flüssiger (gelöster) Form vorliegen. In fester Form enthalten sie, so weit erforderlich, die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, außerdem Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 20 bis 90 Gew.-%, bezogen auf die enthaltene Präparation, enthalten. Die Puffersubstanzen liegen in der Regel in einer Gesamtmenge von bis zu 5 Gew.-%, bezogen auf die Präparation, vor.

Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Farbstoffe der allgemeinen Formel (I) sind zahlreich in der Literatur beschrieben und beispielsweise aus der U.S.-Patentschrift 2 657 205 und aus der japanischen Patentanmeldungs-Veröffentlichung Sho-58-160 362 sowie aus der U.S.-Patentschrift 4 257 770 und der dort genannten Literatur bekannt und Farbstoffe der allgemeinen Formel (II) sind in DE 196 00 765 A1 beschrieben. Farbstoffe der allgemeinen Formel (III) sind ebenfalls zahlreich beschrieben und über Standardsynthesemethoden zugänglich. Farbstoffe der allgemeinen Formeln (15) bis (18) werden teilweise während der Synthese von Farbstoffen der allgemeinen Formeln (I) und (II) gebildet und sind ebenfalls über Standardsynthesemethoden zugänglich. Farbstoffe der allgemeinen Formeln (15) und (16) werden üblicherweise als Nuancierkomponenten eingesetzt. Farbstoffe der Formel (Ga)-(Gf) sind literaturbekannt und nach Standardverfahren zugänglich.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können oder durch dem Fachmann geläufige Diazotierung und Kupplung geeigneter Mischungen von Diazo- und Kupplungskomponenten in den gewünschten Mengenverhältnissen.

Beispielsweise kann, wenn die Diazokomponenten mit den Gruppen D¹, D⁴ und D⁵ gemäß den allgemeinen Formeln (I), (II) und (III) gleiche Bedeutung besitzen (D¹ = D⁴ = D⁵), ein Amin der allgemeinen Formel (19)

D¹ - NH₂ (19),

worin D¹ wie oben angegeben definiert ist, in üblicher Weise diazotiert und die erhaltene Diazoniumverbindung anschließend mit einer wässrigen Lösung oder Suspension einer Mischung mit festgelegtem Verhältnis eines Monoazofarbstoffs gemäß der allgemeinen Formel (15), einem Monoazofarbstoff gemäß der allgemeinen Formel (17) und einer Kupplungskomponente der allgemeinen Formel (20) 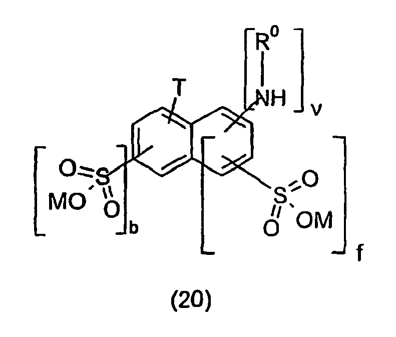 worin T, R⁰, M, b, f und v wie oben angegeben definiert sind, umgesetzt werden.

Für den Fall, daß die Gruppen D² und D³ sowie D¹, D⁴ und D⁵ gemäß den allgemeinen Formeln (I), (II) und (III) gleiche Bedeutung besitzen (D² = D³ und D¹ = D⁴ = D⁵), kann die erfindungsgemäße Farbstoffmischung hergestellt werden, indem man ein Amin der allgemeinen Formel (21),

D² - NH₂ (21),

worin D² wie oben angegeben definiert ist, in üblicher Weise diazotiert und auf eine Mischung der Kupplungskomponenten der allgemeinen Formeln (22) und (23) 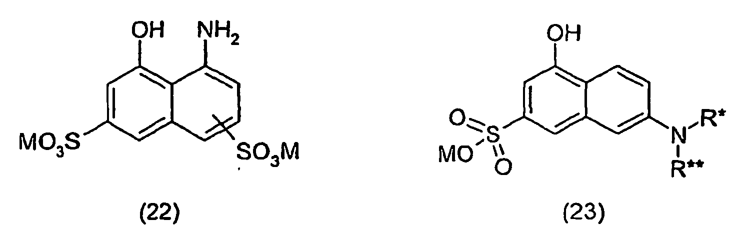 worin M, R* und R** wie oben angegeben definiert sind, bei einem pH-Wert unterhalb von 3 in erster Stufe kuppelt, die erhaltene Reaktionsmischung mit einer weiteren Kupplungskomponente der allgemeinen Formel (20) versetzt und anschließend ein Amin der allgemeinen Formel (19) diazotiert und mit der erhaltenen Mischung der Monoazofarbstoffe der allgemeinen Formeln (15) und (17) sowie der Kupplungskomponente der allgemeinen Formel (20) kuppelt.

Alternativ kann die erfindungsgemäße Farbstoffmischung für den Fall, daß die Gruppen D¹ bis D⁵ gemäß den allgemeinen Formeln (I), (II) und (III) gleiche Bedeutung besitzen (D¹ = D² = D³ = D⁴ = D⁵), hergestellt werden, indem man ein Amin der allgemeinen Formel (19) in üblicher Weise diazotiert und auf eine Mischung mit festgelegtem Verhältnis der Kupplungskomponenten der allgemeinen Formeln (20), (22) und (23) zuerst bei einem pH-Wert unterhalb von 3 in erster Stufe zu einer Mischung der Monoazofarbstoffe der allgemeinen Formeln (15) und (17) sowie der Kupplungskomponente der allgemeinen Formel (20) kuppelt, und daran anschließend durch Erhöhung des pH-Wertes die Zweitkupplung zur Mischung der Farbstoffe der allgemeinen Formeln (I), (II) und (III) durchführt.

Die erfindungsgemäße Farbstoffmischung wird in an und für sich bekannter Weise durch Aussalzen beispielsweise mit Kochsalz oder Kaliumchlorid oder durch Sprühtrocknung bzw. Eindampfen isoliert.

Es können auch die bei der Synthese der Farbstoffe der allgemeinen Formel (1), (II) und (III) anfallenden Lösungen, ggf. nach Zusatz einer Puffersubstanz und ggf. nach Konzentrierung, direkt als Flüssigpräparationen der färberischen Verwendung zugeführt werden.

Farbstoffmischungen die neben β-Chloroethylsulfonyl oder β-Thiosulfatoethylsulfonyl oder β-Sulfatoethylsulfonyl-Gruppen auch Vinylsulfonylgruppen als reaktive Reste haben, können nicht nur ausgehend von entsprechend substituierten Vinylsulfonyl-Anilinen oder Naphthylaminen synthetisiert werden, sondern auch durch Umsetzung einer Farbstoffmischung, worin Z für β-Chloroethyl, β-Thiosulfatoethyl, oder β-Sulfatoethyl steht, mit einer für den gewünschten Anteil erforderlichen Menge an Alkali und Überführung der genannten β-substituierten Ethylsulfonylgruppen in Vinylsulfonylgruppen erhalten werden. Diese Überführung erfolgt in einer dem Fachmann geläufigen Art und Weise.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie beispielsweise in WO 96/37641 und WO 96/37642 sowie in EP-A-0 538 785 und EP-A-0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, beispielsweise im Verhältnis Ware zu Flotte von 1 : 5 bis 1 : 100, bevorzugt 1 : 6 bis 1 : 30, unter Verwendung von verschiedensten säurebindenden Mitteln und gegebenenfalls neutralen Salzen soweit erforderlich, wie Natriumchlorid oder Natriumsulfat, Färbungen mit sehr guten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, beispielsweise mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie beispielsweise Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine hervorragende Farbstärke aus, die teilweise auch in Gegenwart keiner oder nur sehr geringer Alkali- oder Erdalkaliverbindungen erreicht werden kann. In diesen speziellen Fällen benötigt man beispielsweise für eine geringe Farbtiefe kein Elektrolytsalz, für eine mittlere Farbtiefe nicht mehr als 5g/l an Elektrolytsalz und für große Farbtiefen nicht mehr als 10 g/l an Elektrolytsalz. Eine geringe Farbtiefe bezeichnet hierbei den Einsatz von 2 Gew-% Farbstoff bezogen auf das zu färbende Substrat, eine mittlere Farbtiefe bezeichnet den Einsatz von 2 bis 4 Gew-% Farbstoff bezogen auf das zu färbende Substrat und eine große Farbtiefe bezeichnet den Einsatz von 4 bis 10-Gew.- % Farbstoff bezogen auf das zu färbende Substrat.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit leicht auswaschen lassen.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98 ° C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, marineblaue bis tiefschwarze Färbungen mit sehr guten Echtheitseigenschaften.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

70 Teile eines elektrolythaltigen Farbstoffpulvers, das den marineblauen Disazofarbstoff der Formel (I-1) 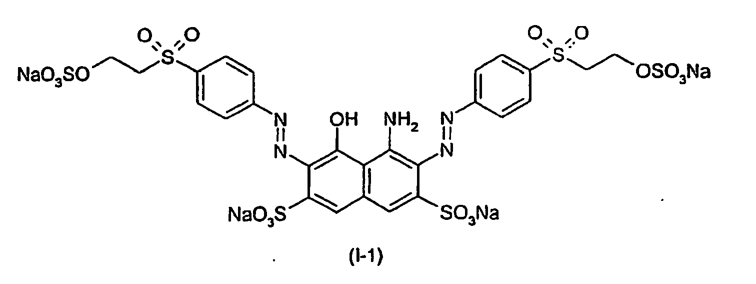 in 75%-igem Anteil enthält, 18 Teile eines elektrolythaltigen Farbstoffpulvers, das den scharlachroten Disazofarbstoff der Formel (II-1) 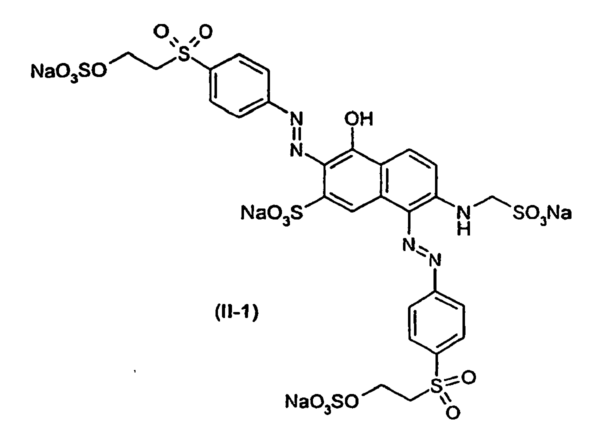 in 70%-igem Anteil enthält und 12 Teile eines elektrolythaltigen Farbstoffpulvers, das den orangefarbenen Azofarbstoff der Formel (III-1) 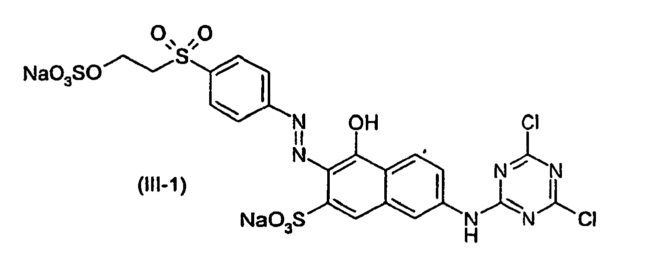 in 75%-igem Anteil enthält, werden mechanisch miteinander gemischt.

Die resultierende, erfindungsgemäße Farbstoffmischung liefert unter den für Reaktivfarbstoffe üblichen Färbebedingungen, beispielsweise auf Baumwolle, tiefschwarze Färbungen und Drucke.

### Beispiel 2

75 Teile eines elektrolythaltigen Farbstoffpulvers, das den marineblauen Disazofarbstoff der Formel (I-1) in 70%-igem Anteil enthält, 15 Teile eines elektrolythaltigen Farbstoffpulvers, das den scharlachroten Disazofarbstoff der Formel (II-2) 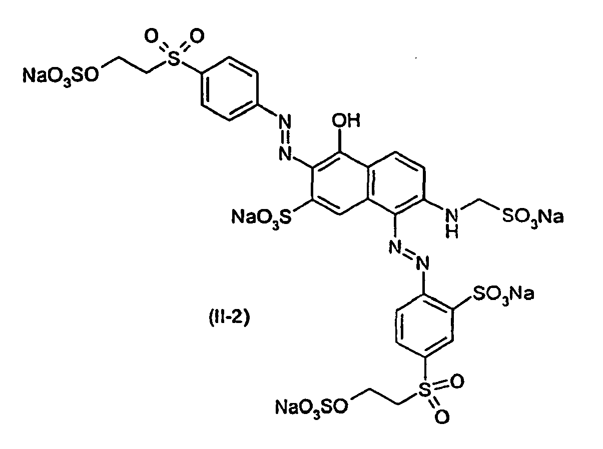 in 75%-igem Anteil enthält und 10 Teile eines elektrolythaltigen Farbstoffpulvers, das den orangefarbenen Azofarbstoff der Formel (III-1) in 80%-igem Anteil enthält, werden in 700 Teilen Wasser gelöst und die erhaltene Farbstofflösung auf pH 5,5-6,5 eingestellt. Durch Eindampfen dieser Farbstofflösung erhält man eine Farbstoffmischung, die auf Baumwolle unter den für Reaktivfarbstoffe üblichen Färbebedingungen tiefschwarze Färbungen und Drucke liefert.

### Beispiel 3

580 Teile 4-(β-Sulfatoethylsulfonyl)-anilin werden in 1400 Teilen Eiswasser und 371 Teilen 30%-iger Salzsäure suspendiert und durch Zutropfen von 357 Teilen 40%-iger Natriumnitritlösung diazotiert. Nach Entfernung des Nitritüberschusses mit Amidosulfonsäure gibt man hierzu 210 Teile 1-Amino-8-hydroxy-naphthalin-3,6-disulfonsäure und 67 Teile 4-Hydroxy-7-(sulfomethyl-amino)-naphthalin-2-sulfonsäure, die durch Umsetzung von 48 Teilen 7-Amino-4-hydroxy-naphthalin-2-sulfonsäure mit 32 Teilen Formaldehydnatriumbisulfit in wässrigem Medium bei pH 5,5 - 6 und 45°C hergestellt wurde, und kuppelt zunächst in erster Stufe bei pH 1 bis 1,5 unterhalb 20°C zu einer Mischung von zwei Monoazofarbstoffen gemäß den Formeln (15-1) und (17-1). Der angegebene pH-Bereich wird dabei durch Zusatz von festem Natriumhydrogencarbonat eingestellt und während der Kupplungsreaktion gehalten. 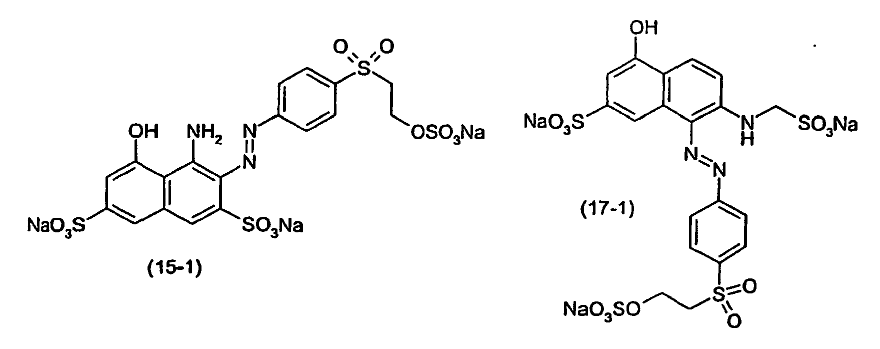 Nach beendeter erster Kupplung setzt man zu dieser Mischung 76 Teile 7-Acetylamino-4-hydroxy-naphthalin-2-sulfonsäure zu und stellt unterhalb 25°C mit Natriumcarbonat pH 5,5 - 6,5 ein. Die nach beendeter zweiter Kupplungsreaktion entstandene 65 : 20 : 15 - Mischung der drei Azofarbstoffe (I-1), (II-1) und (III-2) wird durch Sprühtrocknung isoliert.

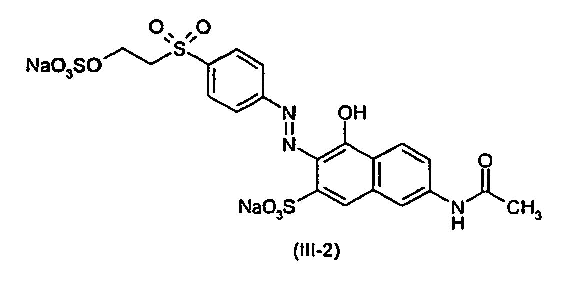

Alternativ kann die erhaltene Farbstofflösung auch durch Zusatz eines PhosphatPuffers bei pH 5,5 - 6 gepuffert und durch weitere Verdünnung bzw. Konzentration als Flüssigmarke bestimmter Stärke eingestellt werden. Die erhaltene, erfindungsgemäße Farbstoffmischung färbt Baumwolle in schwarzen Tönen.

### Beispiel 4

515 Teile 4-(β-Sulfatoethylsulfonyl)-anilin werden in 1200 Teilen Eiswasser und 330 Teilen 30%-iger Salzsäure suspendiert und durch Zutropfen von 318 Teilen 40%-iger Natriumnitritlösung diazotiert. Nach Entfernung des Nitritüberschusses mit Amidosulfonsäure gibt man hierzu 210 Teile 1-Amino-8-hydroxy-naphthalin-3,6-disulfonsäure und kuppelt in erster Stufe bei pH 1 bis 1,5 unterhalb 20°C zu einem roten Monoazofarbstoff der Formel (15-1). Der angegebene pH-Bereich wird dabei durch Zusatz von festem Natriumhydrogencarbonat eingestellt und während der Kupplungsreaktion gehalten.
Nach beendeter erster Kupplung setzt man dem Reaktionsgemisch 76 Teile 6-Acetylamino-4-hydroxy-naphthalin-2-sulfonsäure sowie eine wässrige Lösung von 143 Teilen des scharlachroten Monoazofarbstoffs der Formel (17-2), 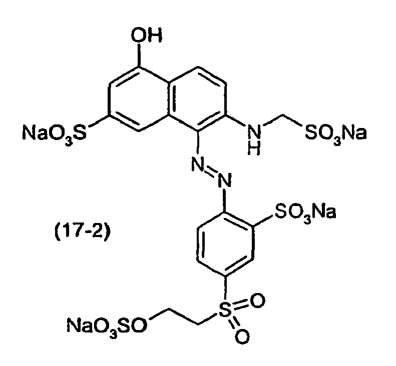 die durch Diazotierung von 65 Teilen 2-Amino-5-(β-sulfatoethylsulfonyl)-benzolsulfonsäure mit 31,5 Teilen 40%-iger Natriumnitritlösung in saurem Medium und anschließender Kupplung auf 60 Teile 4-Hydroxy-7-(sulfomethylamino)-naphthalin-2-sulfonsäure bei pH 1 - 2 erhalten wurde, hinzu. Anschließend wird unterhalb 25°C mit Natriumcarbonat pH 5,5 - 6,5 eingestellt und die nach beendeter Kupplungsreaktion entstandene 65 : 20 : 15 - Mischung der drei Farbstoffe (I-1), (II-2) und (III-3) durch Eindampfen im Vakuum bzw. durch Sprühtrocknung isoliert. 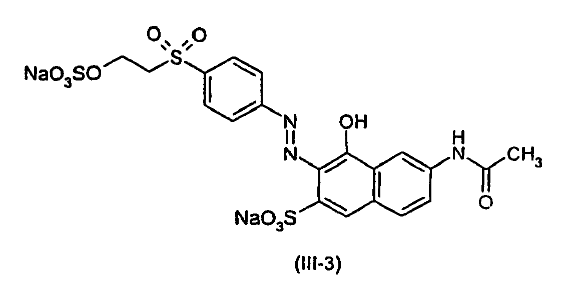 Die erhaltene, erfindungsgemäße Farbstoffmischung färbt Baumwolle in schwarzen Tönen.

### Beispiel 5

a) 230 Teile 4-(β-Sulfatoethylsulfonyl)-anilin werden in 550 Teilen Eiswasser und 148 Teilen 30%-iger Salzsäure suspendiert und durch Zutropfen von 142 Teilen 40%-iger Natriumnitritlösung diazotiert. Nach Entfernung des Nitritüberschusses mit Amidosulfonsäure gibt man hierzu 187 Teile 1-Amino-8-hydroxy-naphthalin-3,6-disulfonsäure und 64 Teile 4-Hydroxy-7-(sulfomethyl-amino)-naphthalin-2-sulfonsäure, die wie in Beispiel 3 angegeben, hergestellt wurden, und kuppelt in erster Stufe bei pH 1 bis 1,5 unterhalb 20°C zu einer Mischung der zwei Monoazofarbstoffe gemäß den Formeln (15-1) und (17-1). Der angegebene pH-Bereich wird dabei durch Zusatz von festem Natriumhydrogencarbonat eingestellt und während der Kupplungsreaktion gehalten. Nach beendeter erster Kupplungsreaktion werden zu dieser Mischung 120 Teile eines Kupplers der Formel (20-1) zugesetzt. 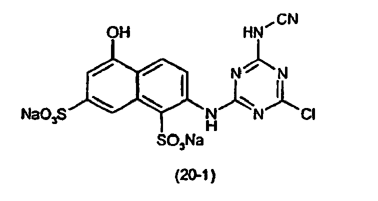
b) In einem zweiten, separaten Reaktionsgefäß werden 316 Teile 2-Methoxy-5-(β-sulfatoethylsulfonyl)-anilin in 950 Teilen Eiswasser und 183 Teilen 30%-iger Salzsäure suspendiert und durch Zutropfen von 177 Teilen 40%-iger Natriumnitritlösung diazotiert. Anschließend wird der Nitritüberschuß mit Amidosulfonsäurelösung entfernt und die erhaltene Diazo-Suspension zur Kuppler-Mischung aus a) gepumpt.
Dann wird unterhalb 25°C mit Natriumcarbonat pH 5,5 - 6,5 eingestellt und die nach beendeter zweiter Kupplungsreaktion entstandene 60 : 20 : 20 - Mischung der drei Farbstoffe (I-2), (II-3) und (III-4) durch Eindampfen im Vakuum bzw. durch Sprühtrocknung isoliert. 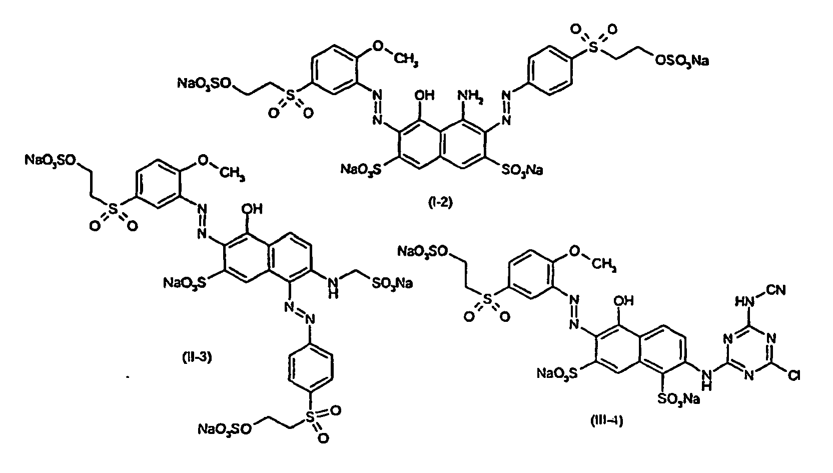 Die erhaltene, erfindungsgemäße Farbstoffmischung färbt Baumwolle in schwarzen Tönen.

### Beispiel 6

a) 351 Teile 4-(β-Sulfatoethylsulfonyl)-anilin werden in 850 Teilen Eiswasser und 225 Teilen 30%-iger Salzsäure suspendiert und durch Zutropfen von 216 Teilen 40%-iger Natriumnitritlösung diazotiert. Hierzu gibt man 319 Teile 1-Amino-8-hydroxy-naphthalin-3,6-disulfonsäure und 83 Teile 4-Hydroxy-7-(sulfomethylamino)-naphthalin-2-sulfonsäure, die wie in Beispiel 3 angegeben, hergestellt wurden, und kuppelt in erster Stufe bei pH 1 bis 1,5 unterhalb 20°C zu einer Mischung der beiden Monoazofarbstoffe gemäß den Formeln (15-1) und (17-1). Der angegebene pH-Bereich wird dabei durch Zusatz von festem Natriumhydrogencarbonat eingestellt und während der Kupplungsreaktion gehalten.
b) In einem zweiten, separaten Reaktionsgefäß werden 427 Teile 2,5-Dimethoxy-4-(β-sulfatoethylsulfonyl)-anilin in 1200 Teilen Eiswasser und 226 Teilen 30%-iger Salzsäure suspendiert und durch Zutropfen von 217 Teilen 40%-iger Natriumnitritlösung diazotiert. Anschließend wird der Nitritüberschuß mit Amidosulfonsäurelösung entfernt und die erhaltene Diazo-Suspension nach beendeter erster Kupplung zur Lösung der beiden Monoazofarbstoffe aus a) gepumpt.
Dann wird unterhalb 25°C mit Natriumcarbonat pH 5 - 6 eingestellt und die nach beendeter zweiter Kupplungsreaktion erhaltene Farbstofflösung mit 250 Teilen eines orangefarbenen Farbstoffs der Formel (III-5) versetzt. Die so entstandene 67 : 17 : 16 - Mischung der drei Azofarbstoffe (I-3), (II-4) und (III-5) kann durch Eindampfen im Vakuum bzw. durch Sprühtrocknung isoliert werden. 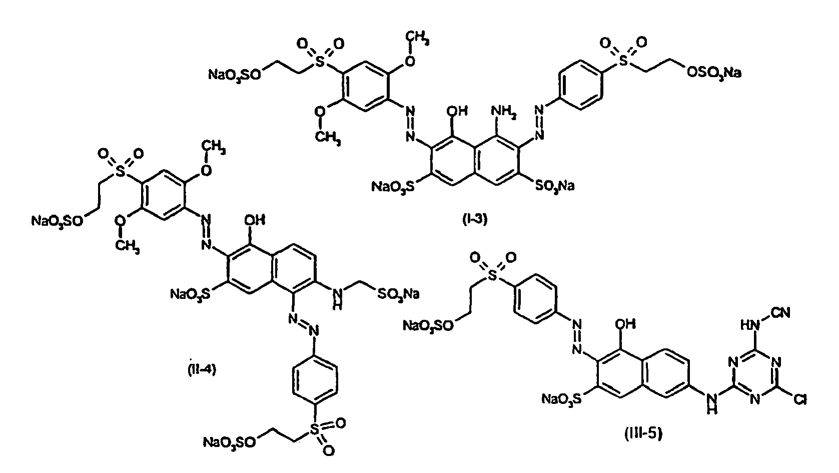 Die so erhaltene, erfindungsgemäße Farbstoffmischung färbt Baumwolle in schwarzen Tönen.

### Beispiel 7

50 Teile eines elektrolythaltigen Farbstoffpulvers, das den grünstichig marineblauen Disazofarbstoff der Formel (I-4) 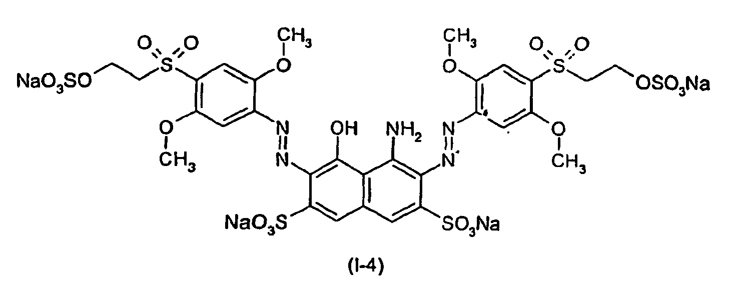 in 70%-igem Anteil enthält, 25 Teile eines elektrolythaltigen Farbstoffpulvers, das den marineblauen Disazofarbstoff der Formel (I-1) in 75%-igem Anteil enthält, 20 Teile eines elektrolythaltigen Farbstoffpulvers, das den scharlachroten Disazofarbstoff der Formel (II-2) in ebenfalls 75%-igem Anteil enthält und 5 Teile eines elektrolythaltigen Farbstoffpulvers, das den orangefarbenen Azofarbstoff der Formel (III-1) in 80%-igem Anteil enthält werden in 500 Teilen Wasser gelöst und die erhaltene Farbstofflösung auf pH 5,5-6,5 eingestellt und mit Phosphatpuffer gepuffert. Durch Eindampfen dieser Lösung erhält man eine Farbstoffmischung, die auf Baumwolle unter den für Reaktivfarbstoffe üblichen Färbebedingungen tiefschwarze Färbungen und Drucke liefert.

### Beispiel 9

70 Teile eines elektrolythaltigen Farbstoffpulvers, das den marineblauen Disazofarbstoff der Formel (I-6) 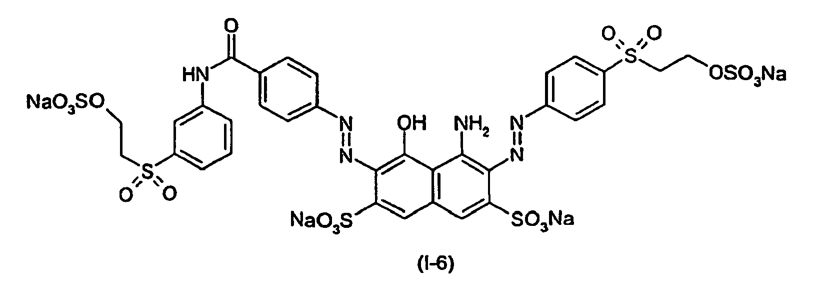 in 70%-igem Anteil enthält, 18 Teile eines elektrolythaltigen Farbstoffpulvers, das den scharlachroten Disazofarbstoff der Formel (II-1) in 75%-igem Anteil enthält und 12 Teile eines elektrolythaltigen Farbstoffpulvers, das den orangefarbenen Azofarbstoff der Formel (III-1) in 70%-igem Anteil enthält, werden wie in Beispiel 1 oder 2 beschrieben miteinander gemischt.

Die resultierende, erfindungsgemäße Farbstoffmischung liefert unter den für Reaktivfarbstoffe üblichen Färbebedingungen sowie mit gegenüber dem Standardverfahren reduzierter Salzmenge, beispielsweise auf Baumwolle, tiefschwarze Färbungen.

### Beispiele 11 bis 448

Die nachfolgenden Tabellenbeispiele beschreiben weitere erfindungsgemäße Mischungen der Farbstoffe der allgemeinen Formeln (I) - (III), die jeweils in Form der Natriumsalze angeführt sind. Die Mischungsverhältnisse sind in Gewichtsprozent angegeben. Die Farbstoffmischungen liefern nach den für Reaktivfarbstoffen üblichen Färbemethoden, beispielsweise auf Baumwolle, graue bis tiefschwarze Färbungen.

### Farbstoff-Mischungen gemäß Beispiel 1 oder 2

| Beispeil | Farbstoff nach allg. Formel (I) | Farbstoff nach allg. Formel (II) | Farbstoff nach Formel (III) | Verhältnis (I):(II):(III) |
|---|---|---|---|---|
| 11 | (I-1) | (II-1) | (III-4) | 65 : 20 : 15 |
| 12 | (I-1) | (II-1) | (III-6) | 68 : 20 : 12 |
| 13 | (I-1) | (II-2) | (III-2) | 67 : 20 : 13 |
| 14 | (I-1) | (II-2) | (III-4) | 65 : 21 : 14 |
| 15 | (I-1) | (II-2) | (III-6) | 65 : 22 : 13 |
| 16 | (I-1) | (II-2) | (III-7) | 64 : 18 : 18 |
| 23 | (I-1) | 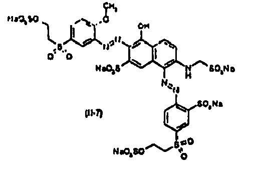 | (III-1) | 65 : 20 : 15 |
| 24 | (I-1) | 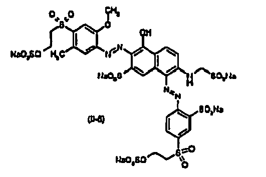 | 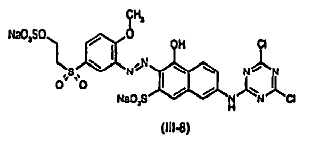 | 70 : 20 : 10 |
| 30 | (I-1) | 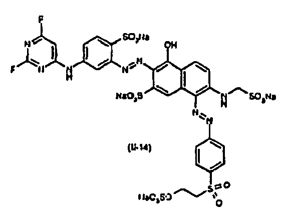 | 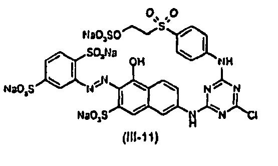 | 60 : 22 : 18 |
| 31 | (I-1) | 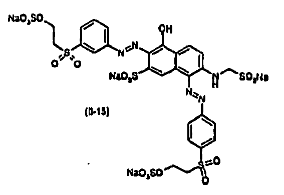 | (III-1) | 72 : 18 : 10 |
| 33 | (I-1) | 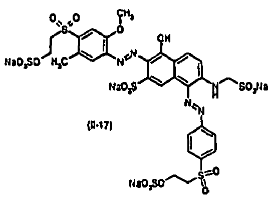 | (III-7) | 70 : 20 : 10 |
| 36 | (I-1) | 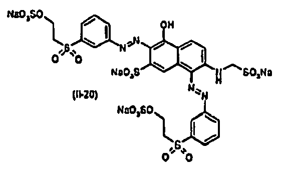 | (III-1) | 66 : 22 : 12 |
| 40 | (I-1) | 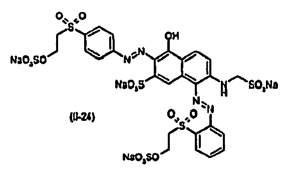 | (III-1) | 67 : 22 : 11 |
| 41 | (I-1) | 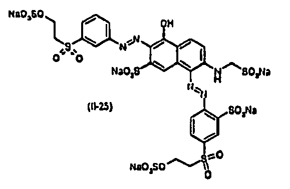 | 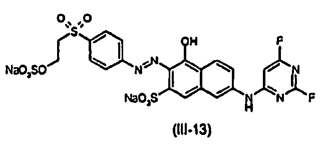 | 65 : 22 : 13 |
| 42 | (I-1) | 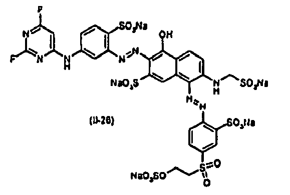 | (III-1) | 68 : 20 : 12 |
| 43 | (I-1) | 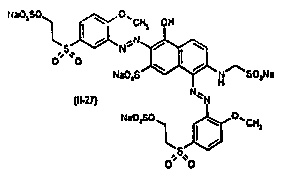 | (III-2) | 65 : 20 : 15 |
| 47 | (I-1) | 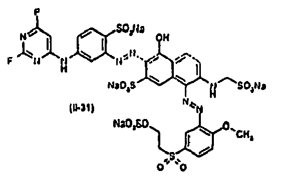 | (III-10) | 64 : 20 : 16 |
| 51 | (I-1) | 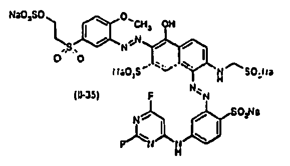 | (III-2) | 68 : 20 : 12 |
| 53 | (I-1) | 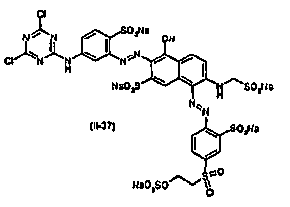 | (III-1) | 70 : 15 : 15 |
| 54 | (I-1) | 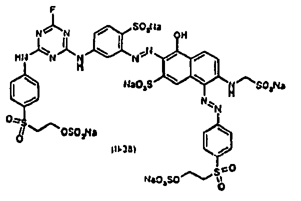 | (III-12) | 65 : 20 : 15 |
| 57 | (I-1) | 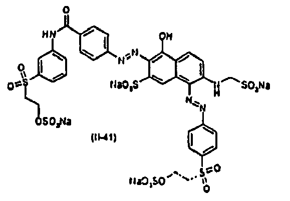 | (III-2) | 70 : 15 : 15 |
| 58 | (I-1) | 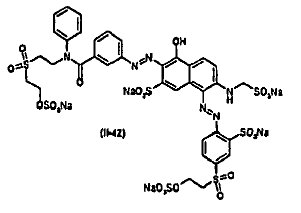 | (III-10) | 65 : 23 : 12 |
| 61 | (I-1) | 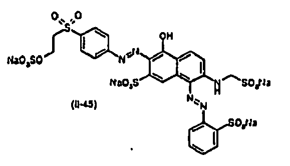 | (III-1) | 64 : 22 : 14 |
| 63 | (I-1) | 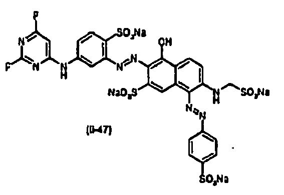 | (III-7) | 65 : 22 : 13 |
| 65 | (I-1) | 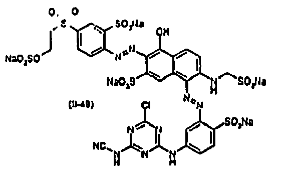 | (III-1) | 69 : 20 : 11 |
| 66 | (I-2) | (II-1) | (III-2) | 65 : 18 : 17 |
| 67 | (I-2) | (II-2) | (III-1) | 65 : 20 : 15 |
| 68 | (I-2) | (II-7) | (III-1) | 67 : 20 : 13 |
| 70 | (I-2) | (II-24) | (III-13) | 65 : 22 : 13 |
| 71 | (I-2) | (II-26) | (III-1) | 66 : 20 : 14 |
| 74 | (I-2) | (II-45) | (III-1) | 60 : 25 : 15 |
| 77 | (I-3) | (II-1) | (III-2) | 65 : 18 : 17 |
| 78 | (I-3) | (II-2) | (III-1) | 65 : 20 : 15 |
| 81 | (I-3) | (II-7) | (III-14) | 67 : 20 : 13 |
| 85 | (I-3) | (II-24) | (III-8) | 65 : 22 : 13 |
| 86 | (I-3) | (II-26) | (III-1) | 66 : 20 : 14 |
| 89 | (I-3) | (II-37) | (III-1) | 70 : 20 : 10 |
| 91 | (I-3) | (II-45) | (III-13) | 60 : 25 : 15 |
| 94 | (I-4) | (II-1) | (III-2) | 65 : 18 : 17 |
| 95 | (I-4) | (II-2) | (III-7) | 63 : 21 : 16 |
| 98 | (I-4) | (II-7) | (III-14) | 67 : 20 : 13 |
| 102 | (I-4) | (II-24) | (III-8) | 65 : 22 : 13 |
| 103 | (I-4) | (II-26) | (III-1) | 66 : 20 : 14 |
| 106 | (I-4) | (II-37) | (III-1) | 70 : 20 : 10 |
| 108 | (I-4) | (II-45) | (III-13) | 60 : 25 : 15 |
| 111 | (I-5) | (II-1) | (III-2) | 65 : 18 : 17 |
| 112 | (I-5) | (II-2) | (III-1) | 65 : 20 : 15 |
| 115 | (I-5) | (II-7) | (III-14) | 67 : 20 : 13 |
| 119 | (I-5) | (II-24) | (III-8) | 65 : 22 : 13 |
| 120 | (I-5) | (II-26) | (III-1) | 66 : 20 : 14 |
| 123 | (I-5) | (II-37) | (III-1) | 70 : 20 : 10 |
| 125 | (I-5) | (II-45) | (III-13) | 60 : 25 : 15 |
| 128 | (I-6) | (II-1) | (III-2) | 65 : 18 : 17 |
| 129 | (I-6) | (II-2) | (III-1) | 65 : 20 : 15 |
| 132 | (I-6) | (II-7) | (III-14) | 67 : 20 : 13 |
| 137 | (I-6) | (11-24) | (III-8) | 65 : 22 : 13 |
| 138 | (I-6) | (II-26) | (III-1) | 66 : 20 : 14 |
| 141 | (I-6) | (II-37) | (III-1) | 70 : 20 : 10 |
| 143 | (I-6) | (II-41) | (III-1) | 65 : 18 : 17 |
| 145 | (I-6) | (II-45) | (III-13) | 60 : 25 : 15 |
| 148 | (I-7) | (II-1) | (III-2) | 65 : 18 : 17 |
| 149 | (I-7) | (II-2) | (III-1) | 65 : 20 : 15 |
| 152 | (I-7) | (II-7) | (III-14) | 67 : 20 : 13 |
| 156 | (I-7) | (II-24) | (III-8) | 65 : 22 : 13 |
| 157 | (I-7) | (II-26) | (III-1) | 66 : 20 : 14 |
| 160 | (I-7) | (II-37) | (III-1) | 70 : 20 : 10 |
| 161 | (I-7) | (II-42) | (III-12) | 62 : 22 : 16 |
| 163 | (I-7) | (II-45) | (III-13) | 60 : 25 : 15 |
| 166 | 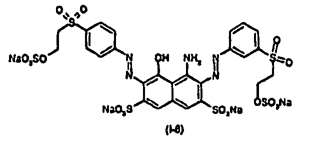 | (II-1) | (III-2) | 65 : 18 : 17 |
| 167 | (I-8) | (II-2) | (III-1) | 65 : 20 : 15 |
| 169 | (I-8) | (II-7) | (III-14) | 67 : 20 : 13 |
| 171 | (I-8) | (II-24) | (III-8) | 65 : 22 : 13 |
| 172 | (I-8) | (II-26) | (III-1) | 66 : 20 : 14 |
| 175 | (I-8) | (II-45) | (III-13) | 60 : 25 : 15 |
| 178 | 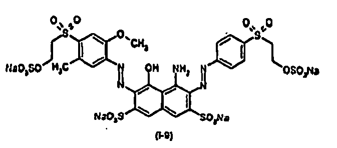 | (II-1) | (III-2) | 65 : 18 : 17 |
| 179 | (I-9) | (II-2) | (III-1) | 65 : 20 : 15 |
| 182 | (I-9) | (II-7) | (III-14) | 67 : 20 : 13 |
| 186 | (I-9) | (II-24) | (III-8) | 65 : 22 : 13 |
| 187 | (I-9) | (II-26) | (III-1) | 66 : 20 : 14 |
| 190 | (I-9) | (II-37) | (III-1) | 70 : 20 : 10 |
| 192 | (I-9) | (II-45) | (III-13) | 60 : 25 : 15 |
| 195 | 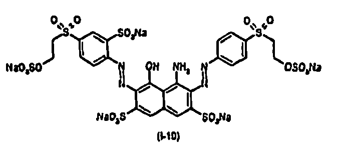 | (II-1) | (III-2) | 65 : 18 : 17 |
| 196 | (I-10) | (II-2) | (III-1) | 65 : 20 : 15 |
| 198 | (I-10) | (II-7) | (III-14) | 67 : 20 : 13 |
| 200 | (I-10) | (II-24) | (III-8) | 65 : 22 : 13 |
| 201 | (I-10) | (II-26) | (III-1) | 66 : 20 : 14 |
| 204 | (I-10) | (II-45) | (III-13) | 60 : 25 : 15 |
| 207 | 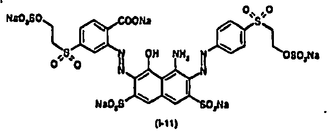 | (II-1) | (III-2) | 65 : 18 : 17 |
| 208 | (I-11) | (II-2) | (III-1) | 65 : 20 : 15 |
| 211 | (I-11) | (II-7) | (III-14) | 67 : 20 : 13 |
| 215 | (I-11) | (II-24) | (III-8) | 65 : 22 : 13 |
| 216 | (I-11) | (II-26) | (III-1) | 66 : 20 : 14 |
| 219 | (I-11) | (II-37) | (III-1) | 70 : 20 : 10 |
| 221 | (I-11) | (II-45) | (III-13) | 60 : 25 : 15 |
| 224 | 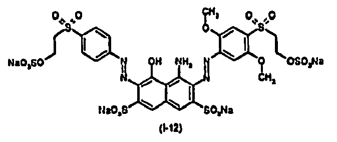 | (II-1) | (III-2) | 65 : 18 : 17 |
| 225 | (I-12) | (II-2) | (III-1) | 65 : 20 : 15 |
| 228 | (I-12) | (II-7) | (III-14) | 67 : 20 : 13 |
| 232 | (I-12) | (II-24) | (III-8) | 65 : 22 : 13 |
| 233 | (I-12) | (II-26) | (III-1) | 66 : 20 : 14 |
| 236 | (I-12) | (II-37) | (III-1) | 70 : 20 : 10 |
| 238 | (I-12) | (II-45) | (III-13) | 60 : 25 : 15 |
| 241 | 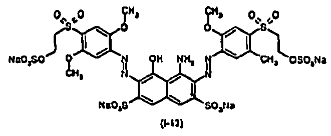 | (II-1) | (III-2) | 65 : 18 : 17 |
| 242 | (I-13) | (II-2) | (III-1) | 65 : 20 : 15 |
| 245 | (I-13) | (II-7) | (III-14) | 67 : 20 : 13 |
| 249 | (I-13) | (II-24) | (III-8) | 65 : 22 : 13 |
| 250 | (I-13) | (II-26) | (III-1) | 66 : 20 : 14 |
| 253 | (I-13) | (II-37) | (III-1) | 70 : 20 : 10 |
| 255 | (I-13) | (II-45) | (III-13) | 60 : 25 : 15 |
| 258 | 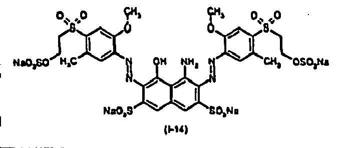 | (II-1) | (III-2) | 68 : 16 : 16 |
| 259 | (I-14) | (II-2) | (III-1) | 65 : 20 : 15 |
| 262 | (I-14) | (II-7) | (III-14) | 67 : 20 : 13 |
| 266 | (I-14) | (II-24) | (III-8) | 65 : 22 : 13 |
| 267 | (I-14) | (II-26) | (III-1) | 66 : 20 : 14 |
| 270 | (I-14) | (II-37) | (III-1) | 70 : 20 : 10 |
| 272 | (I-14) | (II-45) | (III-13) | 60 : 25 : 15 |
| 275 | | (II-1) | (III-2) | 65 : 18 : 17 |
| 276 | (I-15) | (II-2) | (III-1) | 65 : 20 : 15 |
| 279 | (I-15) | (II-7) | (III-14) | 67 : 20 : 13 |
| 284 | (I-15) | (II-24) | (III-8) | 65 : 22 : 13 |
| 285 | (I-15) | (II-26) | (III-1) | 66 : 20 : 14 |
| 288 | (I-15) | (II-37) | (III-1) | 70 : 20 : 10 |
| 290 | (I-15) | (II-41) | (III-5) | 65 : 18 : 17 |
| 292 | (I-15) | (II-45) | (III-13) | 60 : 25 : 15 |
| 295 | 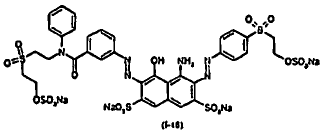 | (II-1) | (III-2) | 65 : 18 : 17 |
| 296 | (I-16) | (II-2) | (III-1) | 65 : 20 : 15 |
| 299 | (I-16) | (II-7) | (III-14) | 67 : 20 : 13 |
| 303 | (I-16) | (II-24) | (III-8) | 65 : 22 : 13 |
| 304 | (I-16) | (II-26) | (III-1) | 66 : 20 : 14 |
| 307 | (I-16) | (II-37) | (III-1) | 70 : 20 : 10 |
| 308 | (I-16) | (II-42) | (III-1) | 67 : 22 : 11 |
| 310 | (I-16) | (II-45) | (III-13) | 60 : 25 : 15 |
| 313 | 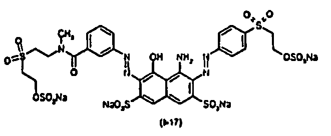 | (II-1) | (III-2) | 65 : 18 : 17 |
| 314 | (I-17) | (II-2) | (III-1) | 65 : 20 : 15 |
| 317 | (I-17) | (II-7) | (III-14) | 67 : 20 : 13 |
| 321 | (I-17) | (II-24) | (III-8) | 65 : 22 : 13 |
| 322 | (I-17) | (II-26) | (III-1) | 66 : 20 : 14 |
| 325 | (I-17) | (II-37) | (III-1) | 70 : 20 : 10 |
| 328 | (I-17) | (II-45) | (III-13) | 60 : 25 : 15 |
| 331 | 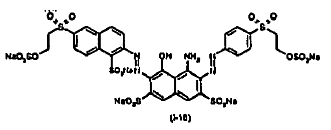 | (II-1) | (III-2) | 65 : 18 : 17 |
| 332 | (I-18) | (II-2) | (III-1) | 65 : 20 : 15 |
| 335 | (I-18) | (II-7) | (III-14) | 67 : 20 : 13 |
| 339 | (I-18) | (II-24) | (III-8) | 65 : 22 : 13 |
| 340 | (I-18) | (II-26) | (III-1) | 66 : 20 : 14 |
| 343 | (I-18) | (II-37) | (III-1) | 70 : 20 : 10 |
| 345 | (I-18) | (II-45) | (III-13) | 60 : 25 : 1 5 |
| 348 | 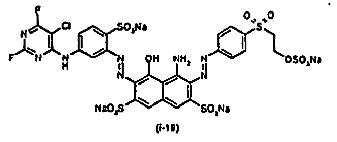 | (II-1) | (III-2) | 65 : 18 : 17 |
| 349 | (I-19) | (II-2) | (III-1) | 65 : 20 : 15 |
| 352 | (I-19) | (II-7) | (III-14) | 67 : 20 : 13 |
| 356 | (I-19) | (II-24) | (III-8) | 65 : 22 : 13 |
| 357 | (I-19) | (II-26) | (III-1) | 66 : 20 : 14 |
| 360 | (1-19) | (II-37) | (III-1) | 70 : 20 : 10 |
| 362 | (I-19) | (II-45) | (III-13) | 60 : 25 : 15 |
| 365 | 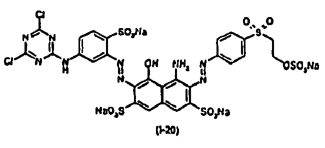 | (II-1) | (III-2) | 65 : 18 : 17 |
| 366 | (I-20) | (II-2) | (III-1) | 65 : 20 : 15 |
| 369 | (I-20) | (II-7) | (III-14) | 67 : 20 : 13 |
| 373 | (I-20) | (II-24) | (III-8) | 65 : 22 : 13 |
| 374 | (I-20) | (II-26) | (III-1) | 66 : 20 : 14 |
| 377 | (I-20) | (II-37) | (III-1) | 70 : 20 : 10 |
| 379 | (I-20) | (II-45) | (III-13) | 60 : 25 : 15 |
| 382 | 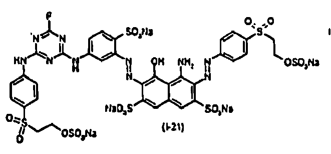 | (II-1) | (III-2) | 65 : 18 : 17 |
| 383 | (I-21) | (II-2) | (III-1) | 65 : 20 : 15 |
| 386 | (I-21) | (II-7) | (III-14) | 67 : 20 : 13 |
| 390 | (I-21) | (II-24) | (III-8) | 65 : 22 : 13 |
| 391 | (I-21) | (II-26) | (III-1) | 66 : 20 : 14 |
| 394 | (I-21) | (II-37) | (III-1) | 70 : 20 : 10 |
| 395 | (I-21) | (II-38) | (III-1) | 65 : 22 : 13 |
| 397 | (I-21) | (II-45) | (III-13) | 60 : 25 : 15 |
| 400 | 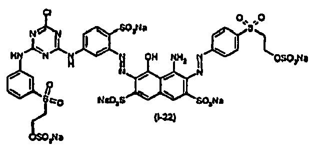 | (II-1) | (III-2) | 65 : 18 : 17 |
| 401 | (I-22) | (II-2) | (III-1) | 65 : 20 : 15 |
| 404 | (I-22) | (II-7) | (III-14) | 67 : 20 : 13 |
| 408 | (I-22) | (II-24) | (III-8) | 65 : 22 : 13 |
| 409 | (I-22) | (II-26) | (III-1) | 66 : 20 : 14 |
| 412 | (I-22) | (II-37) | (III-1) | 70 : 20 : 10 |
| 415 | (I-22) | (II-45) | (III-13) | 60 : 25 : 15 |

### Farbstoff-Mischungen gemäß Beispiel 3

| Beispiel | Farbstoff nach allg. Formel (I) | Farbstoff nach allg. Formel (II) | Farbstoff nach Formel (III) | Verhältnis (I):(II):(III) |
|---|---|---|---|---|
| 418 | (I-1) | (II-1) | (III-1) | 65 : 20 : 15 |
| 419 | (I-1) | (II-1) | (III-3) | 63 : 20 : 1 7 |
| 420 | (I-1) | (II-1) | (III-5) | 68 : 20 : 12 |
| 421 | (I-1) | (II-1) | (III-7) | 64 : 18 : 18 |
| 422 | (I-1) | (II-1) | (III-13) | 70 : 18 : 12 |
| 423 | (I-1) | (II-1) | (III-14) | 62 : 19 : 19 |

### Farbstoff-Mischungen gemäß Beispiel 4

| Beispiel | Farbstoff nach allg. Formel (I) | Farbstoff nach allg. Formel (II) | Farbstoff nach Formel (III) | Verhältnis (I):(II):(III) |
|---|---|---|---|---|
| 424 | (I-1) | (II-2) | (III-1) | 65 : 20 : 15 |
| 425 | (I-1) | (II-24) | (III-13) | 63 : 20 : 17 |
| 427 | (I-1) | (II-45) | (III-7) | 64 : 18 : 18 |
| 428 | (I-4) | (II-4) | 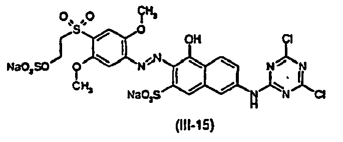 | 65 : 20 : 15 |
| 430 | (I-14) | (II-8) | 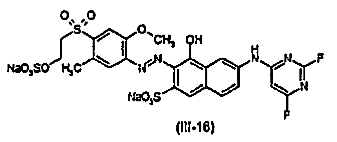 | 68 : 17 : 15 |
| 432 | (I-14) | (II-17) | (III-16) | 66 : 14 : 20 |

### Farbstoff-Mischungen gemäß Beispiel 5

| Beispiel | Farbstoff nach allg. Formel (I) | Farbstoff nach allg. Formel (II) | Farbstoff nach Formel (III) | Verhältnis (I):(II):(III) |
|---|---|---|---|---|
| 433 | (I-2) | (II-3) | (III-8) | 65 : 20 : 15 |
| 435 | (I-3) | (II-4) | (III-15) | 68 : 20 : 12 |
| 436 | (I-6) | (II-41) | 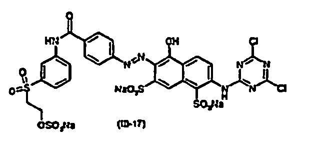 | 64 : 20 : 16 |
| 437 | (I-7) | (II-14) | 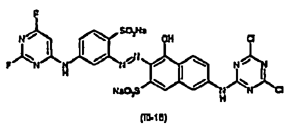 | 70 : 18 : 12 |
| 438 | (I-9) | (II-17) | (III-16) | 66 : 19 : 15 |
| 440 | (I-21) | (II-38) | 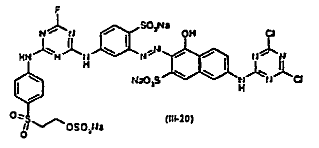 | 64 : 21 : 15 |

### Farbstoff-Mischungen gemäß Beispiel 6

| Beispiel | Farbstoff nach allg. Formel (I) | Farbstoff nach allg. Formel (II) | Farbstoff nach Formel (III) | Verhältnis (I):(II):(III) |
|---|---|---|---|---|
| 441 | (I-2) | (II-3) | (III-14) | 65 : 18 : 17 |
| 443 | (I-3) | (II-4) | (III-8) | 67 : 20 : 13 |
| 444 | (I-6) | (II-41) | (III-13) | 65 : 20 : 15 |
| 445 | (I-7) | (II-14) | (III-12) | 64 : 22 : 14 |
| 446 | (I-9) | (II-17) | (III-7) | 66 : 19 : 15 |
| 448 | (I-21) | (II-38) | (III-13) | 64 : 22 : 14 |

### Beispiel 449

73 Teile eines elektrolythaltigen Farbstoffpulvers, das den marineblauen Disazofarbstoff der Formel (I-1) in 70%-igem Anteil enthält, 15 Teile eines elektrolythaltigen Farbstoffpulvers, das den scharlachroten Disazofarbstoff der Formel (II-2) in 75%-igem Anteil enthält und 13 Teile eines elektrolythaltigen Farbstoffpulvers, das den orangefarbenen Azofarbstoff der Formel (III-21) 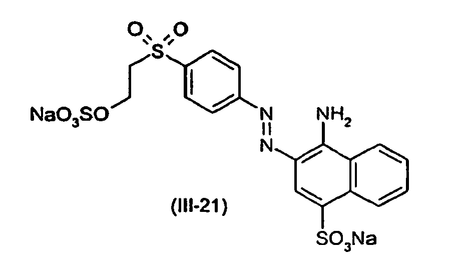 in 80%-igem Anteil enthält, werden in 700 Teilen Wasser gelöst und die erhaltene Farbstofflösung auf pH 5,5-6,5 eingestellt. Durch Eindampfen dieser Farbstofflösung erhält man eine Farbstoffmischung, die auf Baumwolle unter den für Reaktivfarbstoffe üblichen Färbebedingungen tiefschwarze Färbungen und Drucke liefert.

### Weitere Farbstoff-Mischungen gemäß Beispiel 449

| Beispiel | Farbstoff nach allg. Formel (I) | Farbstoff nach allg. Formel (II) | Farbstoff nach allg. Formel (III) | Verhältnis |
|---|---|---|---|---|
| 450 | (I-1) | (II-1) | 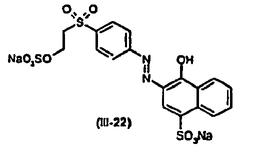 | 70 : 15 : 15 |
| 451 | (I-1) | (II-2) | 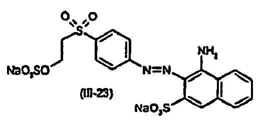 | 72 : 16 : 12 |
| 453 | (I-1) | (II-7) | 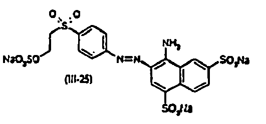 | 68 : 20 : 12 |
| 454 | (I-1) | (II-24) | 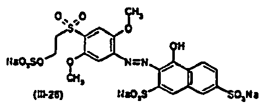 | 72 : 19 : 9 |
| 455 | (I-1) | (II-26) | 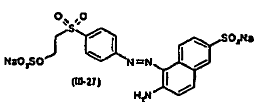 | 71 : 16 : 13 |
| 457 | (I-1) | (II-37) | 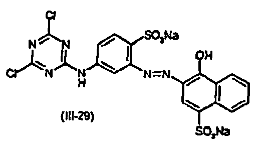 | 70 : 15 : 15 |
| 459 | (I-1) | (II-45) | 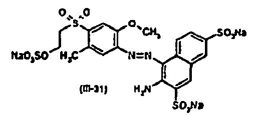 | 70 : 20 : 10 |
| 463 | (I-2) | (II-2) | 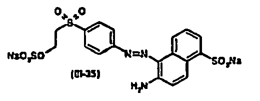 | 70 : 18 : 12 |
| 464 | (I-2) | (II-7) | 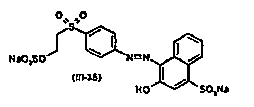 | 71 : 15 : 14 |
| 465 | (I-7) | (II-2) | 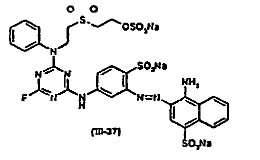 | 70 : 17 : 13 |
| 466 | (I-19) | (II-7) | 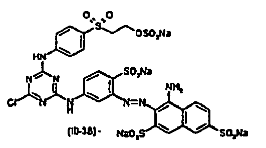 | 68 : 18 : 14 |
| 467 | (I-21) | (II-2) | 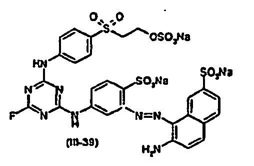 | 68 : 20 :12 |

### Beispiel 468

70 Teile eines elektrolythaltigen Farbstoffpulvers, das den marineblauen Disazofarbstoff der Formel (I-1) 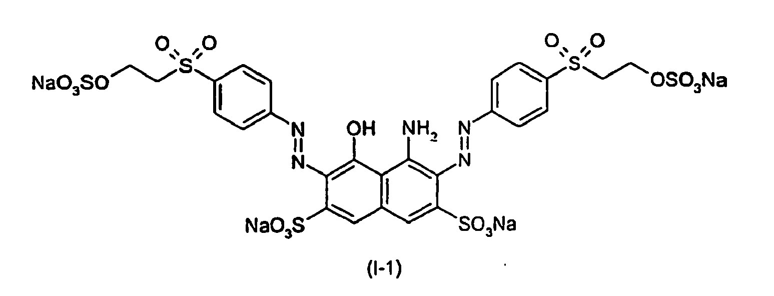 in 70%-igem Anteil enthält, 20 Teile eines elektrolythaltigen Farbstoffpulvers, das den scharlachroten Disazofarbstoff der Formel (II-1) 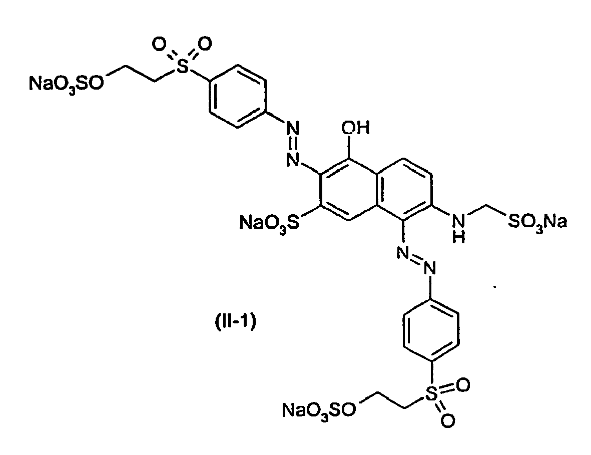 in 75%-igem Anteil enthält und 10 Teile eines elektrolythaltigen Farbstoffpulvers, das den gelben Disazofarbstoff der Formel (Ga-1) 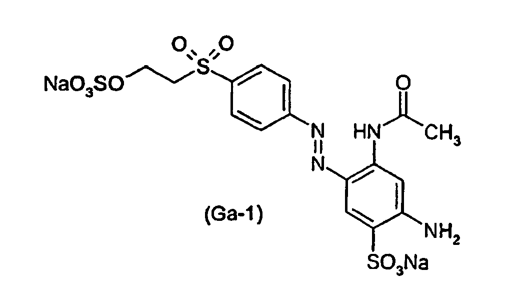 in 70%-igem Anteil enthält, werden mechanisch miteinander gemischt.

Die resultierende, erfindungsgemäße Farbstoffmischung liefert unter den für Reaktivfarbstoffe üblichen Färbebedingungen, beispielsweise auf Baumwolle, tiefschwarze Färbungen und Drucke.

### Beispiel 469

65 Teile eines elektrolythaltigen Farbstoffpulvers, das den marineblauen Disazofarbstoff der Formel (I-1) in 70%-igem Anteil enthält, 15 Teile eines elektrolythaltigen Farbstoffpulvers, das den scharlachroten Disazofarbstoff der Formel (II-2) 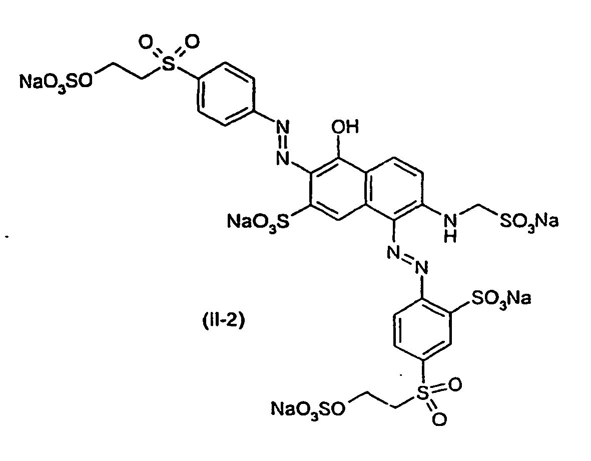 in 75%-igem Anteil enthält und 20 Teile eines elektrolythaltigen Farbstoffpulvers, das den gelben Disazofarbstoff der Formel (Gf-1) 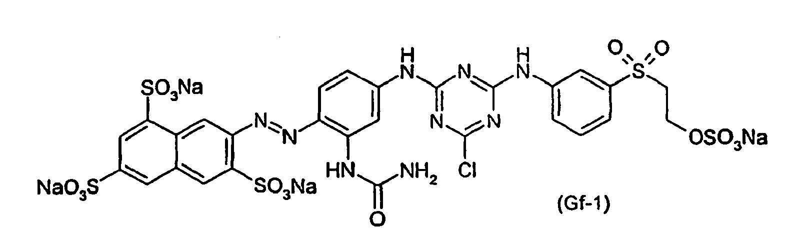 in 60%-igem Anteil enthält, werden in 750 Teilen Wasser gelöst und die erhaltene Farbstofflösung auf pH 5,5-6,5 eingestellt. Durch Eindampfen dieser Farbstofflösung erhält man eine Farbstoffmischung, die auf Baumwolle unter den für Reaktivfarbstoffe üblichen Färbebedingungen tiefschwarze Färbungen und Drucke liefert.

### Beispiel 470

812 Teile 4-(β-Sulfatoethylsulfonyl)-anilin werden in 1900 Teilen Eiswasser und 520 Teilen 30%-iger Salzsäure suspendiert und durch Zutropfen von 500 Teilen 40%-iger Natriumnitritlösung diazotiert. Hierzu gibt man 319 Teile 1-Amino-8-hydroxynaphthalin-3,6-disulfonsäure, 93 Teile 4-Hydroxy-7-(sulfomethyl-amino)-naphthalin-2-sulfonsäure, die durch Umsetzung von 67 Teilen 7-Amino-4-hydroxy-naphthalin-2-sulfonsäure mit 42 Teilen Formaldehydnatriumbisulfit in wässrigem Medium bei pH 5,5 - 6 und 50°C hergestellt wurde, und 31 Teile 2,4-Diaminobenzolsulfonsäure und kuppelt zunächst in erster Stufe bei pH 1 bis 1,3 unterhalb 20°C zu einer Mischung von drei Monoazofarbstoffen gemäß den Formeln (15-1), (17-1) und (Ga-3). Der angegebene pH-Bereich wird dabei durch Zusatz von festem Natriumhydrogencarbonat eingestellt und während der Kupplungsreaktion gehalten. 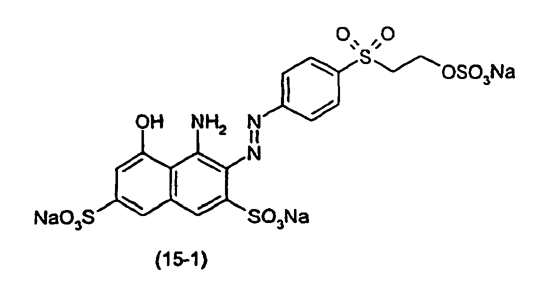 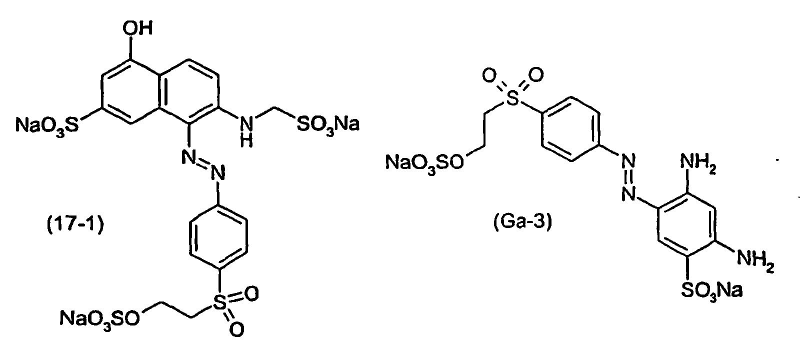 Nach beendeter erster Kupplung wird unterhalb 25°C mit Natriumcarbonat pH 5 - 6 eingestellt und die nach beendeter zweiter Kupplungsreaktion entstandene 70 : 20 : 10 - Mischung der drei Disazofarbstoffe (I-1), (II-1) und (Gb-3) durch Sprühtrocknung isoliert.
Alternativ kann die erhaltene Farbstofflösung auch durch Zusatz eines PhosphatPuffers bei pH 5,5 - 6 gepuffert und durch weitere Verdünnung bzw. Konzentration als Flüssigmarke bestimmter Stärke eingestellt werden.
Die erhaltene, erfindungsgemäße Farbstoffmischung färbt Baumwolle in schwarzen Tönen.

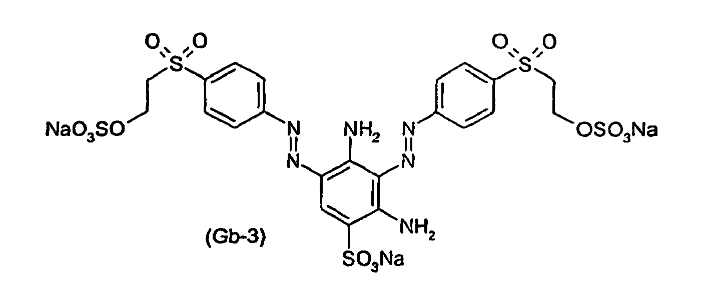

### Beispiel 471

677 Teile 4-(β-Sulfatoethylsulfonyl)-anilin werden in 1570 Teilen Eiswasser und 434 Teilen 30%-iger Salzsäure suspendiert und durch Zutropfen von 417 Teilen 40%-iger Natriumnitritlösung diazotiert. Hierzu gibt man 319 Teile 1-Amino-8-hydroxynaphthalin-3,6-disulfonsäure und kuppelt in erster Stufe bei pH 1 bis 1,3 unterhalb 20°C zu einem roten Monoazofarbstoff der Formel (15-1). Der angegebene pH-Bereich wird dabei durch Zusatz von festem Natriumhydrogencarbonat eingestellt und während der Kupplungsreaktion gehalten.
Nach beendeter erster Kupplung setzt man dem Reaktionsgemisch eine wässrige Lösung von 206 Teilen des scharlachroten Monoazofarbstoffs der Formel (17-2) und 94 Teilen des gelben Monoazofarbstoffs der Formel (Ga-4), 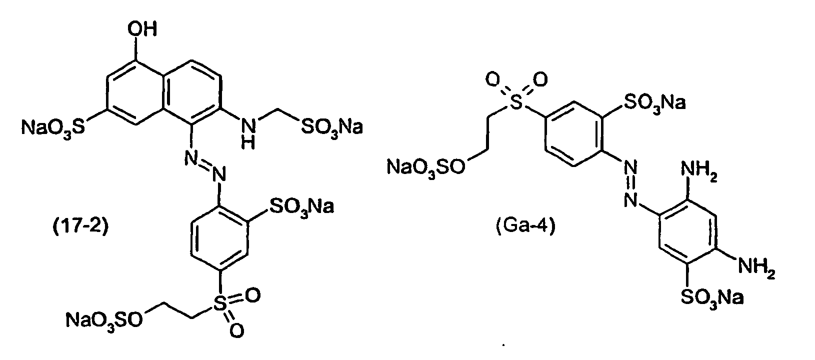 die durch Diazotierung von 148 Teilen 2-Amino-(β-sulfatoethylsulfonyl)-benzolsulfonsäure mit 71 Teilen 40%-iger Natriumnitritlösung in saurem Medium und anschließender Kupplung auf eine Mischung aus 86,5 Teilen 4-Hydroxy-7-(sulfomethyl-amino-)-naphthalin-2-sulfonsäure und 28 Teilen 2,4-Diaminobenzolsulfonsäure bei pH 1 - 2 erhalten wurde, hinzu.
Anschließend wird unterhalb 25°C mit Natriumcarbonat pH 5 - 6 eingestellt und die nach beendeter Kupplungsreaktion entstandene 70 : 20 : 10 - Mischung der drei Disazofarbstoffe (I-1), (II-2) und (Gb-2) durch Eindampfen im Vakuum bzw. durch Sprühtrocknung isoliert.
Die erhaltene, erfindungsgemäße Farbstoffmischung färbt Baumwolle in schwarzen Tönen.

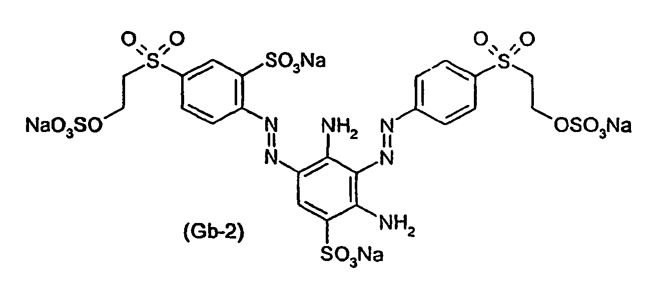

### Beispiel 472

a) 406 Teile 4-(β-Sulfatoethylsulfonyl)-anilin werden in 950 Teilen Eiswasser und 260 Teilen 30%-iger Salzsäure suspendiert und durch Zutropfen von 250 Teilen 40%-iger Natriumnitritlösung diazotiert. Hierzu gibt man 319 Teile 1-Amino-8-hydroxynaphthalin-3,6-disulfonsäure, 93 Teile 4-Hydroxy-7-(sulfomethyl-amino)-5-naphthalin-2-sulfonsäure und 31 Teile 2,4-Diaminobenzolsulfonsäure und kuppelt in erster Stufe bei pH 1 bis 1,3 unterhalb 20°C zu einer Mischung der drei Monoazofarbstoffe gemäß den Formeln (15-1), (17-1) und (Ga-3). Der angegebene pH-Bereich wird dabei durch Zusatz von festem Natriumhydrogencarbonat eingestellt und während der Kupplungsreaktion gehalten.
b) In einem zweiten, separaten Reaktionsgefäß werden 451 Teile 2-Methoxy-5-(β-sulfatoethylsulfonyl)-anilin in 1300 Teilen Eiswasser und 261 Teilen 30%-iger Salzsäure suspendiert und durch Zutropfen von 251 Teilen 40%-iger Natriumnitritlösung diazotiert. Anschließend wird der Nitritüberschuß mit Amidosulfonsäurelösung entfernt und die erhaltene Diazo-Suspension nach beendeter erster Kupplung zur Lösung der Monoazofarbstoffe aus a) gepumpt.
Dann wird unterhalb 25°C mit Natriumcarbonat pH 5 - 6 eingestellt und die nach beendeter zweiter Kupplungsreaktion entstandene 70 : 20 : 10 - Mischung der drei Disazofarbstoffe (I-2), (II-3) und (Gb-1) durch Eindampfen im Vakuum bzw. durch Sprühtrocknung isoliert. 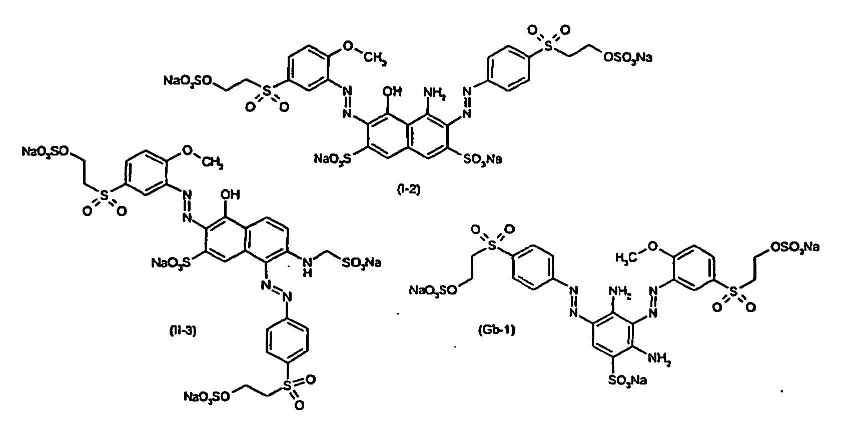 Die erhaltene, erfindungsgemäße Farbstoffmischung färbt Baumwolle in schwarzen Tönen.

### Beispiel 473

a) 351 Teile 4-(β-Sulfatoethylsulfonyl)-anilin werden in 825 Teilen Eiswasser und 225 Teilen 30%-iger Salzsäure suspendiert und durch Zutropfen von 216 Teilen 40%-iger Natriumnitritlösung diazotiert. Hierzu gibt man 319 Teile 1-Amino-8-hydroxynaphthalin-3,6-disulfonsäure und 83 Teile 4-Hydroxy-7-(sulfomethyl-amino)-naphthalin-2-sulfonsäure und kuppelt in erster Stufe bei pH 1 bis 1,3 unterhalb 20°C zu einer Mischung der beiden Monoazofarbstoffe gemäß den Formeln (15-1) und (17-1). Der angegebene pH-Bereich wird dabei durch Zusatz von festem Natriumhydrogencarbonat eingestellt und während der Kupplungsreaktion gehalten.
b) In einem zweiten, separaten Reaktionsgefäß werden 427 Teile 2,5-Dimethoxy-4-(β-sulfatoethylsulfonyl)-anilin in 1150 Teilen Eiswasser und 226 Teilen 30%-iger Salzsäure suspendiert und durch Zutropfen von 217 Teilen 40%-iger Natriumnitritlösung diazotiert. Anschließend wird der Nitritüberschuß mit Amidosulfonsäurelösung entfernt und die erhaltene Diazo-Suspension nach beendeter erster Kupplung zur Lösung der beiden Monoazofarbstoffe aus a) gepumpt.
Dann wird unterhalb 25°C mit Natriumcarbonat pH 5 - 6 eingestellt und die nach beendeter zweiter Kupplungsreaktion erhaltene Farbstofflösung mit 250 Teilen eines gelben Farbstoffs der Formel (Gf-2) versetzt. Die so entstandene 67 : 17 : 16 - Mischung der drei Disazofarbstoffe (I-3), (II-4) und (Gf-2) kann durch Eindampfen im Vakuum bzw. durch Sprühtrocknung isoliert werden. 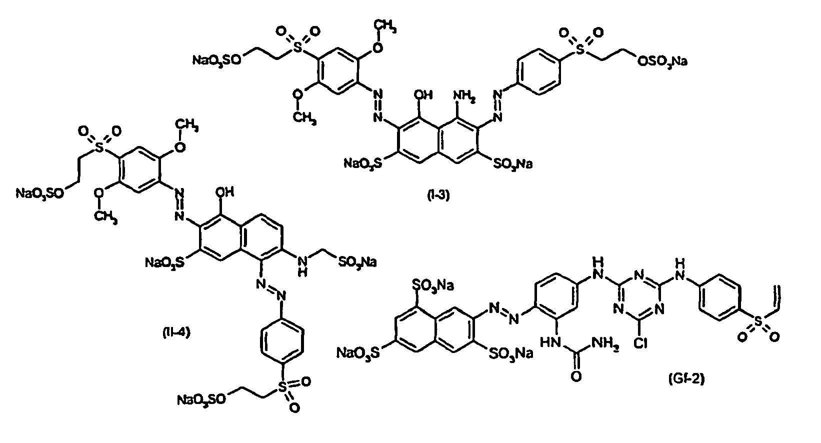 Die so erhaltene, erfindungsgemäße Farbstoffmischung färbt Baumwolle in schwarzen Tönen.

### Beispiel 474

70 Teile eines elektrolythaltigen Farbstoffpulvers, das den grünstichig marineblauen Disazofarbstoff der Formel (I-4) 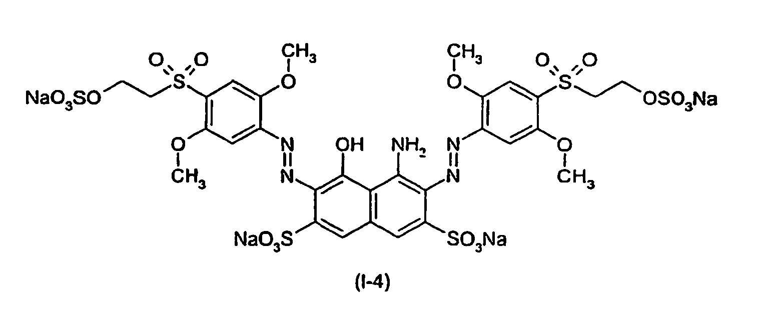 in 70%-igem Anteil enthält und 30 Teile eines elektrolythaltigen Farbstoffpulvers, das den scharlachroten Disazofarbstoff der Formel (II-7) 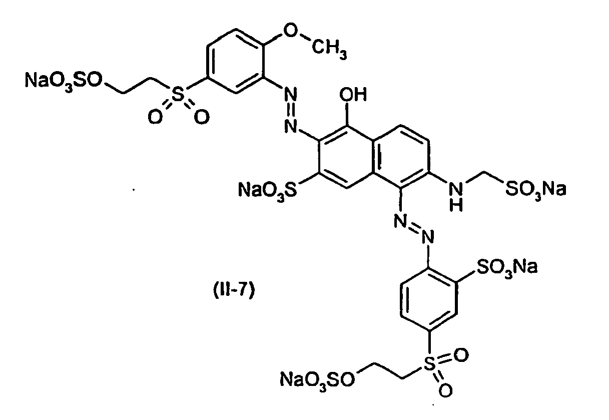 in ebenfalls 70%-igem Anteil enthält werden in 600 Teilen Wasser gelöst und die erhaltene Farbstofflösung auf pH 5,5-6,5 eingestellt. Durch Eindampfen dieser Farbstofflösung erhält man eine binäre Farbstoffmischung, die auf Baumwolle unter den für Reaktivfarbstoffe üblichen Färbebedingungen tiefschwarze Färbungen und Drucke liefert.

### Beispiel 475

a) 341 Teile 2,5-Dimethoxy-4-(β-sulfatoethylsulfonyl)-anilin werden in 950 Teilen Eiswasser und 180 Teilen 30%-iger Salzsäure suspendiert und durch Zutropfen von 173 Teilen 40%-iger Natriumnitritlösung diazotiert. Hierzu gibt man 319 Teile 1-Amino-8-hydroxy-naphthalin-3,6-disulfonsäure und kuppelt in erster Stufe bei pH 1 bis 1,5 unterhalb 20°C zu einem roten Monoazofarbstoff der Formel (15-2). Der angegebene pH-Bereich wird dabei durch Zusatz von festem Natriumhydrogencarbonat eingestellt und während der Kupplungsreaktion gehalten. 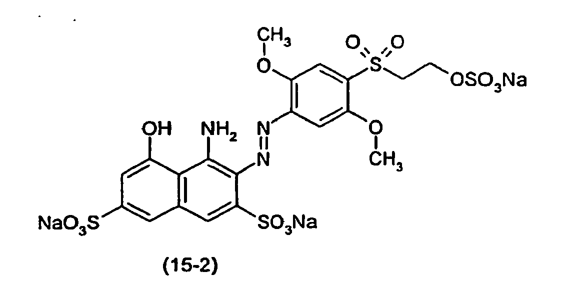 Nach beendeter erster Kupplung setzt man dem Reaktionsgemisch eine wässrige Lösung von 254 Teilen des scharlachroten Monoazofarbstoffs der Formel (17-2), die durch Diazotierung von 116 Teilen 2-Amino-5-(β-sulfatoethylsulfonyl)-benzolsulfonsäure mit 55,5 Teilen 40%-iger Natriumnitritlösung in saurem Medium und anschließender Kupplung auf 107 Teile 4-Hydroxy-7-(sulfomethyl-amino)-naphthalin-2-sulfonsäure bei pH 1 - 2 erhalten wurde, hinzu.
b) In einem zweiten, separaten Reaktionsgefäß werden 430 Teile 2-Methoxy-5-methyl-4-(β-sulfatoethylsulfonyl)-anilin in 1250 Teilen Eiswasser und 238 Teilen 30%-iger Salzsäure suspendiert und durch Zutropfen von 229 Teilen 40%-iger Natriumnitritlösung diazotiert. Anschließend wird der Nitritüberschuß mit Amidosulfonsäurelösung entfernt und die erhaltene Diazo-Suspension zur Lösung der Monoazofarbstoff-Mischung aus a) gepumpt.
   Dann wird unterhalb 25°C mit Natriumcarbonat pH 5 - 6 eingestellt und die nach beendeter zweiter Kupplungsreaktion entstandene 75 : 25 - Mischung der beiden Disazofarbstoffe (I-5) und (II-8) durch Eindampfen im Vakuum bzw. durch Sprühtrocknung isoliert. 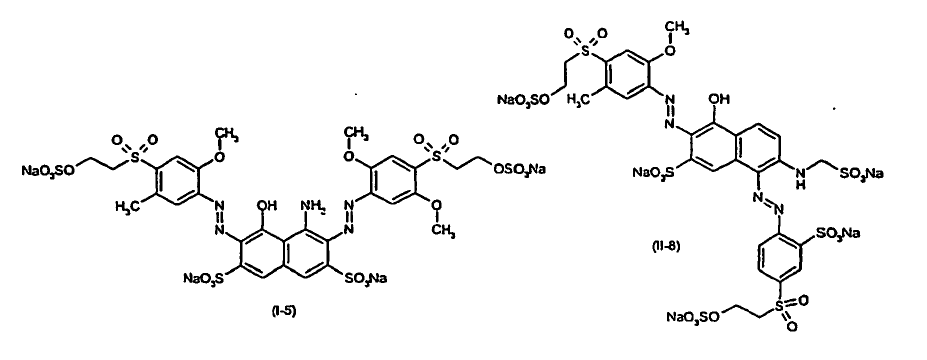 Die erhaltene, erfindungsgemäße binäre Farbstoffmischung färbt Baumwolle in schwarzen Tönen.

### Beispiel 476

Eine analog zur in Beispiel 475 beschriebenen Verfahrensweise hergestellte binäre Mischung von 1021 Teilen des marineblauen Disazofarbstoffs der Formel (I-2) und 335 Teilen des scharlachroten Disazofarbstoffs der Formel (II-7) wird mit 168 Teilen des gelben Disazofarbstoffs der Formel (Ge-1) 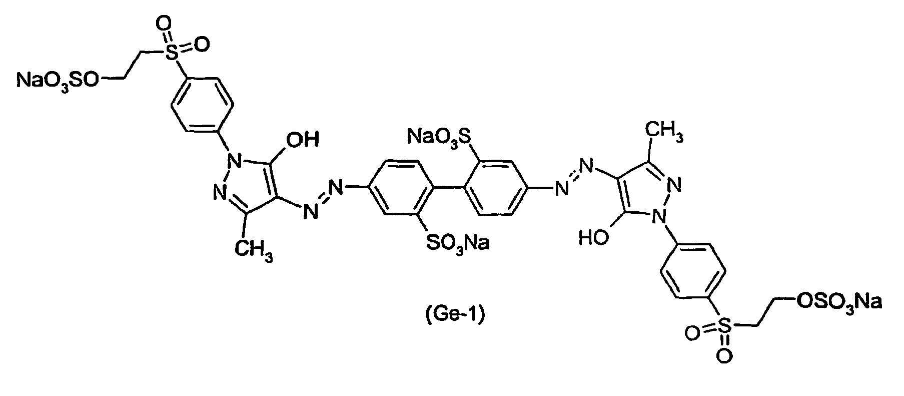 versetzt, auf einen pH-Wert von 5,5 - 6,5 eingestellt und durch Eindampfen der wässrigen Lösung isoliert. Die resultierende, erfindungsgemäße Farbstoffmischung färbt Baumwolle in schwarzen Tönen.

### Beispiel 477

70 Teile eines elektrolythaltigen Farbstoffpulvers, das den marineblauen Disazofarbstoff der Formel (I-6) 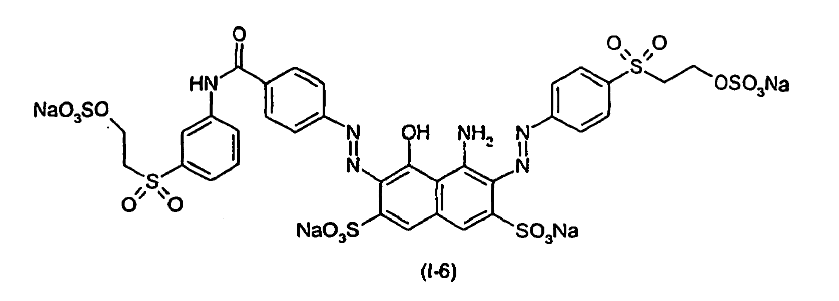 in 70%-igem Anteil enthält, 18 Teile eines elektrolythaltigen Farbstoffpulvers, das den scharlachroten Disazofarbstoff der Formel (II-1) in 75%-igem Anteil enthält und 12 Teile eines elektrolythaltigen Farbstoffpulvers, das den gelben Disazofarbstoff der Formel (Gf-3) 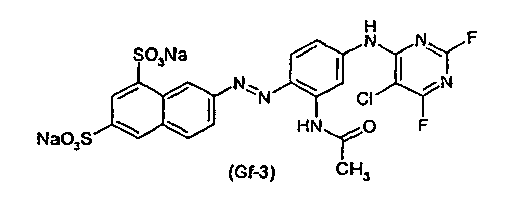 in 70%-igem Anteil enthält, werden wie in Beispiel 468 beschrieben miteinander gemischt.

Die resultierende, erfindungsgemäße Farbstoffmischung liefert unter den für Reaktivfarbstoffe üblichen Färbebedingungen sowie mit gegenüber dem Standardverfahren reduzierter Salzmenge, beispielsweise auf Baumwolle, tiefschwarze Färbungen.

### Beispiel 478

Eine analog zur in Beispiel 473 beschriebenen Verfahrensweise hergestellte binäre Mischung von 1012 Teilen des marineblauen Disazofarbstoffs der Formel (I-7) und 290 Teilen des scharlachroten Disazofarbstoffs der Formel (II-14) wird mit 145 Teilen des gelben Disazofarbstoffs der Formel (Ga-2) versetzt, auf einen pH-Wert von 5,5 - 6,5 eingestellt und durch Eindampfen der wässrigen Lösung isoliert. Die resultierende, erfindungsgemäße Farbstoffmischung färbt Baumwolle in schwarzen Tönen.

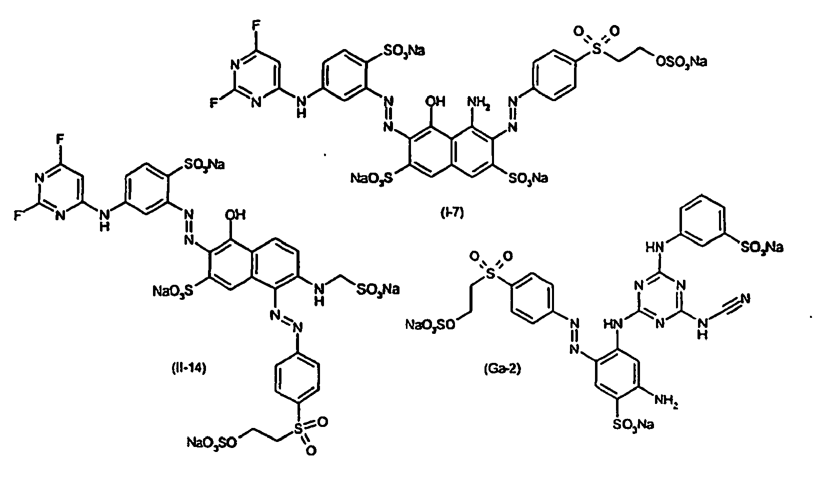

### Beispiel 479

a) Eine Mischung aus 70,5 Teilen 7-Amino-4-hydroxy-naphthalin-2-sulfonsäure und 37,5 Teilen 2,4-Diaminobenzolsulfonsäure werden in 800 Teilen Wasser suspendiert und durch Zugabe von Natronlauge gelöst. Bei einem pH-Wert von 5,5 - 6 werden 79 Teile Formaldehydnatriumbisulfit zugegeben und 4 h bei 50 - 55°C gerührt, wobei der angegebene pH-Bereich mittels verdünnter Natronlauge gehalten wird.
b) In einem separaten Reaktionsgefäß werden 843 Teile 4-(β-Sulfatoethylsulfonyl)-anilin in 2000 Teilen Eiswasser und 540 Teilen 30%-iger Salzsäure suspendiert und durch Zutropfen von 520 Teilen 40%-iger Natriumnitritlösung diazotiert. Nach Entfernung des Nitritüberschusses mit Amidosulfonsäurelösung gibt man hierzu 319 Teile 1-Amino-8-hydroxy-naphthalin-3,6-disulfonsäure sowie die Mischung der weiteren Kupplungskomponenten aus a) und kuppelt zunächst in erster Stufe bei pH 0,8 bis 1,3 unterhalb 20°C zu einer Mischung von drei Monoazofarbstoffen gemäß den Formeln (15-1), (17-1) und (Ga-6). Der angegebene pH-Bereich wird dabei durch Zusatz von festem Natriumhydrogencarbonat eingestellt und während der Kupplungsreaktion gehalten. 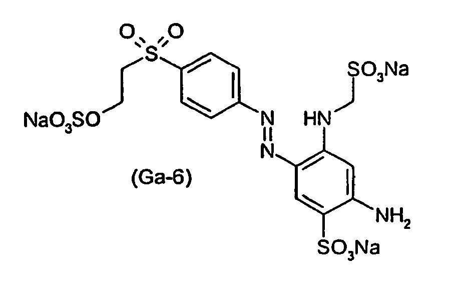
Nach vollständiger erster Kupplung wird unterhalb 25°C mit Natriumcarbonat pH 5 - 6 eingestellt und die nach beendeter zweiter Kupplungsreaktion entstandene 67 : 20 : 13 - Mischung der drei Disazofarbstoffe (I-1), (II-1) und (Gb-5) durch Sprühtrocknung oder Eindampfen im Vakuum isoliert.
Alternativ kann die erhaltene Farbstofflösung auch durch Zusatz eines PhosphatPuffers bei pH 5,5 - 6 gepuffert und durch weitere Verdünnung bzw. Konzentration als Flüssigmarke bestimmter Stärke eingestellt werden. 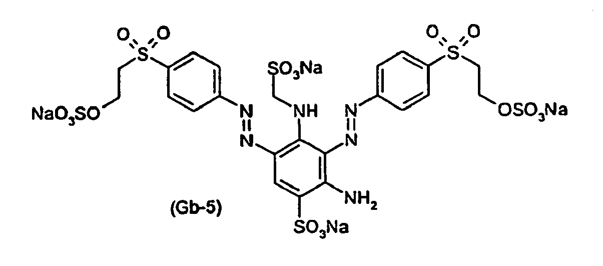 Die erhaltene, erfindungsgemäße Farbstoffmischung färbt Baumwolle in schwarzen Tönen.

### Beispiel 480

843 Teile 4-(β-Sulfatoethylsulfonyl)-anilin werden in 2000 Teilen Eiswasser und 540 Teilen 30%-iger Salzsäure suspendiert und durch Zutropfen von 520 Teilen 40%-iger Natriumnitritlösung diazotiert. Nach Entfernung des Nitritüberschusses mit Amidosulfonsäurelösung gibt man hierzu 319 Teile 1-Amino-8-hydroxy-naphthalin-3,6-disulfonsäure sowie ein Gemisch weiterer Kupplungskomponenten, das analog Beispiel 479 a) durch Umsetzung von 72 Teilen 7-Amino-4-hydroxy-naphthalin-2-sulfonsäure und 75 Teilen 2,4-Diaminobenzolsulfonsäure mit 112 Teilen Formaldehydnatriumbisulfit bei pH 5,7 und 50°C erhalten wurde, und kuppelt zunächst in erster Stufe bei pH 0,8 bis 1,3 unterhalb 20°C zu einer Mischung von drei Monoazofarbstoffen gemäß den Formeln (15-1), (17-1) und (Ga-6). Der angegebene pH-Bereich wird dabei durch Zusatz von festem Natriumhydrogencarbonat eingestellt und während der Kupplungsreaktion gehalten.
Nach vollständiger erster Kupplung wird unterhalb 25°C mit Natriumcarbonat pH 5-6 eingestellt und die nach beendeter zweiter Kupplungsreaktion entstandene 64 : 20 : 16 - Mischung der drei Azofarbstoffe (I-1), (II-1) und (Ga-6) durch Sprühtrocknung oder Eindampfen im Vakuum isoliert.
Die erhaltene, erfindungsgemäße Farbstoffmischung färbt Baumwolle in schwarzen Tönen.

### Beispiel 481

574 Teile 4-(β-Sulfatoethylsulfonyl)-anilin werden in 1350 Teilen Eiswasser und 368 Teilen 30%-iger Salzsäure suspendiert und durch Zutropfen von 354 Teilen 40%-iger Natriumnitritlösung diazotiert. Nach Entfernung des Nitritüberschusses mit Amidosulfonsäurelösung gibt man hierzu eine wässrige Lösung zweier Kupplungskomponenten, die analog Beispiel 479 a) durch Umsetzung von 74 Teilen 7-Amino-4-hydroxy-naphthalin-2-sulfonsäure und 39,5 Teilen 2,4-Diaminobenzolsulfonsäure mit 83 Teilen Formaldehydnatriumbisulfit bei pH 5,5-6 und 50°C erhalten wurde, und kuppelt zunächst in erster Stufe bei pH 1,0 bis 1,3 unterhalb 20°C zu einer Mischung von zwei Monoazofarbstoffen gemäß den Formeln (17-1) und (Ga-6). Der angegebene pH-Bereich wird dabei durch Zusatz von festem Natriumhydrogencarbonat eingestellt und während der Kupplungsreaktion gehalten. Nach vollständiger erster Kupplung versetzt man das Reaktionsgemisch mit 737 Teilen des roten Monoazofarbstoffs der Formel (15-2) in Form einer wässrigen Lösung, die wie in Beispiel 475 a) beschrieben, erhältlich ist. Anschließend wird unterhalb 25°C mit Natriumcarbonat pH 5-6 eingestellt und die nach beendeter zweiter Kupplungsreaktion entstandene 67 : 20 : 13 - Mischung der drei Disazofarbstoffe (I-12), (II-1) und (Gb-5) durch Sprühtrocknung oder Eindampfen im Vakuum isoliert. 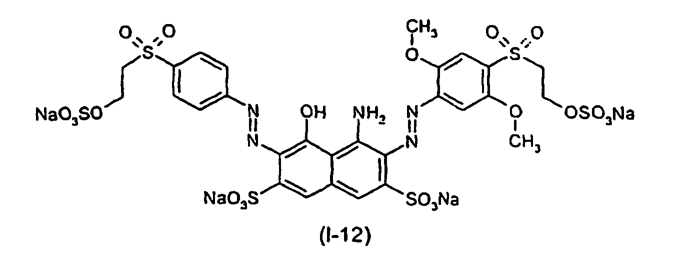 Die erhaltene, erfindungsgemäße Farbstoffmischung färbt Baumwolle in schwarzen Tönen.

### Beispiele 482 bis 819

Die nachfolgenden Tabellenbeispiele beschreiben weitere erfindungsgemäße Mischungen der Farbstoffe der allgemeinen Formeln (I) und (II) bzw. (I) und (II) und (G), die jeweils in Form der Natriumsalze angeführt sind. Die Mischungsverhältnisse sind in Gewichtsprozent angegeben. Die Farbstoffmischungen liefern nach den für Reaktivfarbstoffen üblichen Färbemethoden, beispielsweise auf Baumwolle, graue bis tiefschwarze Färbungen.

### Farbstoff-Mischungen gemäß Beispiel 468 oder 469

| Beispiel | Farbstoff nach allg. Formel (I) | Farbstoff nach allg. Formel (II) | Farbstoff nach Formel (G) | Verhältnis (I):(II):(G) |
|---|---|---|---|---|
| 482 | (I-1) | (II-1) | (Ga-2) | 63 : 19 : 18 |
| 483 | (I-1) | (II-1) | (Ga-3) | 68 : 20 : 12 |
| 484 | (I-1) | (II-1) | (Gb-2) | 67 : 20 : 13 |
| 485 | (I-1) | (II-1) | 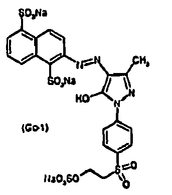 | 65 : 18 : 17 |
| 486 | (I-1) | (II-1) | 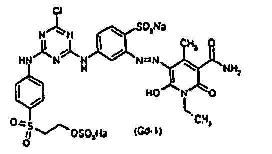 | 65 : 20 : 15 |
| 487 | (I-1) | (II-1) | (Ge-1) | 70 : 20 : 10 |
| 488 | (I-1) | (II-1) | (Gf-1) | 63 : 18 : 19 |
| 489 | (I-1) | (II-1) | 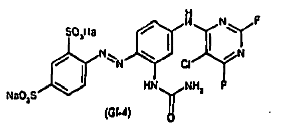 | 70 : 18 : 12 |
| 490 | (I-1) | (II-2) | (Ga-1) | 67 : 20 : 13 |
| 491 | (I-1) | (II-2) | (Ga-2) | 65 : 20 : 15 |
| 492 | (I-1) | (II-2) | (Ga-6) | 64 : 20 : 16 |
| 493 | (I-1) | (II-2) | (Gb-3) | 67 : 20 : 13 |
| 494 | (I-1) | (II-2) | (Gb-5) | 68 : 20 : 12 |
| 495 | (I-1) | (II-2) | (Ge-1) | 68 : 22 : 10 |
| 496 | (I-1) | (II-2) | (Gf-2) | 64 : 18 : 18 |
| 497 | (I-1) | (II-3) | (Ga-1) | 70 : 18 : 12 |
| 498 | (I-1) | (II-3) | (Ga-2) | 65 : 1 5 : 20 |
| 499 | (I-1) | (II-3) | (Gb-2) | 67 : 20 : 13 |
| 500 | (I-1) | (II-3) | (Gb-5) | 68 : 18 : 14 |
| 501 | (I-1) | (II-3) | (Ge-1) | 72 : 18 : 10 |
| 502 | (I-1) | (II-3) | (Gf-1) | 65 : 15 : 20 |
| 503 | (I-1) | (II-4) | 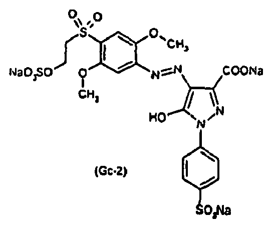 | 67 : 18 : 15 |
| 504 | (I-1) | (II-7) | (Ga-1) | 68 : 20 : 12 |
| 505 | (I-1) | (II-7) | (Ga-2) | 66 : 16 : 18 |
| 506 | (I-1) | (II-7) | (Gb-2) | 70 : 18 : 12 |
| 507 | (I-1) | (11-7) | (Gb-5) | 67 : 20 : 13 |
| 508 | (I-1) | (II-7) | (Ge-1) | 73 : 17 : 10 |
| 509 | (I-1) | (II-7) | (Gf-1) | 65 : 17 : 18 |
| 510 | (I-1) | (II-8) | 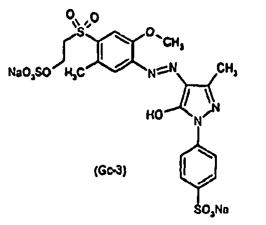 | 65 : 20 : 15 |
| 511 | (I-1) | (II-14) | (Ga-1) | 60 : 25 : 15 |
| 512 | (I-1) | (II-14) | (Gb-5) | 66 : 22 : 12 |
| 513 | (I-1) | (II-14) | (Ge-1) | 65 : 23 : 12 |
| 514 | (I-1) | (II-14) | (Gf-2) | 63 : 20 : 17 |
| 515 | (I-1) | 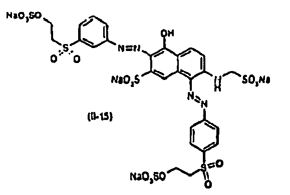 | (Ga-1) | 66 : 20 : 14 |
| 516 | (I-1) | (II-15) | (Gb-2) | 70 : 20 : 10 |
| 517 | (I-1) | (II-15) | (Gb-5) | 68 : 20 : 12 |
| 518 | (I-1) | (II-15) | 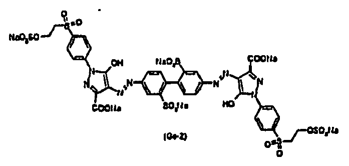 | 70 : 20 : 10 |
| 519 | (I-1) | (II-15) | (Gf-1) | 68 : 17 : 15 |
| 520 | (I-1) | 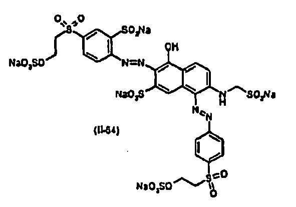 | (Ga-1) | 68 : 20 : 12 |
| 521 | (I-1) | (II-54) | (Ga-2) | 65 : 20 : 15 |
| 522 | (I-1) | (II-54) | (Gb-2) | 70 : 18 : 12 |
| 523 | (I-1) | (II-54) | (Gb-5) | 67 : 20 : 13 |
| 524 | (I-1) | (II-54) | (Ge-1) | 70 : 20 : 10 |
| 525 | (I-1) | (II-54) | (Gf-1) | 65 : 18 : 17 |
| 526 | (I-1) | 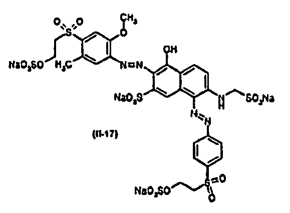 | (Gb-2) | 70 : 18 : 12 |
| 527 | (I-1) | 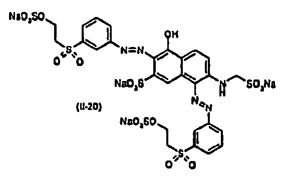 | (Ge-1) | 67 : 22 : 11 |
| 528 | (I-1) | 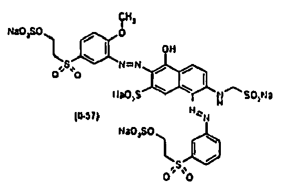 | (Gf-2) | 63 : 20 : 17 |
| 529 | (I-1) | 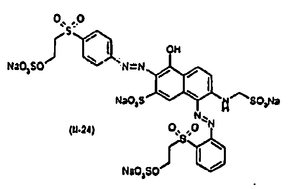 | (Ga-1) | 67 : 20 : 1 3 |
| 530 | (I-1) | (II-24) | (Ga-2) | 65 : 20 : 15 |
| 531 | (I-1) | (II-24) | (Gb-2) | 70 : 18 : 12 |
| 532 | (I-1) | (II-24) | (Gb-5) | 67 : 20 : 13 |
| 533 | (I-1) | (II-24) | (Ge-1) | 70 : 20 : 10 |
| 534 | (I-1) | (II-24) | (Gf-1) | 66 : 17 : 17 |
| 535 | (I-1) | 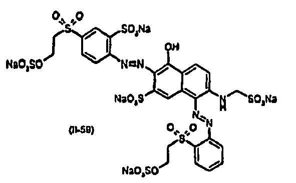 | (Ge-1) | 70 : 20 : 10 |
| 536 | (I-1) | 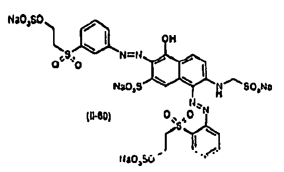 | (Gb-2) | 68 : 20 : 12 |
| 537 | (I-1) | 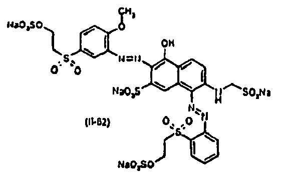 | (Gf-2) | 65 : 20 : 15 |
| 538 | (I-1) | 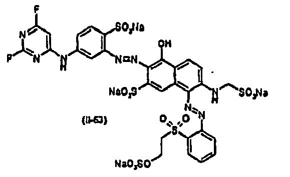 | (Ga-1) | 67 : 20 : 13 |
| 539 | (I-1) | 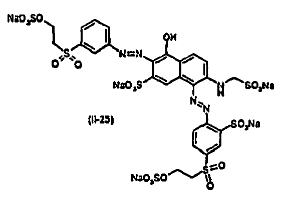 | (Gf-1) | 62 : 22 : 16 |
| 540 | (I-1) | 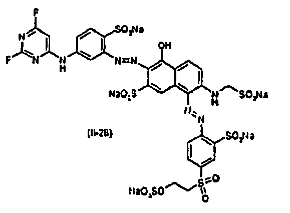 | (Ga-1) | 70 : 18 : 12 |
| 541 | (I-1) | (II-26) | (Gb-5) | 68 : 20 : 12 |
| 542 | (I-1) | (II-26) | (Ge-1) | 70 : 20 : 10 |
| 543 | (I-1) | (II-26) | (Gf-1) | 65 : 20 : 15 |
| 544 | (I-1) | 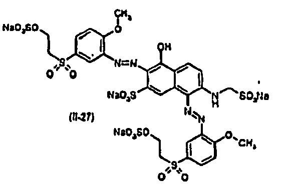 | (Ga-1) | 67 : 18 : 15 |
| 545 | (I-1) | (II-27) | (Ga-2) | 66 : 17 : 17 |
| 546 | (I-1) | (II-27) | (Gb-2) | 73 : 15 : 12 |
| 547 | (I-1) | (II-27) | (Gb-5) | 67 : 20 : 13 |
| 548 | (I-1) | (II-27) | (Ge-1) | 70 : 18 : 12 |
| 549 | (I-1) | (II-27) | (Gf-1) | 67 : 15 : 18 |
| 550 | (I-1) | 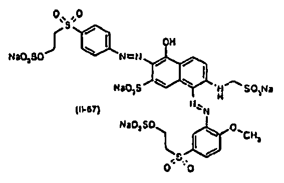 | (Ga-1) | 65 : 20 : 15 |
| 551 | (I-1) | (II-67) | (Ga-2) | 63 : 20 : 17 |
| 552 | (I-1) | (II-67) | (Ga-6) | 64 : 20 : 16 |
| 553 | (I-1) | (II-67) | (Gb-2) | 63 : 25 : 12 |
| 554 | (I-1) | (II-67) | (Gb-5) | 68 : 20 : 12 |
| 555 | (I-1) | (II-67) | (Ge-1) | 66 : 23 : 11 |
| 556 | (I-1) | (II-67) | (Gf-1) | 60 : 20 : 20 |
| 557 | (I-1) | 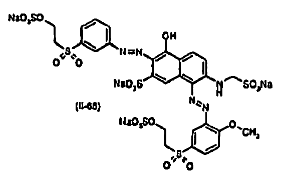 | (Ge-1) | 65 : 25 : 10 |
| 558 | (I-1) | 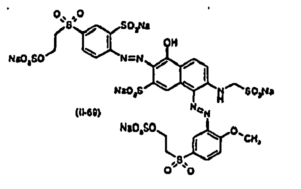 | (Gb-2) | 68 : 20 : 12 |
| 559 | (I-1) | 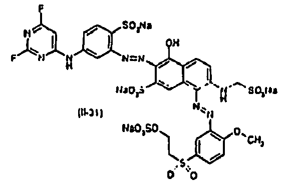 | (Ga-2) | 67 : 20 : 13 |
| 560 | (I-1) | 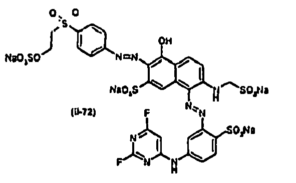 | (Ga-1) | 65 : 20 : 15 |
| 561 | (I-1) | (II-72) | (Gb-5) | 68 : 20 : 12 |
| 562 | (I-1) | (II-72) | (Ge-1) | 70 : 20 : 10 |
| 563 | (I-1) | (II-72) | (Gf-2) | 63 : 20 : 17 |
| 564 | (I-1) | 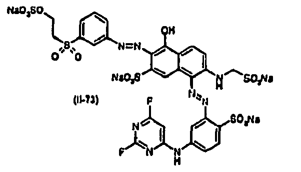 | 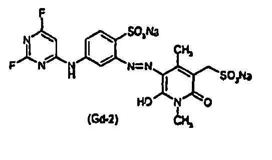 | 65 : 20 : 15 |
| 565 | (I-1) | 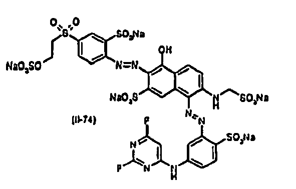 | (Ge-1) | 72 : 18 : 10 |
| 566 | (I-1) | 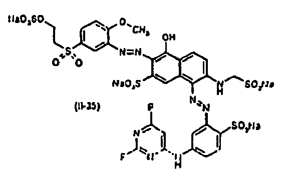 | (Ga-1) | 67 : 18 : 15 |
| 567 | (I-1) | 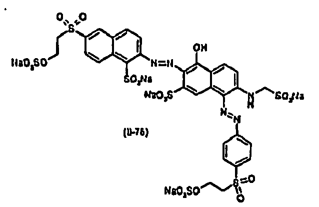 | (Gb-2) | 70 : 15 : 15 |
| 568 | (I-1) | 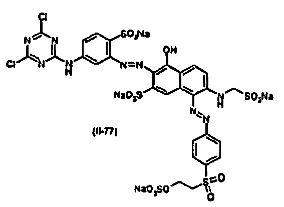 | (Ge-2) | 75 : 15 : 10 |
| 569 | (I-1) | 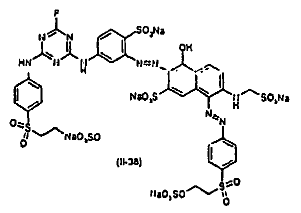 | (Gf-1) | 66 : 20 : 14 |
| 570 | (I-1) | 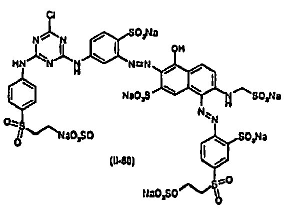 | (Gf-2) | 65 : 20 : 15 |
| 571 | (I-1) | 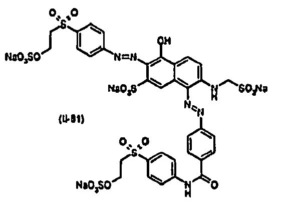 | (Gf-3) | 68 : 20 : 12 |
| 572 | (I-1) | 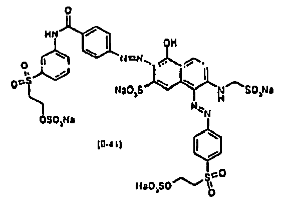 | 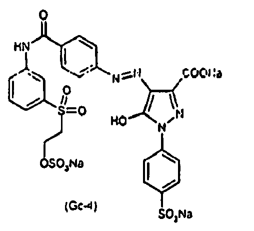 | 67 : 18 : 15 |
| 573 | (I-1) | 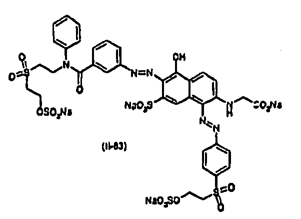 | (Ga-3) | 62 : 20 : 18 |
| 574 | (I-1) | 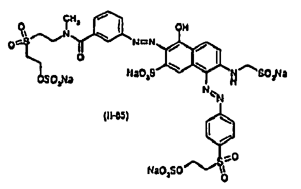 | (Gb-2) | 66 : 22 : 12 |
| 575 | (I-1) | 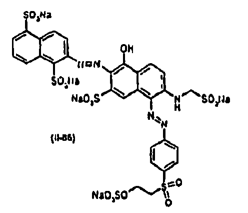 | (Ga-1) | 62 : 23 : 15 |
| 576 | (I-1) | (II-86) | (Gb-5) | 70 : 20 : 10 |
| 577 | (I-1) | (II-86) | (Ge-1) | 67 : 22 : 11 |
| 578 | (I-1) | (II-86) | (Gf-1) | 63 : 20 : 1 7 |
| 579 | (I-1) | 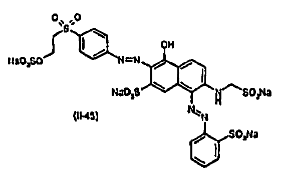 | (Ga-1) | 60 : 25 : 15 |
| 580 | (I-1) | 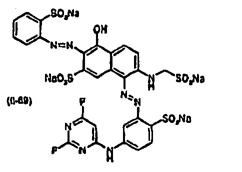 | (Gf-2) | 65 : 20 : 15 |
| 581 | (I-1) | 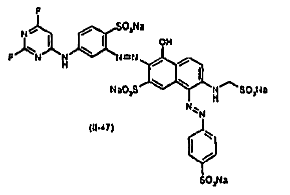 | (Gb-2) | 67 : 20 : 13 |
| 582 | (I-2) | (II-1) | (Gb-5) | 68 : 20 : 12 |
| 583 | (I-2) | (II-2) | (Gb-2) | 72 : 18 : 10 |
| 584 | (I-2) | (II-14) | (Gf-3) | 65 : 23 : 12 |
| 585 | (I-2) | (II-54) | (Ge-2) | 70 : 20 : 10 |
| 586 | (I-2) | (II-24) | (Gf-2) | 67 : 18 : 15 |
| 587 | (I-2) | (II-27) | (Ga-1) | 69 : 18 : 13 |
| 588 | (I-2) | (II-67) | (Ge-1) | 70 : 20 : 10 |
| 589 | (I-2) | (II-69) | (Gf-1) | 65 : 20 : 15 |
| 590 | (I-2) | (II-72) | (Gf-4) | 66 : 22 : 12 |
| 591 | (I-2) | (II-86) | (Ga-3) | 60 : 20 : 20 |
| 592 | (I-3) | (11-3) | (Ge-1) | 73 : 20 : 7 |
| 593 | (I-3) | (II-7) | (Gb-5) | 69 : 20 : 11 |
| 594 | (I-3) | (II-27) | (Gf-2) | 70 : 20 : 10 |
| 595 | (I-3) | (II-86) | (Ga-1) | 67 : 22 : 11 |
| 596 | (I-4) | (II-4) | (Gb-2) | 72 : 20 : 8 |
| 597 | (I-4) | (II-8) | (Gf-2) | 70 : 20 : 10 |
| 598 | (I-4) | (II-17) | (Ge-1) | 73 : 22 : 5 |
| 599 | (I-5) | (II-4) | (Ge-1) | 72 : 20 : 8 |
| 600 | (I-5) | (II-17) | (Gb-2) | 73 : 20 : 7 |
| 601 | (I-6) | (II-1) | (Gb-3) | 70 : 20 : 10 |
| 602 | (I-6) | (II-3) | (Gf-3) | 67 : 22 : 11 |
| 603 | (I-6) | (II-24) | (Ge-1) | 72 : 20 : 8 |
| 604 | (I-6) | (II-27) | (Gb-5) | 66 : 20 : 14 |
| 605 | (I-6) | (11-67) | (Ga-3) | 66 : 17 : 17 |
| 606 | (I-6) | (II-72) | (Gf-4) | 63 : 22 : 15 |
| 607 | (I-6) | (II-41) | (Gc-4) | 67 : 22 : 11 |
| 608 | (I-7) | (II-1) | (Ge-1) | 70 : 20 : 10 |
| 609 | (I-7) | (II-2) | (Gb-2) | 73 : 18 : 9 |
| 610 | (I-7) | (II-3) | (Gf-1) | 67 : 20 : 13 |
| 611 | (I-7) | (II-7) | (Gb-5) | 66 : 21 : 13 |
| 612 | (I-7) | (II-26) | (Gf-4) | 65 : 20 : 15 |
| 613 | (I-7) | (II-67) | (Ga-1) | 67 : 22 : 11 |
| 614 | (I-7) | (II-72) | (Gf-3) | 66 : 20 : 14 |
| 615 | 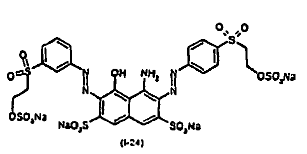 | (II-1) | (Gb-5) | 68 : 20 : 12 |
| 616 | (I-24) | (II-2) | (Gb-2) | 67 : 22 : 11 |
| 617 | (I-24) | (II-3) | (Ga-1) | 67 : 20 : 13 |
| 618 | (I-24) | (II-7) | (Gf-2) | 66 : 17 : 17 |
| 619 | (I-24) | (II-67) | (Ge-1) | 70 : 22 : 8 |
| 620 | 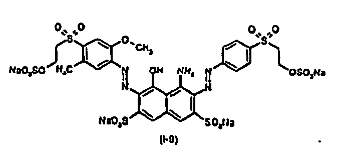 | (II-1) | (Ge-1) | 70 : 20 : 10 |
| 621 | (I-9) | (II-2) | (Gf-2) | 65 : 20 : 15 |
| 622 | (I-9) | (II-3) | (Ga-1) | 67 : 22 : 11 |
| 623 | (I-9) | (II-7) | (Gb-5) | 67 : 20 : 13 |
| 624 | (I-9) | (II-67) | (Gb-2) | 68 : 22 : 10 |
| 625 | 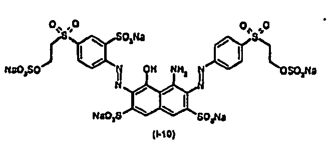 | (II-1) | (Gb-5) | 68 : 20 : 12 |
| 626 | (I-10) | (II-2) | (Gb-2) | 69 : 20 : 11 |
| 627 | (I-10) | (II-3) | (Ga-1) | 67 : 22 : 11 |
| 628 | (I-10) | (II-7) | (Gf-2) | 66 : 18 : 16 |
| 629 | (I-10) | (II-67) | (Ge-1) | 70 : 20 : 10 |
| 630 | 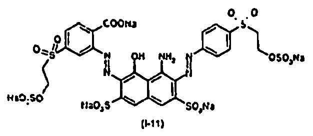 | (II-1) | (Ge-1) | 72 : 20 : 8 |
| 631 | (I-11) | (II-2) | (Gf-1) | 66 : 20 : 14 |
| 632 | (I-11) | (II-3) | (Ga-1) | 68 : 20 : 12 |
| 633 | (I-11) | (II-7) | (Gb-2) | 72 : 18 : 10 |
| 634 | (I-11) | (II-67) | (Gb-5) | 67 : 20 : 13 |
| 635 | (I-12) | (II-3) | (Ge-1) | 70 : 23 : 7 |
| 636 | (I-12) | (II-7) | (Gb-2) | 70 : 20 : 10 |
| 637 | (I-12) | (II-27) | (Gf-1) | 67 : 20 : 13 |
| 638 | (I-12) | (II-86) | (Ga-1) | 68 : 22 : 10 |
| 639 | 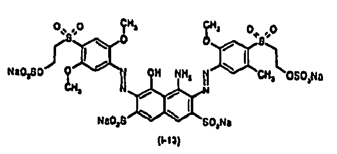 | (II-8) | (Ge-1) | 72 : 20 : 8 |
| 640 | (I-13) | (II-17) | (Gb-2) | 70 : 20 : 10 |
| 641 | (I-13) | (II-67) | (Gf-2) | 66 : 20 : 14 |
| 642 | 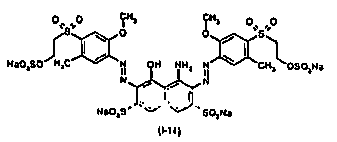 | (II-4) | (Gb-2) | 70 : 20 : 10 |
| 643 | (I-14) | (II-8) | (Gf-1) | 68 : 20 : 12 |
| 644 | (I-14) | (II-17) | (Ge-1) | 72 : 20 : 8 |
| 645 | 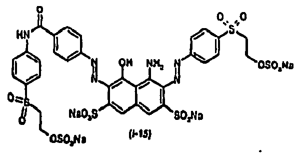 | (II-1) | (Gb-1) | 70 : 20 : 10 |
| 646 | (I-15) | (II-3) | (Gf-3) | 66 : 22 : 12 |
| 647 | (I-15) | (II-20) | (Ge-1) | 72 : 20 : 8 |
| 648 | (I-15) | (II-27) | (Gb-1) | 67 : 20 : 13 |
| 649 | (I-15) | (II-67) | (Ga-3) | 66 : 18 : 16 |
| 650 | (I-15) | (II-72) | (Gf-4) | 66 : 20 : 14 |
| 651 | (I-15) | (II-81) | (Gf-3) | 68 : 20 : 12 |
| 652 | (I-15) | (II-41) | (Gc-4) | 70 : 18 : 12 |
| 653 | 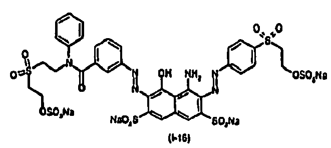 | (I-1) | (Ge-1) | 72 : 20 : 8 |
| 654 | (I-16) | (II-2) | (Gb-2) | 70 : 20 : 10 |
| 655 | (I-16) | (II-3) | (Ga-1) | 68 : 20 : 1 2 |
| 656 | (I-16) | (II-7) | (Gb-5) | 66 : 20 : 14 |
| 657 | (I-16) | (II-67) | (Gf-1) | 66 : 17 : 17 |
| 658 | 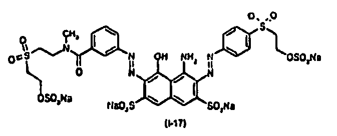 | (II-1) | (Gb-5) | 71 : 18 : 11 |
| 659 | (I-17) | (II-2) | (Gb-2) | 70 : 20 : 10 |
| 660 | (I-17) | (II-3) | (Ga-1) | 70 : 18 : 12 |
| 661 | (I-17) | (II-7) | (Gf-2) | 67 : 20 : 13 |
| 662 | (I-17) | (II-67) | (Ge-1) | 72 : 18 : 10 |
| 663 | 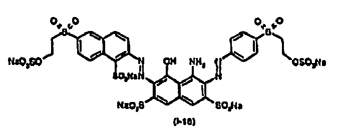 | (II-1) | (Gb-5) | 67 : 20 : 1 3 |
| 664 | (I-18) | (II-2) | (Gb-2) | 68 : 20 : 12 |
| 665 | (I-18) | (II-3) | (Ga-1) | 68 : 18 : 14 |
| 666 | (I-18) | (II-7) | (Gf-1) | 65 : 20 : 15 |
| 667 | (I-18) | (II-67) | (Ge-1) | 70 : 20 : 10 |
| 668 | 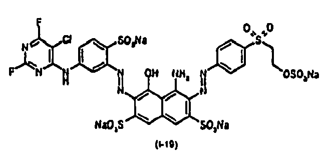 | (II-1) | (Ge-1) | 68 : 22 : 10 |
| 669 | (I-19) | (II-2) | (Gb-2) | 70 : 20 : 10 |
| 670 | (I-19) | (II-3) | (Gf-1) | 67 : 20 : 13 |
| 671 | (I-19) | (II-7) | (Ga-2) | 66 : 22 : 12 |
| 672 | (I-19) | (II-14) | (Gf-4) | 65 : 22 : 13 |
| 673 | (I-19) | (II-26) | (Gf-3) | 67 : 20 : 13 |
| 674 | (I-19) | (II-67) | (Ga-1) | 68 : 20 : 12 |
| 675 | (I-19) | (II-72) | (Gd-2) | 67 : 22 : 11 |
| 676 | 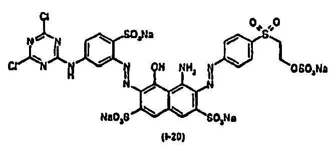 | (II-1) | (Ge-1) | 67 : 22 : 11 |
| 677 | (I-20) | (II-2) | (Gf-1) | 65 : 20 : 1 5 |
| 678 | (I-20) | (II-3) | (Ga-1) | 68 : 20 : 12 |
| 679 | (I-20) | (II-7) | (Gb-2) | 70 : 20 : 10 |
| 680 | (I-20) | (II-67) | (Gb-5) | 66 : 22 : 12 |
| 681 | (I-20) | (II-80) | (Ga-2) | 65 : 20 : 15 |
| 682 | 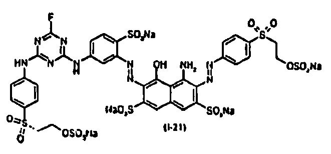 | (II-1) | (Gb-5) | 68 : 20 : 12 |
| 683 | (I-21) | (II-2) | (Gf-2) | 66 : 20 : 14 |
| 684 | (I-21) | (II-3) | (Ga-1) | 67 : 20 : 13 |
| 685 | (I-21) | (II-7) | (Gb-2) | 67 : 22 : 11 |
| 686 | (I-21) | (II-67) | (Ge-1) | 68 : 22 : 10 |
| 687 | 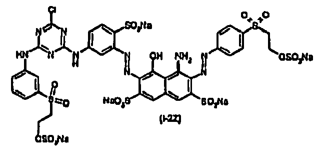 | (II-1) | (Ge-1) | 72 : 20 : 8 |
| 688 | (I-22) | (II-2) | (Gf-1) | 67 : 20 : 13 |
| 689 | (I-22) | (II-3) | (Ga-1) | 68 : 20 : 12 |
| 690 | (I-22) | (II-7) | (Gb-2) | 70 : 20 : 10 |
| 691 | (I-22) | (II-67) | (Ge-2) | 67 : 22 : 11 |
| 692 | (I-22) | (II-80) | (Gd-1) | 65 : 20 : 15 |

### Weitere Farbstoff-Mischungen gemäß Beispiel 468 oder 469

| Beispiel | Farbstoff nach allg. Formel (I) | Farbstoff nach allg. Formel (II) | Farbstoff nach Formel (G) | Verhältnis (I):(II):(G) |
|---|---|---|---|---|
| 693 | (I-1) | (II-1) | 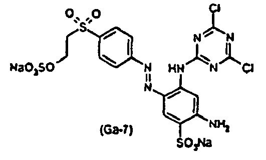 | 72 : 18 : 10 |
| 694 | (I-1) | (II-2) | 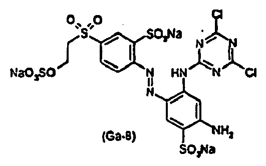 | 68 : 21 : 11 |
| 695 | (I-1) | (II-7) | 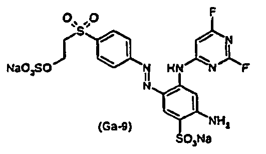 | 70 : 20 : 10 |
| 696 | (I-1) | (II-54) | 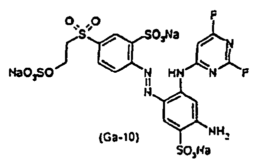 | 70 : 18 : 12 |
| 697 | (I-1) | (II-26) | (Ga-9) | 72 : 17 : 11 |
| 698 | (I-1) | (II-77) | (Ga-7) | 73 : 18 : 9 |
| 699 | (I-2) | (II-1) | (Ga-7) | 72 : 18 : 10 |
| 700 | (I-2) | (II-2) | (Ga-7) | 68 : 21 : 11 |
| 701 | (I-2) | (II-7) | (Ga-9) | 70 : 20 : 10 |
| 702 | (I-2) | (II-54) | (Ga-10) | 70 : 18 : 12 |
| 703 | (I-2) | (II-26) | (Ga-9) | 72 : 17 : 11 |
| 704 | (I-2) | (II-77) | (Ga-7) | 73 : 18 : 9 |
| 705 | (I-4) | (II-1) | (Ga-7) | 72 : 18 : 10 |
| 706 | (I-4) | (II-2) | (Ga-8) | 68 : 21 : 11 |
| 707 | (I-4) | (II-7) | (Ga-9) | 70 : 20 : 10 |
| 708 | (I-4) | (II-54) | (Ga-10) | 70 : 18 : 12 |
| 709 | (I-4) | (II-26) | (Ga-9) | 72 : 17 : 11 |
| 710 | (I-4) | (II-77) | (Ga-7) | 73 : 18 : 9 |
| 711 | (I-7) | (II-1) | (Ga-7) | 72 : 18 : 10 |
| 712 | (I-7) | (II-2) | (Ga-8) | 68 : 21 : 11 |
| 713 | (I-7) | (II-7) | (Ga-9) | 70 : 20 : 10 |
| 714 | (I-7) | (II-54) | (Ga-10) | 70 : 18 : 12 |
| 715 | (I-7) | (II-26) | (Ga-9) | 72 : 17 : 11 |
| 716 | (I-7) | (II-77) | (Ga-7) | 73 : 18 : 9 |

### Farbstoff-Mischungen gemäß Beispiel 473

| Beispiel | Farbstoff nach allg. Formel (I) | Farbstoff nach allg. Formel (11) | Farbstoff nach allg. Formel (G) | Verhältnis (I):(II):(G) |
|---|---|---|---|---|
| 717 | (I-1) | (II-1) | (Gf-2) | 65 : 20 : 1 5 |
| 718 | (I-2) | (II-3) | (Ge-1) | 70 : 20 : 10 |
| 719 | (I-6) | (II-41) | (Gf-3) | 67 : 22 : 11 |
| 720 | (I-7) | (II-14) | (Gd-2) | 65 : 22 : 13 |
| 721 | (I-24) | (II-15) | (Gf-1) | 67 : 20 : 13 |
| 722 | (I-9) | (II-17) | (Ga-3) | 67 : 18 : 15 |
| 723 | (I-10) | (11-54) | (Ga-4) | 66 : 22 : 12 |
| 724 | (I-16) | (II-83) | (Ga-2) | 65 : 20 : 15 |
| 725 | (I-17) | (II-85) | (Gb-5) | 67 : 20 : 13 |
| 726 | (I-18) | (II-76) | (Gb-3) | 70 : 17 : 13 |
| 727 | (I-20) | (II-77) | (Gf-3) | 70 : 15 : 15 |
| 728 | (I-21) | (II-38) | (Gd-1) | 65 : 20 : 15 |

### Farbstoff-Mischungen gemäß Beispiel 474

| Beispiel | Farbstoff nach allg. Formel (I) | Farbstoff nach allg. Formel (II) | Verhältnis (I):(II) |
|---|---|---|---|
| 729 | (I-3) | (II-1) | 70 : 30 |
| 730 | (I-3) | (II-2) | 67 : 33 |
| 731 | (I-3) | (II-54) | 70 : 30 |
| 732 | (I-3) | (II-24) | 75 : 25 |
| 733 | (I-3) | (II-26) | 70 : 30 |
| 734 | (I-3) | (II-67) | 72 : 28 |
| 735 | (I-3) | (II-69) | 75 : 25 |
| 736 | (I-3) | (II-72) | 68 : 32 |
| 737 | (I-4) | (II-1) | 67 : 33 |
| 738 | (I-4) | (II-2) | 65 : 35 |
| 739 | (I-4) | (II-3) | 75 : 25 |
| 740 | (I-4) | (II-14) | 68 : 32 |
| 741 | (I-4) | (II-54) | 70 : 30 |
| 742 | (I-4) | (II-24) | 76 : 24 |
| 743 | (I-4) | (II-26) | 72 : 28 |
| 744 | (I-4) | (II-27) | 77 : 23 |
| 745 | (I-4) | (II-67) | 73 : 27 |
| 746 | (I-4) | (II-69) | 70 : 30 |
| 747 | (I-4) | (II-72) | 70 : 30 |
| 748 | (I-4) | (II-86) | 80 : 20 |
| 749 | (I-5) | (II-1) | 70 : 30 |
| 750 | (I-5) | (II-2) | 67 : 33 |
| 751 | (I-5) | (II-3) | 72 : 28 |
| 752 | (I-5) | (II-7) | 70 : 30 |
| 753 | (I-5) | (II-14) | 66 : 34 |
| 754 | (I-5) | (II-54) | 68 : 32 |
| 755 | (I-5) | (II-24) | 75 : 25 |
| 756 | (I-5) | (II-26) | 73 : 27 |
| 757 | (I-5) | (II-27) | 75 : 25 |
| 758 | (I-5) | (II-67) | 72 : 28 |
| 759 | (I-5) | (II-69) | 70 : 30 |
| 760 | (I-5) | (II-72) | 70 : 30 |
| 761 | (I-12) | (II-54) | 70 : 30 |
| 762 | (I-12) | (II-26) | 75 : 25 |
| 763 | (I-12) | (II-69) | 68 : 32 |
| 764 | (I-13) | (II-1) | 75 : 25 |
| 765 | (I-13) | (II-2) | 67 : 33 |
| 766 | (I-13) | (II-3) | 70 : 30 |
| 767 | (I-13) | (II-7) | 72 : 28 |
| 768 | (I-13) | (II-14) | 65 : 35 |
| 769 | (I-13) | (II-54) | 68 : 32 |
| 770 | (I-13) | (II-24) | 73 : 27 |
| 771 | (I-13) | (II-26) | 72 : 28 |
| 772 | (I-13) | (II-27) | 75 : 25 |
| 773 | (I-13) | (II-67) | 70 : 30 |
| 774 | (I-13) | (II-69) | 68 : 32 |
| 775 | (I-13) | (II-72) | 70 : 30 |
| 776 | (I-14) | (II-1) | 72 : 28 |
| 777 | (I-14) | (II-2) | 68 : 32 |
| 778 | (I-14) | (II-3) | 72 : 28 |
| 779 | (I-14) | (II-7) | 70 : 30 |
| 780 | (I-14) | (II-14) | 66 : 34 |
| 781 | (I-14) | (II-54) | 70 : 30 |
| 782 | (I-14) | (II-24) | 75 : 25 |
| 783 | (I-14) | (II-26) | 72 : 28 |
| 784 | (I-14) | (II-27) | 74 : 26 |
| 785 | (I-14) | (II-67) | 72 : 28 |
| 786 | (I-14) | (II-69) | 68 : 32 |
| 787 | (I-14) | (II-72) | 72 : 28 |
| 788 | (I-14) | (II-86) | 75 : 25 |

### Farbstoff-Mischungen gemäß Beispiel 475

| Beispiel | Farbstoff nach allg. Formel (I) | Farbstoff nach allg. Formel (II) | Verhältnis (I):(II) |
|---|---|---|---|
| 789 | (I-4) | (II-4) | 70 : 30 |
| 790 | (I-5) | (II-17) | 75 : 25 |
| 791 | (I-12) | (II-1) | 73 : 27 |
| 792 | (I-12) | (II-2) | 70 : 30 |
| 793 | (I-12) | (II-24) | 72 : 28 |
| 794 | (I-12) | (II-67) | 73 : 27 |
| 795 | (I-12) | (II-72) | 72 : 28 |
| 796 | (I-12) | (II-45) | 65 : 35 |
| 797 | (I-13) | (II-4) | 75 : 25 |
| 798 | (I-14) | (II-17) | 77 : 23 |

### Farbstoff-Mischungen gemäß Beispiel 476

| Beispiel | Farbstoff nach allg. Formel (I) | Farbstoff nach allg. Formel (II) | Farbstoff nach allg. Formel (G) | Verhältnis (I):(II):(G) |
|---|---|---|---|---|
| 799 | (I-1) | (II-24) | (Gf-2) | 66 : 20 : 14 |
| 800 | (I-1) | (II-67) | (Gb-5) | 67 : 20 : 13 |
| 801 | (I-1) | (II-72) | (Gf-1) | 65 : 20 : 15 |
| 802 | (I-1) | (II-45) | (Ga-3) | 60 : 25 : 15 |
| 803 | (I-2) | (II-57) | (Ge-1) | 70 : 20 : 10 |
| 804 | (I-2) | (II-62) | (Ga-1) | 65 : 22 : 13 |
| 805 | (I-2) | (II-27) | (Gb-2) | 70 : 20 : 10 |
| 806 | (I-2) | (II-35) | (Gf-1) | 66 : 20 : 14 |
| 807 | (I-7) | (II-63) | (Ge-1) | 70 : 22 : 8 |
| 808 | (I-7) | (II-26) | (Gb-2) | 70 : 20 : 10 |
| 809 | (I-7) | (II-31) | (Gd-2) | 67 : 20 : 13 |
| 810 | (I-7) | (II-47) | (Gb-1) | 65 : 25 : 10 |
| 811 | (I-24) | (II-20) | (Ga-2) | 65 : 20 : 15 |
| 812 | (I-24) | (II-60) | (Gf-1) | 67 : 18 : 15 |
| 813 | (I-24) | (II-25) | (Gf-3) | 66 : 20 : 14 |
| 814 | (I-24) | (II-68) | (Gb-2) | 67 : 22 : 11 |
| 815 | (I-24) | (II-73) | (Gd-2) | 65 : 18 : 17 |
| 816 | (I-9) | (II-8) | (Gf-1) | 65 : 20 : 15 |
| 817 | (I-10) | (II-59) | (Gb-2) | 67 : 22 : 11 |
| 818 | (I-10) | (II-69) | (Ga-1) | 65 : 23 : 12 |
| 819 | (1-10) | (II-74) | (Ga-2) | 67 : 20 : 13 |

### Beispiel 1187

70 Teile eines elektrolythaltigen Farbstoffpulvers, das den marineblauen Disazofarbstoff der Formel (I-1) in 70%-igem Anteil enthält, 8 Teile eines elektrolythaltigen Farbstoffpulvers, das den scharlachroten Disazofarbstoff der Formel (II-2) in 75%-igem Anteil enthält, 12 Teile eines elektrolythaltigen Farbstoffpulvers, das den orangefarbenen Azofarbstoff der Formel (III-21) in 80%-igem Anteil enthält und 10 Teile eines elektrolythaltigen Farbstoffpulvers, das den gelben Azofarbstoff der Formel (Ga-1) in 75%-igem Anteil enthält, werden in 700 Teilen Wasser gelöst und die erhaltene Farbstofflösung auf pH 5,5-6,5 eingestellt. Durch Eindampfen dieser Farbstofflösung erhält man eine Farbstoffmischung, die auf Baumwolle unter den für Reaktivfarbstoffe üblichen Färbebedingungen tiefschwarze Färbungen und Drucke liefert.

Alternativ kann die erhaltene Farbstofflösung auch durch Zusatz eines PhosphatPuffers bei pH 5,5 - 6 gepuffert und durch weitere Verdünnung bzw. Konzentration als Flüssigmarke bestimmter Stärke eingestellt werden.

### Beispiel 1188

Eine analog Beispiel 2 hergestellte wässrige Lösung, der drei Farbstoffe (I-1), (II-2) und (III-1) im Verhältnis 65 : 15 : 10, wird mit 10 Teilen eines elektrolythaltigen Farbstoffpulvers, das den orangefarbenen Azofarbstoff der Formel (III-21) in 80%-igem Anteil enthält, versetzt und die erhaltene Farbstofflösung auf pH 5,5-6,5 eingestellt. Durch Eindampfen dieser Farbstofflösung erhält man eine Farbstoffmischung, die auf Baumwolle unter den für Reaktivfarbstoffe üblichen Färbebedingungen tiefschwarze Färbungen und Drucke liefert.

### Beispiel 1189

Eine analog Beispiel 2 hergestellte wässrige Lösung, der drei Farbstoffe (I-1), (II-1) und (III-1) im Verhältnis 66 : 17 : 7, wird mit 10 Teilen eines elektrolythaltigen Farbstoffpulvers, das den gelben Azofarbstoff der Formel (Ga-1) in 75%-igem Anteil enthält, versetzt und die erhaltene Farbstofflösung auf pH 5,5-6,5 eingestellt. Durch Eindampfen dieser Farbstofflösung erhält man eine Farbstoffmischung, die auf Baumwolle unter den für Reaktivfarbstoffe üblichen Färbebedingungen tiefschwarze Färbungen und Drucke liefert.

### Weitere Farbstoff-Mischungen gemäß Beispiel 1187

| Beispiel | Farbstoff nach allg. Formel (I) | Farbstoff nach allg. Formel (II) | Farbstoff nach allg. Formel (III) | Farbstoff nach Formel (G) | Verhältnis |
|---|---|---|---|---|---|
| 1190 | (I-1) | (II-1) | (III-21) | (Ga-1) | 70:10:10:10 |
| 1191 | (I-1) | (II-2) | (III-22) | 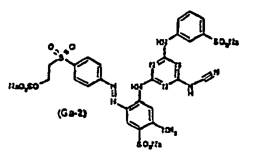 | 66:12:10:12 |
| 1193 | (I-1) | (II-7) | (III-24) | 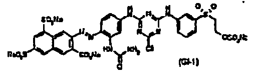 | 68:8:10:14 |
| 1194 | (I-1) | (II-24) | (III-27) | 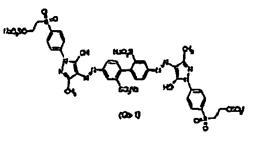 | 67:11:12:10 |
| 1195 | (I-1) | (II-26) | (III-21) | 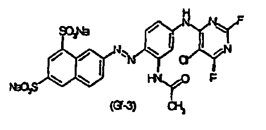 | 70:12:10:8 |
| 1197 | (I-1) | (II-37) | (III-24) | 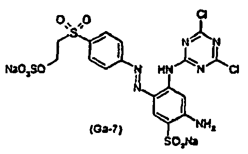 | 70:10:10:10 |
| 1199 | (I-1) | (II-45) | (III-22) | 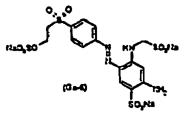 | 60:15:10:15 |

### Weitere Farbstoff-Mischungen gemäß Beispiel 1188

| Beispiel | Farbstoff nach allg. Formel (I) | Farbstoff nach allg. Formel (II) | Farbstoff nach allg. Formel (III) | Farbstoff nach Formel (III) | Verhältnis |
|---|---|---|---|---|---|
| 1203 | (I-1) | (II-1) | (III-21) | (III-7) | 70:10:10:10 |
| 1204 | (I-1) | (II-2) | (III-22) | (III-1) | 66:12:12:10 |
| 1206 | (I-1) | (II-7) | (III-24) | (III-8) | 68:10:10:12 |
| 1207 | (I-1) | (II-24) | (III-27) | (III-4) | 65:11:12:12 |
| 1208 | (I-1) | (II-26) | (III-21) | (III-10) | 70:12:10:8 |
| 1210 | (I-1) | (II-37) | (III-24) | (III-7) | 70:10:10:10 |
| 1212 | (I-1) | (II-45) | (III-22) | (III-2) | 60:15:10:15 |

### Weitere Farbstoff-Mischungen gemäß Beispiel 1189

| Beispiel | Farbstoff nach allg. Formel (I) | Farbstoff nach allg. Formel (II) | Farbstoff nach allg. Formel (III) | Farbstoff nach Formel (G) | Verhältnis |
|---|---|---|---|---|---|
| 1216 | (I-1) | (II-1) | (III-7) | (Ga-2) | 67:10:11:12 |
| 1217 | (I-1) | (II-2) | (III-1) | (Ga-1) | 67:12:10:11 |
| 1219 | (I-1) | (II-7) | (III-8) | (Gf-1) | 67:8:10:15 |
| 1220 | (I-1) | (II-24) | (III-4) | (Ge-1) | 67:11:12:10 |
| 1221 | (I-1) | (II-26) | (III-10) | (Gf-3) | 69:12:10:9 |
| 1223 | (I-1) | (II-37) | (III-7) | (Ga-7) | 70:10:10:10 |
| 1225 | (I-1) | (II-45) | (III-2) | (Ga-6) | 60:15:10:15 |

### Anwendungsbeispiel 1

2 Teile einer gemäß Beispiel 1 - 7, 9, 449, 468 - 481, 1187 - 1189 erhaltenen Farbstoffmischung und 50 Teile Natriumchlorid werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (40-80°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wäßrigen Lösung, die 1 Teil einer 50%igen Essigsäure enthält, während 10 Minuten. Mit E-Wasser wird bei 70°C nachgespült und dann 15 Minuten mit einem Waschmittel kochend geseift, nochmals gespült und getrocknet. Man erhält eine farbstarke marineblaue bis graue Färbung mit sehr guten Echtheitseigenschaften.

### Anwendungsbeispiel 2

6 Teile einer gemäß Beispiel 1 - 7, 9, 449, 468 - 481, 1187 - 1189 erhaltenen Farbstoffmischung und 50 Teile Natriumchlorid werden in 998 Teilen Wasser gelöst und 7 Teile Natriumcarbonat, 2 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine tiefschwarze Färbung mit sehr guten Echtheitseigenschaften.

### Anwendungsbeispiel 3

2 Teile einer gemäß Beispiel 9, 128, 129, 132, 137, 138, 141, 143, 145, 275, 276, 279, 284, 285, 288, 290, 292, 436 oder 444 , 477, 601-607, 645-652, 719, erhaltenen Farbstoffmischung werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke marineblaue bis graue Färbung mit sehr guten Echtheitseigenschaften.

### Anwendungsbeispiel 4

4 Teile einer gemäß Beispiel 9, 128, 129, 132, 137, 138, 141, 143, 145, 275, 276, 279, 284, 285, 288, 290, 292, 436 oder 444, 477, 601-607, 645-652, 719, erhaltenen Farbstoffmischung und 5 Teile Natriumchlorid werden in 999 Teilen Wasser gelöst, 7 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke graublaue bis schwarze Färbung mit sehr guten Echtheitseigenschaften.

### Anwendungsbeispiel 5

8 Teile einer gemäß Beispiel 9, 128, 129, 132, 137, 138, 141, 143, 145, 275, 276, 279, 284, 285, 288, 290, 292, 436 oder 444, 477, 601-607, 645-652, 719, erhaltenen Farbstoffmischung und 10 Teile Natriumchlorid werden in 997 Teilen Wasser gelöst, 10 Teile Natriumcarbonat, 1,3 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine tiefschwarze Färbung mit sehr guten Echtheitseigenschaften.

## Patentansprüche

1. Reaktivfarbstoffmischungen, die einen oder mehrere Farbstoffe der nachstehend angegebenen und definierten allgemeinen Formel (I), 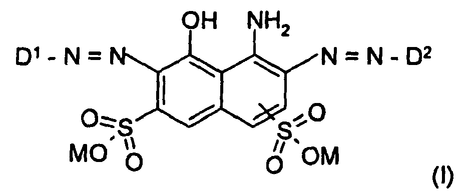 einen oder mehrere Farbstoffe der nachstehend angegebenen und definierten allgemeinen Formel (II) 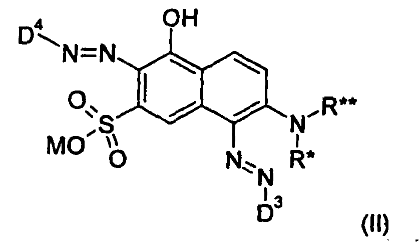 mit R**=CH₂SO₃M und optional einen oder mehrere Farbstoffe der nachstehend angegebenen und definierten allgemeinen Formel (III) 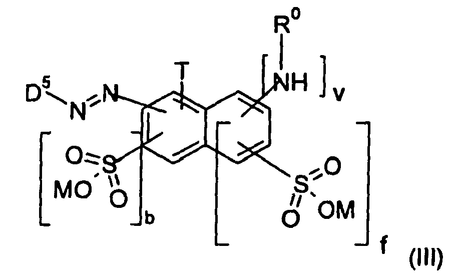 enthalten, in welchen bedeuten:
D¹, D², D³, D⁴ und D⁵ sind unabhängig voneinander eine Gruppe der allgemeinen Formel (1) 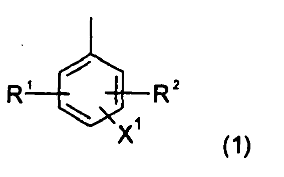 worin
R¹ und R² unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
X¹ für Wasserstoff oder eine Gruppe der Formel -SO₂-Z steht, wobei Z -CH=CH₂, -CH₂CH₂Z¹ oder Hydroxy bedeutet, worin
Z¹ Hydroxy oder eine unter Alkaliwirkung abspaltbare Gruppe ist; oder
D¹, D², D³, D⁴ und D⁵ bedeuten unabhängig voneinander eine Naphthylgruppe der allgemeinen Formel (2) 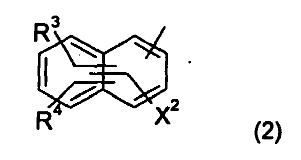 worin
R³ und R⁴ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und X² eine der Bedeutungen von X¹ hat; oder
D¹, D², D³, D⁴ und D⁵ sind unabhängig voneinander eine Gruppe der allgemeinen Formel (3) 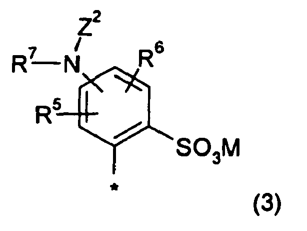 worin
R⁵ und R⁶ unabhängig voneinander eine der Bedeutungen von R¹ und R² haben; R⁷ ist Wasserstoff, (C₁-C₄)-Alkyl, unsubstituiertes oder durch (C₁-C₄)- Alkyl, (C₁-C₄)-Alkoxy, Sulfo, Halogen oder Carboxy substituiertes Phenyl; und
Z² ist eine Gruppe der allgemeinen Formel (4) oder (5) oder (6) 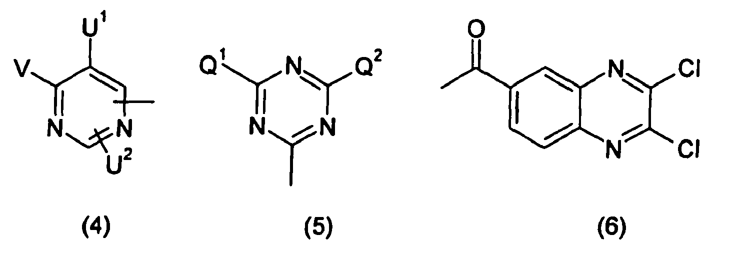 worin
V Fluor oder Chlor bedeutet;
U¹, U² unabhängig voneinander Fluor, Chlor oder Wasserstoff sind; und
Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (7) oder (8) bedeuten 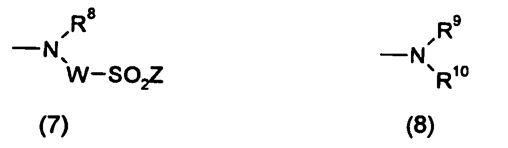 worin
R⁸ Wasserstoff oder (C₁-C₆)-Alkyl, Sulfo-(C₁-C₆)-Alkyl, oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R⁹ und R¹⁰ haben unabhängig voneinander eine der Bedeutungen von R⁸, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfonyl, -NR¹¹ mit R¹¹ = (C₁-C₆)-Alkyl ist;
W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfonyl, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
Z die obengenannte Bedeutung hat; oder
D¹, D², D³, D⁴ und D⁵ stehen unabhängig voneinander für eine Gruppe der allgemeinen Formel (9) 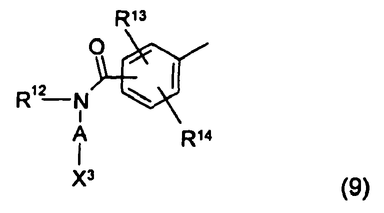 worin
R¹² Wasserstoff, (C₁-C₄)-Alkyl, Aryl oder ein substituierter Arylrest ist;
R¹³ und R¹⁴ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und A eine Phenylengruppe der allgemeinen Formel (10) ist 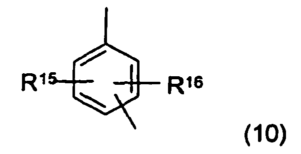 worin
R¹⁵ und R¹⁶ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; oder A ist eine Naphthylengruppe der allgemeinen Formel (11) 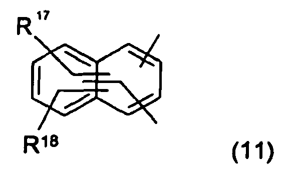 worin
R¹⁷ und R¹⁸ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; und X³ eine der Bedeutungen von X¹ hat; und
R⁰ für eine Gruppe der allgemeinen Formel (4) oder (5) steht oder eine Gruppe der allgemeinen Formel (13) 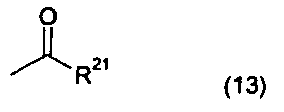 bedeutet, worin;
R²¹ (C₁-C₆)-Alkyl, Sulfo-(C₁-C₆)-Alkyl, Carboxy-(C₁-C₆)-Alkyl oder Phenyl ist, das unsubstituiert oder durch (C₁-C₄)-Alkyl, (C₁-C₄)-Alkoxy, Sulfo, Halogen, Carboxy, Acetamido, Ureido substituiert ist; und
b, f, v unabhängig voneinander für 0 oder 1 stehen; und
R*, Wasserstoff, (C₁-C₄)-Alkyl oder eine Gruppe der Formel (14)
-CH₂-SO₃M (14)
sind;
T für Hydroxy oder NH₂ steht, wobei für T gleich NH₂ v für 0 steht und
M Wasserstoff, ein Alkalimetall oder ein Äquivalent eines Erdalkalimetalls bedeutet,
wobei die Mischungen die Farbstoffe der allgemeinen Formeln (I) - (III) mindestens eine faserreaktive Gruppe der Formel -SO₂-Z oder -Z² enthalten.

2. Reaktivfarbstoffmischungen gemäß Ansprüche 1, enthaltend einen oder mehrere Monoazofarbstoffe der Formel (15) und/oder einen oder mehrere Monoazofarbstoffe der Formel (16) mit jeweils 0.5 bis 6 Gew.-%, 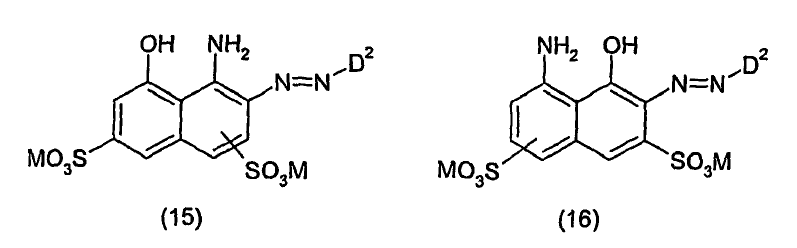 wobei D² und M die in Anspruch 1 angegebenen Bedeutungen besitzen.

3. Reaktivfarbstoffmischungen gemäß mindestens einem der Ansprüche 1 bis 2, enthaltend einen oder mehrere Monoazofarbstoffe der allgemeinen Formeln (17) bis (18), jeweils in einer Menge von 0 - 10 Gew.-%, 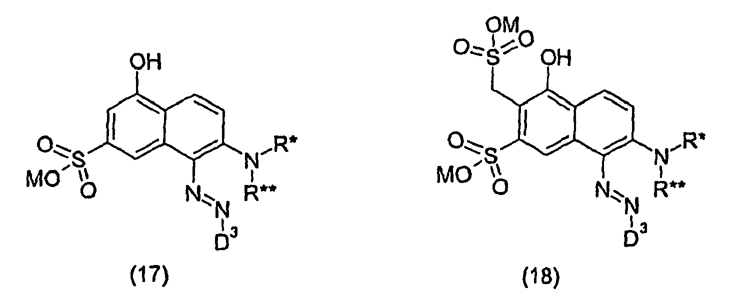 wobei M, R*, R** und D³ die in Anspruch 1 angegebenen Bedeutungen besitzen.

4. Reaktivfarbstoffmischungen gemäß mindestens einem der Ansprüche 1 bis 3, **dadurch gekennzeichnet, dass** sie zusätzlich mindestens einen den nachstehend angegebenen un definierten allgemeinen Formeln (Ga)-(Gf) entsprechenden Farbstoff als weitere Misch- bzw. Nuancierkomponente enthalten 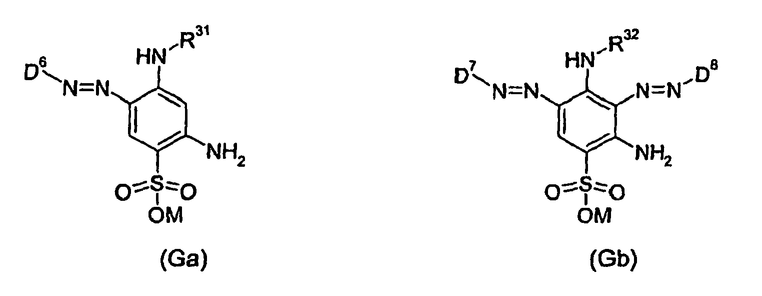 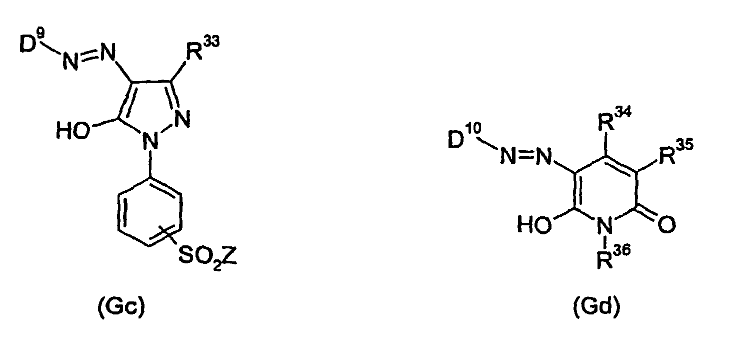 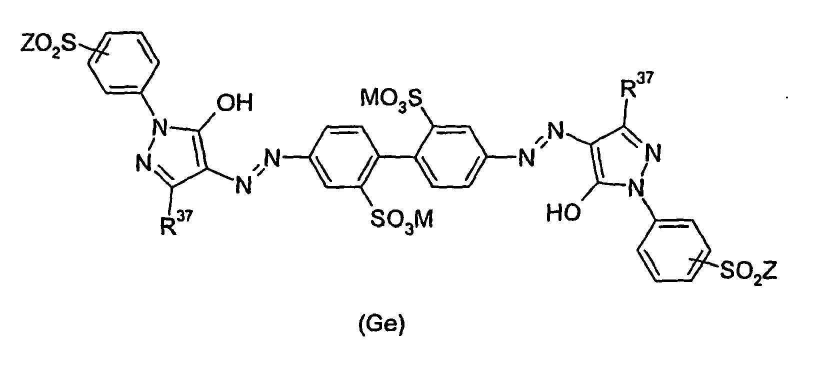 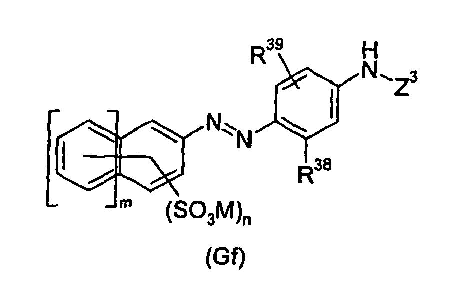 worin
D⁶, D⁷, D⁸, D⁹, D¹⁰ eine der Bedeutungen von D¹, D², D³, D⁴ oder D⁵ besitzen, wobei D⁶, wenn R³¹ nicht für eine Gruppe der allgemeinen Formel (4) oder (5) steht, sowie D⁷ oder D⁸ und D¹⁰ mindestens eine faserreaktive Gruppe der Formel -SO₂Z oder Z² enthalten;
R³¹ Wasserstoff, Acetyl, Carbamoyl, Sulfomethyl ist oder für eine Gruppe der allgemeinen Formel (4-1) oder (5-1) steht, 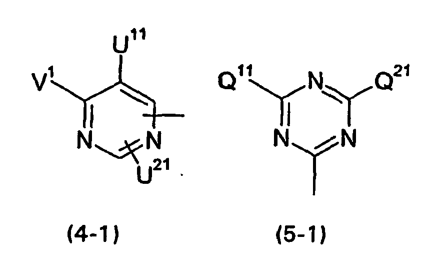 worin
V¹ Fluor oder Chlor bedeutet;
U¹¹, U²¹ unabhängig voneinander Fluor, Chlor oder Wasserstoff sind;
und
Q¹¹, Q²¹ unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (7-1) oder (8-1) bedeuten 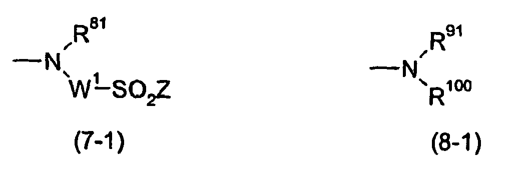 worin
R⁸¹ Wasserstoff oder (C₁-C₆)-Alkyl, Sulfo-(C₁-C₆)-Alkyl, oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R⁹¹ und R¹⁰⁰ haben unabhängig voneinander eine der Bedeutungen von R⁸¹, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfonyl, -NR¹¹ mit R¹¹ = (C₁-C₆)-Alkyl ist;
W¹ ist Phenylen, das unsubstitutiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfonyl, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder durch eine oder zwei Sulfogruppen substituiert ist; und
Z die in Anspruch 1 genannte Bedeutung hat,
R³² Wasserstoff oder Sulfomethyl ist,
R³³ Methyl, Carboxy oder Carboxyalkyl mit C₁- bis C₄-Alkyl ist,
R³⁴ Wasserstoff oder Methyl ist,
R³⁵ Wasserstoff, Cyano, Carbamoyl, Carboxy oder Sulfomethyl ist,
R³⁶ Methyl, Ethyl oder β-Sulfoethyl ist,
R³⁷ Methyl, Carboxy oder Carboxyalkyl mit C₁- bis C₄-Alkyl ist,
R³⁸ Acetamido, Ureido oder Methyl ist,
R³⁹ Wasserstoff, Methyl oder Methoxy ist,
m 0 oder 1 ist,
n 1, 2 oder 3 ist,
Z³ eine der Bedeutungen von Z² hat, und
M und Z eine der in Anspruch 1 genannten Bedeutungen haben.

5. Reaktivfarbstoffmischungen gemäß mindestens einem der Ansprüche 1 bis 4, **dadurch gekennzeichnet, dass** Z Vinyl, β-Chlorethyl oder β-Sulfatoethyl bedeutet.

6. Reaktivfarbstoffmischungen gemäß mindestens einem der Ansprüche 1 bis 5, **dadurch gekennzeichnet, dass** Q¹ und Q² in der allgemeinen Formel (5) unabhängig voneinander Fluor, Chlor, Cyanamido, Morpholino, 2-Sulfophenylamino, 3-Sulfophenylamino, 4-Sulfophenylamino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino, N-Methyl-N-(2-(2-sulfatoethylsulfonyl)-ethyl)-amino oder N-Phenyl-N-(2-(2-sulfatoethylsulfonyl)-ethyl)-amino bedeuten.

7. Reaktivfarbstoffmischungen gemäß Anspruch 1, enthaltend einen oder mehrere Farbstoffe der Formel (I) in einem Anteil von 25 bis 99 Gew.-% und einen oder mehrere Farbstoffe der Formel (II) in einem Anteil von 1 bis 75 Gew.-%.

8. Verfahren zur Herstellung von Farbstoffmischungen gemäß einem oder mehreren der Ansprüche 1 bis 7, **dadurch gekennzeichnet, dass** die Einzelfarbstoffe der Formeln (I), (II) und gegebenenfalls (III) und (G) im vorgegebenen Verhältnis entweder in fester Form mechanism miteinander vermischt werden oder in Form der wässrigen Lösungen gemischt werden.

9. Verfahren zur Herstellung von Farbstoffmischungen gemäß einem oder mehreren der Ansprüche 1 bis 7, für den Fall dass D¹, D⁴ und ggf. D⁵ gemäß den allgemeinen Formeln (I), (II) und ggf (III) gleiche Bedeutung besitzen (D¹ = D⁴ = D⁵), **dadurch gekennzeichnet, dass** man ein Amin der allgemeinen Formel (19)
D¹-NH₂ (19),
worin D¹ wie in Anspruch 1 angegeben definiert ist, in üblicher Weise diazotiert und die erhaltene Diazoniumverbindung anschießend mit einer wässrigen Lösung oder Suspension einer Mischung mit festgelegtem Verhältnis eines Monoazofarbstoffs gemäß der allgemeinen Formel (15), einem Monoazofarbstoff gemäß der allgemeinen Formel (17) und ggf. einer Kupplungskomponente der allgemeinen Formel (20) 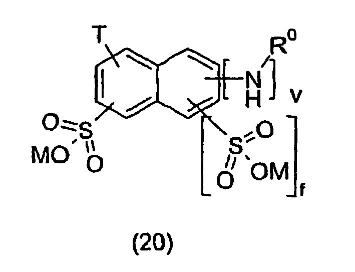 worin T, R⁰, M, f und v wie in Anspruch 1 angegeben, definiert sind, umsetzt.

10. Verfahren zur Herstellung von Farbstoffmischungen gemäß einem oder mehreren der Ansprüche 1 bis 7, für den Fall dass die Gruppen D² und D³ sowie D¹, D⁴ und ggf. D⁵ gemäß den allgemeinen Formeln (I), (II) und ggf. (III) gleiche Bedeutung besitzen (D² = D³ und D¹ = D⁴ = D⁵), **dadurch gekennzeichnet, dass** man ein Amin der allgemeinen Formel (21),
D²-NH₂ (21),
worin D² wie in Anspruch 1 angegeben definiert ist, in üblicher Weise diazotiert und auf eine Mischung der Kupplungskomponenten der allgemeinen Formeln (22) und (23) 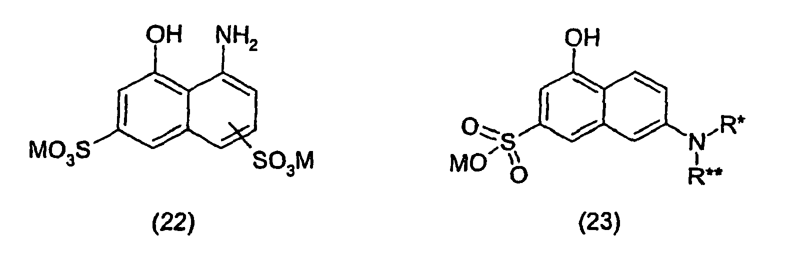 worin M, R* und R** wie in Anspruch 1 angegeben definiert sind, in erster Stufe kuppelt, die erhaltene Reaktionsmischung ggf. mit einer weiteren Kupplungskomponente der allgemeinen Formel (20) versetzt und anschließend ein Amin der allgemeinen Formel (19) in üblicher Weise diazotiert und mit der erhaltenen Mischung der Monoazofarbstoffe der allgemeinen Formeln (15) und (17) sowie ggf. der Kupplungskomponente der allgemeinen Formel (20) kuppelt.

11. Verfahren zur Herstellung von Farbstoffmischungen gemäß einem oder mehreren der Ansprüche 1 bis 7, für den Fall, dass die Gruppen D¹ bis D⁵ gemäß den allgemeinen Formeln (I), (II) und ggf. (III) gleiche Bedeutung besitzen (D¹ = D² = D³ = D⁴ = D⁵), **dadurch gekennzeichnet, dass** man ein Amin der allgemeinen Formel (19) in üblicher Weise diazotiert und auf eine Mischung mit festgelegtem Verhältnis der Kupplungskomponente der allgemeinen Formeln (22), (23) und ggf. (20) in erster Stufe zu einer Mischung der Monoazofarbstoffe der allgemeinen Formel (15) und (17) sowie ggf. der Kupplungskomponente der allgemeinen Formel (20) kuppelt, und daran anschließend durch Erhöhung des pH-Wertes die Zweitkupplung zur Mischung der Farbstoffe der allgemeinen Formeln (17) und ggf. einer Kupplungskomponente der allgemeinen Formel (I), (II) und ggf. (III) durchgeführt wird.

12. Wässrige Flüssigpräparation, enthaltend eine Farbstoffmischung nach mindestens einem der Ansprüche 1 bis 11 mit einem Gesamtfarbstoffgehalt von 5-50 Gew.-%

13. Verwendung von Reaktivfarbstoffmischungen gemäß einem oder mehreren der Ansprüche 1 bis 12 zum Färben von hydroxy- und/oder carbonamidgruppen-haltigem Fasermaterial.

## Claims

1. Reactive dye mixtures comprising one or more dyes of the hereinbelow indicated and defined general formula (I), 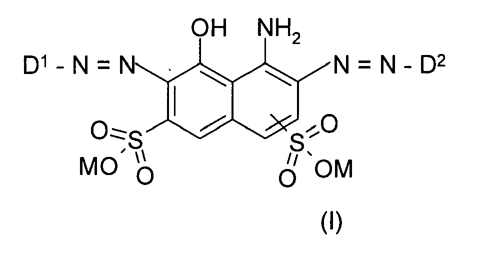 one or more dyes of the hereinbelow indicated and defined general formula (II), 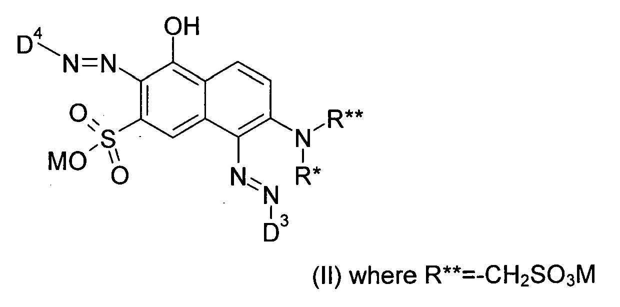 and optionally one or more dyes of the hereinbelow indicated and defined general formula (III), 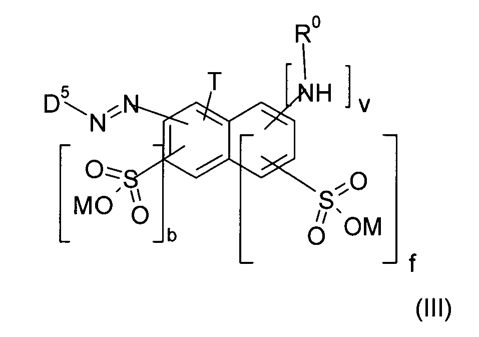 where:
D¹, D², D³, D⁴ and D⁵ are independently each a group of the general formula (1) 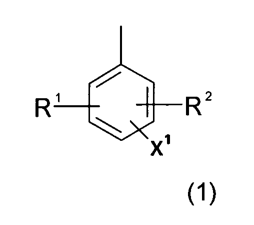 where
R¹ and R² independently are each hydrogen, (C₁-C₄)-alkyl, (C₁-C₄)-alkoxy, hydroxyl, sulfo, carboxyl, cyano, nitro, amido, ureido or halogen; and
X¹ is hydrogen or a group of the formula -SO₂-Z, where
Z is -CH=CH₂, -CH₂CH₂Z¹ or hydroxyl,
where
Z¹ is hydroxyl or an alkali-eliminable group, or
D¹, D², D³, D⁴ and D⁵ independently are each a naphthyl group of the general formula (2) 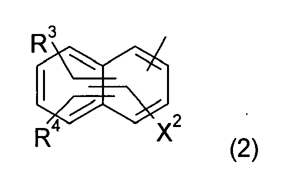 where
R³ and R⁴ independently are each hydrogen, (C₁-C₄)-alkyl, (C₁-C₄)-alkoxy, hydroxyl, sulfo, carboxyl, cyano, nitro, amido, ureido or halogen; and
X² is as defined for X¹; or
D¹, D², D³, D⁴ and D⁵ are independently each a group of the general formula (3) 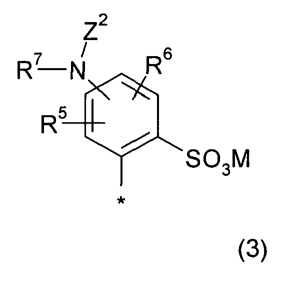 where
R⁵ and R⁶ independently have one of the meanings of R¹ and R²;
R⁷ is hydrogen, (C₁-C₄)-alkyl, or phenyl which is unsubstituted or substituted by (C₁-C₄)-alkyl, (C₁-C₄)-alkoxy, sulfo, halogen or carboxyl; and
Z² is a group of the general formula (4) or (5) or (6) 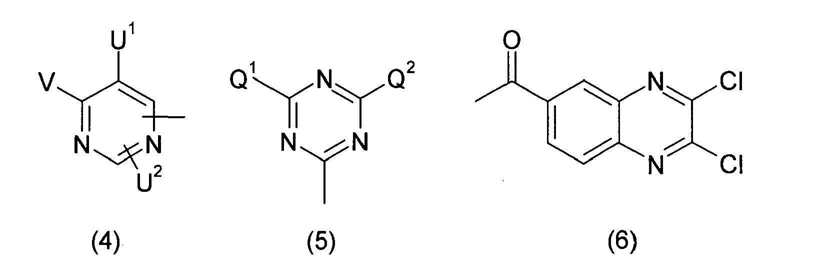 where
V is fluorine or chlorine;
U¹ and U² are independently each fluorine, chlorine or hydrogen;
and
Q¹ and Q² are independently each chlorine, fluorine, cyanamido, hydroxyl, (C₁-C₆)-alkoxy, phenoxy, sulfophenoxy, mercapto, (C₁-C₆)-alkylmercapto, pyridino, carboxypyridino, carbamoylpyridino or a group of the general formula (7) or (8) 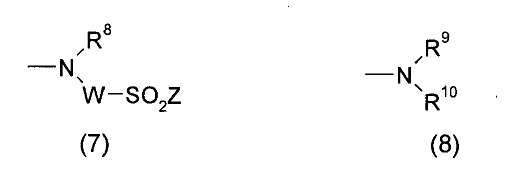 where
R⁸ is hydrogen or (C₁-C₆)-alkyl, sulfo-(C₁-C₆)-alkyl or phenyl which is unsubstituted or substituted by (C₁-C₄)-alkyl, (C₁-C₄)-alkoxy, sulfo, halogen, carboxyl, acetamido or ureido;
R⁹ and R¹⁰ independently have one of the meanings of R⁸ or form a cyclic ring system of the formula - (CH₂)ⱼ- where j is 4 or 5, or alternatively -(CH₂)₂-E-(CH₂)₂-, where E is oxygen, sulfur, sulfonyl, - NR¹¹, where R¹¹ is (C₁-C₆)-alkyl;
W is phenylene which is unsubstituted or substituted by 1 or 2 substituents, such as (C₁-C₄)-alkyl, (C₁-C₄)-alkoxy, carboxyl, sulfo, chloro or bromo, or is (C₁-C₄)-alkylene-arylene or (C₂-C₆)-alkylene, which may be interrupted by oxygen, sulfur, sulfonyl, amino, carbonyl or carboxamido, or is phenylene-CONH-phenylene, which is unsubstituted or substituted by (C₁-C₄)-alkyl, (C₁-C₄)-alkoxy, hydroxyl, sulfo, carboxyl, amido, ureido or halogen, or is naphthylene, which is unsubstituted or substituted by one or two sulfo groups; and
Z is as defined above; or
D¹, D², D³, D⁴, and D⁵ independently are each a group of the general formula (9) 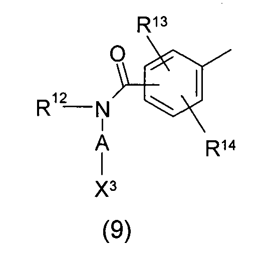 where
R¹² is hydrogen, (C₁-C₄)-alkyl, aryl or a substituted aryl radical;
R¹³ and R¹⁴ independently are hydrogen, (C₁-C₄)-alkyl, (C₁-C₄)-alkoxy, hydroxyl, sulfo, carboxyl, cyano, nitro, amido, ureido or halogen; and
A is a phenylene group of the general formula (10) 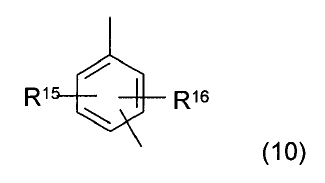 where
R¹⁵ and R¹⁶ independently are hydrogen, (C₁-C₄)-alkyl, (C₁-C₄)-alkoxy, hydroxyl, sulfo, carboxyl, cyano, nitro, amido, ureido or halogen; or
A is a naphthylene group of the general formula (11) 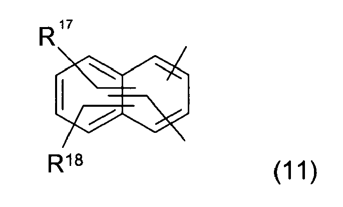 where
R¹⁷ and R¹⁸ independently are hydrogen, (C₁-C₄)-alkyl, (C₁-C₄)-alkoxy, hydroxyl, sulfo, carboxyl, cyano, nitro, amido, ureido or halogen; and
X³ has one of the meanings of X¹; and
R⁰ is a group of the general formula (4) or (5) or is a group of the general formula (13) 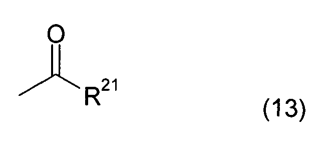 where;
R²¹ is (C₁-C₆)-alkyl, sulfo-(C₁-C₆)-alkyl, carboxy-(C₁-C₆)-alkyl or phenyl which is unsubstituted or substituted by (C₁-C₄)-alkyl, (C₁-C₄)-alkoxy, sulfo, halogen, carboxyl, acetamido or ureido; and
b, f and v independently are each 0 or 1; and
R* is hydrogen, (C₁-C₄)-alkyl or a group of the formula (14)
-CH₂-SO₃M (14);
T is hydroxyl or NH₂, and if T is NH₂ v is 0, and
M is hydrogen, an alkali metal or an equivalent of an alkaline earth metal, where the mixtures
the dyes of the general formulae (I) - (III) contain at least one fiber-reactive group of the formula -SO₂-Z or -Z².

2. Reactive dye mixtures according to Claim 1, comprising one or more monoazo dyes of the formula (15) and/or one or more monoazo dyes of the formula (16) each at 0.5 to 6% by weight 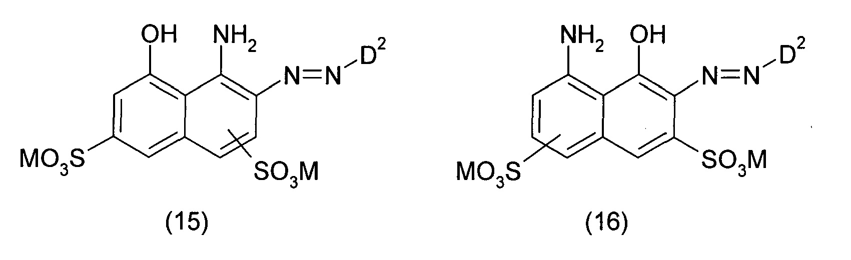 where D² and M are as defined in Claim 1.

3. Reactive dye mixtures according to at least one of Claims 1 to 2, comprising one or more monoazo dyes of the general formulae (17) to (18), each in an amount of 0 - 10% by weight 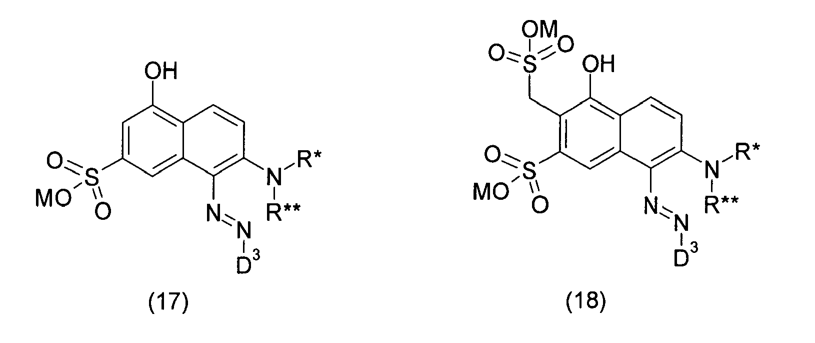 where M, R*, R** and D³ are as defined in Claim 1.

4. Reactive dye mixtures according to at least one of Claims 1 to 3, **characterized in that** they further comprise at least one dye corresponding to the hereinbelow indicated and defined general formulae (Ga)- (Gf) as a further mixing or shading component 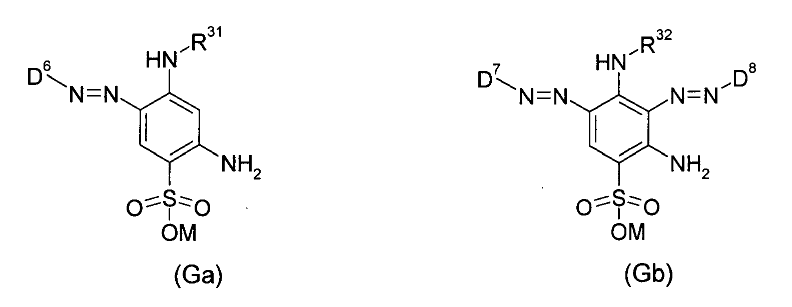 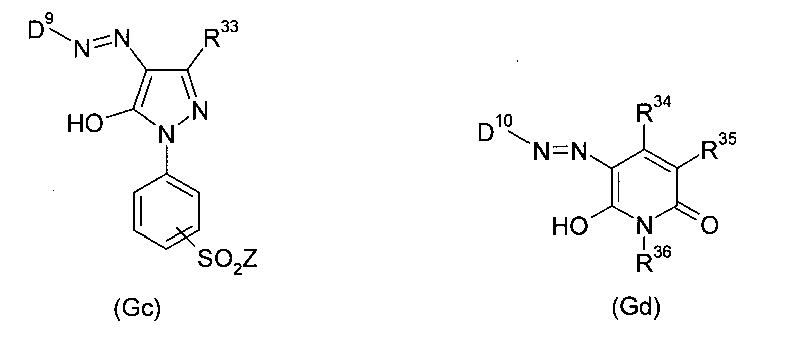 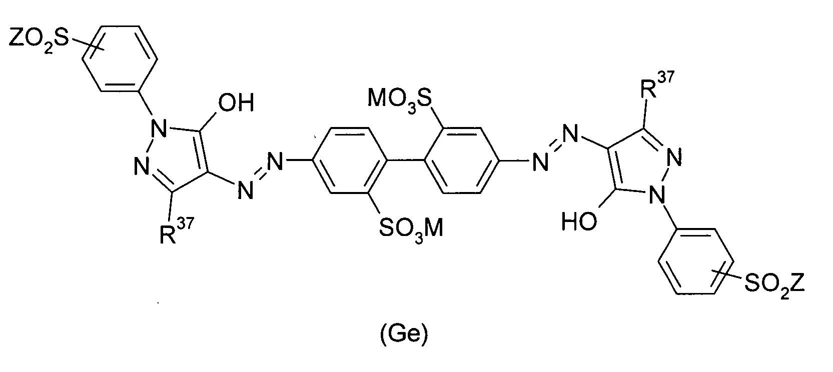 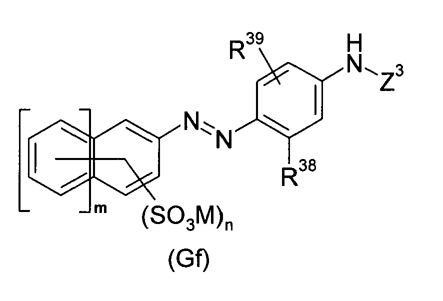 where
D⁶, D⁷, D⁸, D⁹, and D¹⁰ possess one of the meanings of D¹, D², D³, D⁴ or D⁵, and D⁶, if R³¹ is not a group of the general formula (4) or (5), and also D⁷ or D⁸ and D¹⁰ contain at least one fiber-reactive group of the formula -SO₂Z or Z²;
R³¹ is hydrogen, acetyl, carbamoyl, sulfomethyl, or a group of the general formula (4-1) or (5-1), 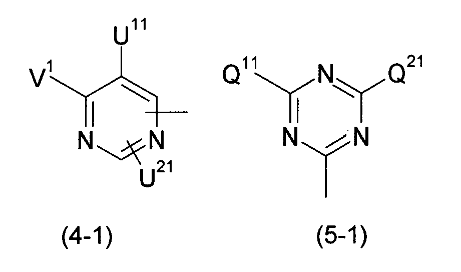 where
V¹ is fluoro or chloro;
U¹¹ and U²¹ independently are each fluoro, chloro or hydrogen; and
Q¹¹ and Q²¹ independently are each chloro, fluoro, cyanamido, hydroxyl, (C₁-C₆)-alkoxy, phenoxy, sulfophenoxy, mercapto, (C₁-C₆)-alkylmercapto, pyridino, carboxypyridino, carbamoylpyridino or a group of the general formula (7-1) or (8-1) 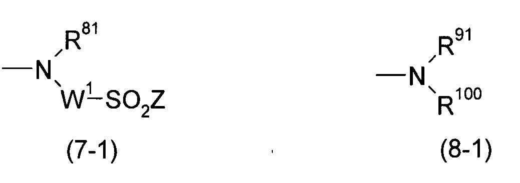 where
R⁸¹ is hydrogen or (C₁-C₆)-alkyl, sulfo-(C₁-C₆)-alkyl, or phenyl which is unsubstituted or substituted by (C₁-C₄)-alkyl, (C₁-C₄)-alkoxy, sulfo, halogen, carboxyl, acetamido or ureido;
R⁹¹ and R¹⁰⁰ independently each have one of the meanings of R⁸¹ or form a cyclic ring system of the formula -(CH₂)ⱼ- where j is 4 or 5, or alternatively -(CH₂)₂-E-(CH₂)₂-, where E is oxygen, sulfur, sulfonyl or -NR¹¹ where R¹¹ is (C₁-C₆)-alkyl;
W¹ is phenylene which is unsubstituted or substituted by 1 or 2 substituents, such as (C₁-C₄)-alkyl, (C₁-C₄)-alkoxy, carboxyl, sulfo, chloro or bromo, or is (C₁-C₄)-alkylenearylene or (C₂-C₆)-alkylene which may be interrupted by oxygen, sulfur, sulfonyl, amino, carbonyl or carboxamido, or is phenylene-CONH-phenylene which is unsubstituted or substituted by (C₁-C₄)-alkyl, (C₁-C₄)-alkoxy, hydroxyl, sulfo, carboxyl, amido, ureido or halogen, or is naphthylene which is unsubstituted or substituted by one or two sulfo groups; and
Z is as defined in Claim 1,
R³² is hydrogen or sulfomethyl,
R³³ is methyl, carboxyl or carboxyalkyl with C₁- to C₄-alkyl,
R³⁴ is hydrogen or methyl,
R³⁵ is hydrogen, cyano, carbamoyl, carboxyl or sulfomethyl,
R³⁶ is methyl, ethyl or β-sulfoethyl,
R³⁷ is methyl, carboxyl or carboxyalkyl with C₁- to C₄-alkyl,
R³⁸ is acetamido, ureido or methyl,
R³⁹ is hydrogen, methyl or methoxy,
m is 0 or 1,
n is 1, 2 or 3,
Z³ has one of the meanings of Z², and
M and Z are as defined in Claim 1.

5. Reactive dye mixtures according to at least one of Claims 1 to 4, **characterized in that** Z is vinyl, β-chloroethyl or β-sulfatoethyl.

6. Reactive dye mixtures according to at least one of Claims 1 to 5, **characterized in that** Q¹ and Q² in the general formula (5) are independently each fluoro, chloro, cyanamido, morpholino, 2-sulfophenylamino, 3-sulfophenylamino, 4-sulfophenylamino, 3-(2-sulfatoethylsulfonyl)phenylamino, 4-(2-sulfatoethylsulfonyl)phenylamino, 3-(vinylsulfonyl)phenylamino, 4-(vinylsulfonyl)phenylamino, N-methyl-N-(2-(2-sulfatoethylsulfonyl)ethyl)amino or N-phenyl-N-(2-(2-sulfatoethylsulfonyl)ethyl)amino.

7. Reactive dye mixtures according to Claim 1, comprising one or more dyes of the formula (I) in a fraction of 25 to 99% by weight and one or more dyes of the formula (II) in a fraction of 1 to 75% by weight.

8. Process for producing dye mixtures according to one or more of Claims 1 to 7 **characterized in that** the individual dyes of the formulae (I), (II), and, if desired, (III) and (G) are mixed in a defined ratio with one another mechanically in solid form or in the form of the aqueous solutions.

9. Process for producing dye mixtures according to one or more of Claims 1 to 7, where D¹, D⁴, and, where appropriate, D⁵ as per the general formulae (I), (II), and, where appropriate, (III) possess the same definition (D¹ = D⁴ = D⁵), **characterized in that** an amine of the general formula (19)
D¹ - NH₂ (19),
where D¹ is as defined in Claim 1, is conventionally diazotized and then the resulting diazonium compound is reacted with an aqueous solution or suspension of a mixture in defined proportion of a monoazo dye conforming to the general formula (15), a monoazo dye conforming to the general formula (17), and, where appropriate, a coupling component of the general formula (20) 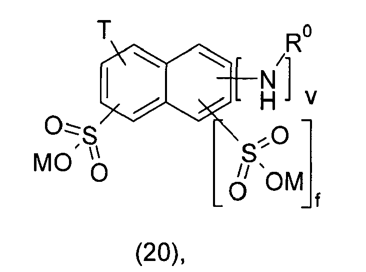 where T, R⁰, M, f, and v are as defined in Claim 1.

10. Process for producing dye mixtures according to at least one of Claims 1-7 where the groups D² and D³ and also D¹, D⁴, and, where appropriate, D⁵ as per the general formulae (I), (II), and, where appropriate, (III) possess the same definition (D² = D³ and D¹ = D⁴ = D⁵), **characterized in that** an amine of the general formula (21),
D²- NH₂ (21),
where D² is as defined in Claim 1, is conventionally diazotized and the product is coupled to a mixture of the coupling components of the general formulae (22) and (23) 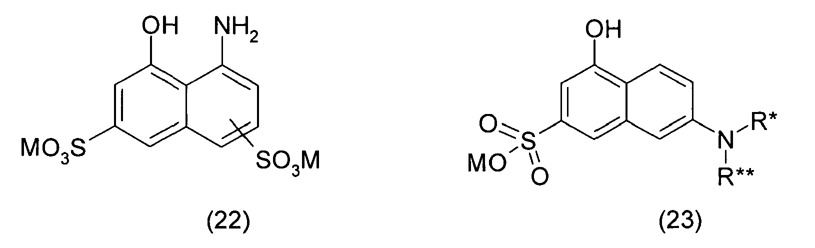 where M, R* and R** are as defined in Claim 1 in a first stage, where appropriate, a further coupling component of the general formula (20) is added to the resultant reaction mixture, and then an amine of the general formula (19) is conventionally diazotized and the product is coupled to the resulting mixture of the monoazo dyes of the general formulae (15) and (17) and also, where appropriate, the coupling component of the general formula (20).

11. Process for producing dye mixtures according to one or more of Claims 1 to 7 where the groups D¹ to D⁵ as per the general formulae (I), (II), and, where appropriate, (III) possess the same definition (D¹ = D² = D³ = D⁴ = D⁵), **characterized in that** an amine of the general formula (19) is conventionally diazotized and the product is coupled to a mixture in defined proportion of the coupling components of the general formulae (22), (23), and, where appropriate, (20) in a first stage to give a mixture of the monoazo dyes of the general formulae (15) and (17) and also, where appropriate, the coupling component of the general formula (20), and subsequently the pH is raised to carry out the second coupling to give the mixture of the dyes of the general formulae (I), (II), and, where appropriate, (III).

12. Aqueous liquid preparation comprising a dye mixture according to at least one of Claims 1 to 11 with a total dye content of 5 - 50% by weight.

13. Use of reactive dye mixtures according to one or more of Claims 1 to 12 for dyeing hydroxyl- and/or carboxamido-containing fiber material.

## Revendications

1. Mélanges de colorants réactifs, qui contiennent un ou plusieurs colorants de la formule générale (I) indiquée et définie ci-dessous 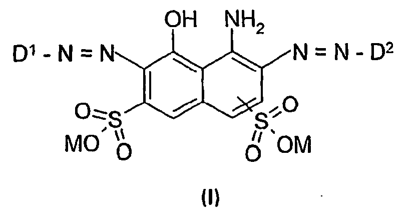 un ou plusieurs colorants de la formule générale (II) indiquée et définie ci-dessous 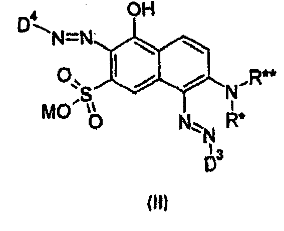 avec R**-CH₂SO₃M et éventuellement un ou plusieurs colorants de la formule générale (III) indiquée et définie ci-dessous 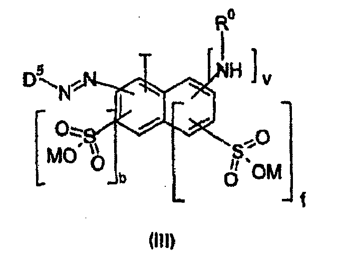 où
D¹, D², D³, D⁴ et D⁵ représentent, indépendamment l'un de l'autre, un groupe de formule générale (1) 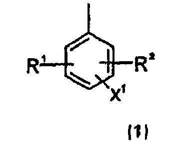 où
R¹ et R² représentent, indépendamment l'un de l'autre, hydrogène, (C₁-C₄)-alkyle, (C₁-C₄)-alcoxy, hydroxy, sulfo, carboxy, cyano, nitro, amido, uréido ou halogène ; et
X¹ représente hydrogène ou un groupe de formule -SO₂-Z,
où
Z signifie -CH=CH₂, -CH₂CH₂Z¹ ou hydroxy,
où
Z¹ représente hydroxy ou un groupe pouvant être dissocié sous l'effet d'alcalis ;
ou
D¹, D², D³, D⁴ et D⁵ signifient indépendamment l'un de l'autre un groupe naphtyle de formule générale (2) 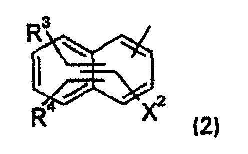 où
R³ et R⁴ représentent, indépendamment l'un de l'autre, hydrogène, (C₁-C₄)-alkyle, (C₁-C₄)-alcoxy, hydroxy, sulfo, carboxy, cyano, nitro, amido, uréido ou halogène ; et
X² présente une des significations de X¹ ; ou
D¹, D², D³, D⁴ et D⁵ représentent, indépendamment l'un de l'autre, un groupe de formule générale (3) 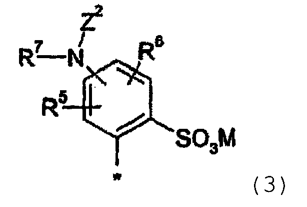 où
R⁵ et R⁶ présentent, indépendamment l'un de l'autre, une des significations de R¹ et R² ;
R⁷ représente hydrogène, (C₁-C₄)-alkyle, phényle non substitué ou substitué par (C₁-C₄)-alkyle, (C₁-C₄)-alcoxy, sulfo, halogène ou carboxy ; et
Z² représente un groupe de formule générale (4) ou (5) ou (6) 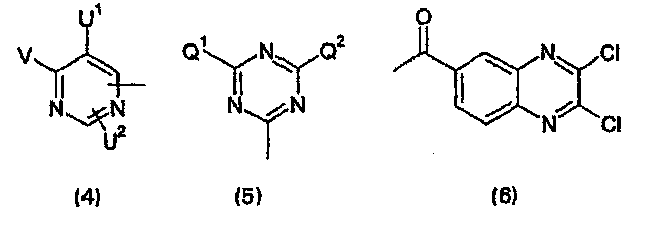
où
V signifie fluor ou chlore ;
U¹, U² représentent, indépendamment l'un de l'autre, fluor, chlore ou hydrogène ; et
Q¹, Q² signifient indépendamment l'un de l'autre chlore, fluor, cyanamido, hydroxy, (C₁-C₆)-alcoxy, phénoxy, sulfophénoxy, mercapto, (C₁-C₆)-alkylmercapto, pyridino, carboxypyridino, carbamoylpyridino ou un groupe de formule générale (7) ou (8) 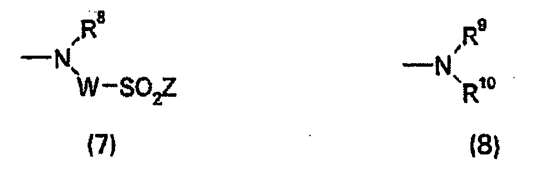
où
R⁸ représente hydrogène ou (C₁-C₆)-alkyle, sulfo-(C₁-C₆)-alkyle ou phényle qui est non substitué ou substitué par (C₁-C₄)-alkyle, (C₁-C₄)-alcoxy, sulfo, halogène, carboxy, acétamido, uréido ;
R⁹ et R¹⁰ présentent, indépendamment l'un de l'autre, une des significations de R⁸, ou forment un système cyclique de formule -(CH₂)ⱼ-, où j vaut 4 ou 5, ou en variante - (CH₂)₂-E-(CH₂)₂-, où E représente oxygène, soufre, sulfonyle, -NR¹¹ avec R¹¹ = (C₁-C₆)-alkyle ;
W représente phénylène, qui est non substitué ou substitué par 1 ou 2 substituants, tels que (C₁-C₄)-alkyle, (C₁-C₄) -alcoxy, carboxy, sulfo, chlore, brome, ou représente (C₁-C₄)-alkylène-arylène ou (C₂-C₆)-alkylène, qui peut être interrompu par oxygène, soufre, sulfonyle, amino, carbonyle, carboxamido, ou représente phénylène-CONH-phénylène, qui est non substitué ou substitué par (C₁-C₄)-alkyle, (C₁-C₄)-alcoxy, hydroxy, sulfo, carboxy, amido, uréido ou halogène, ou représente naphtylène, qui est non substitué ou substitué par un ou deux groupes sulfo ; et
Z a la signification susmentionnée ; ou
D¹, D², D³, D⁴ et D⁵ représentent, indépendamment l'un de l'autre, un groupe de formule générale (9) 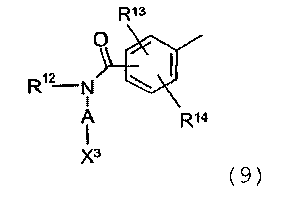 où
R¹² représente hydrogène, un radical (C₁-C₄)-alkyle, aryle ou aryle substitué ;
R¹³ et R¹⁴ représentent, indépendamment l'un de l'autre, hydrogène, (C₁-C₄)-alkyle, (C₁-C₄)-alcoxy, hydroxy, sulfo, carboxy, cyano, nitro, amido, uréido ou halogène ; et
A représente un groupe phénylène de formule générale (10) 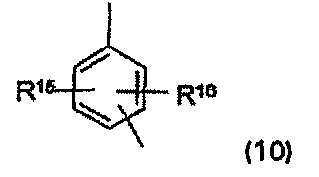 où
R¹⁵ et R¹⁶ représentent, indépendamment l'un de l'autre, hydrogène, (C₁-C₄)-alkyle, (C₁-C₄)-alcoxy, hydroxy, sulfo, carboxy, cyano, nitro, amido, uréido ou halogène ; ou
A représente un groupe naphtylène de formule générale (11) 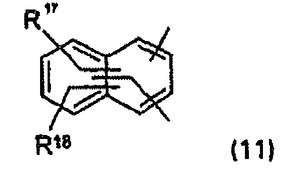 où
R¹⁷ et R¹⁸ représentent, indépendamment l'un de l'autre, hydrogène, (C₁-C₄)-alkyle, (C₁-C₄)-alcoxy, hydroxy, sulfo, carboxy, cyano, nitro, amido, uréido ou halogène ; et
X³ présente une des significations de X¹ ; et
R⁰ représente un groupe de formule générale (4) ou (5) ou un groupe de formule générale (13) 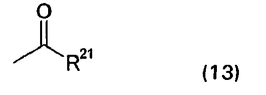 où
R²¹ représente (C₁-C₆)-alkyle, sulfo-(C₁-C₆) - alkyle, carboxy-(C₁-C₆)-alkyle ou phényle, qui est non substitué ou substitué par (C₁-C₄) - alkyle, (C₁-C₄)-alcoxy, sulfo, halogène, carboxy, acétamido, uréido ; et
b, f, v représentent, indépendamment l'un de l'autre, 0 ou 1 ; et
R* représente hydrogène, (C₁-C₄)-alkyle ou un groupe de formule (14)
-CH₂-SO₃M (14) ;
T représente hydroxy ou NH₂, T représentant NH₂, v valant 0 et
M signifie hydrogène, un métal alcalin ou un équivalent d'un métal alcalino-terreux, les mélanges
les colorants des formules générales (I)-(III) contenant au moins un groupe réactif avec des fibres de formule -SO₂-Z ou -Z².

2. Mélanges de colorants réactifs selon la revendication 1, contenant un ou plusieurs colorants de type monoazo de formule (15) et/ou un ou plusieurs colorants de type monoazo de formule (16) à chaque fois à raison de 0,5 à 6% en poids, 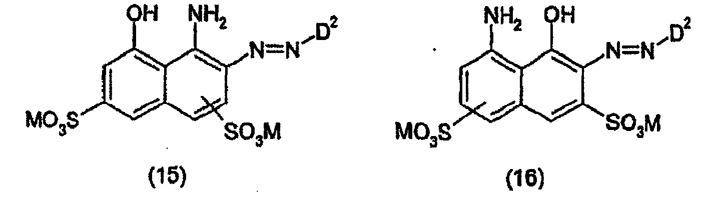 D² et M ayant les significations indiquées dans la revendication 1.

3. Mélanges de colorants réactifs selon au moins l'une quelconque des revendications 1 à 2, contenant un ou plusieurs colorants de type monoazo des formules générales (17) et (18) à chaque fois en une quantité de 0-10% en poids, 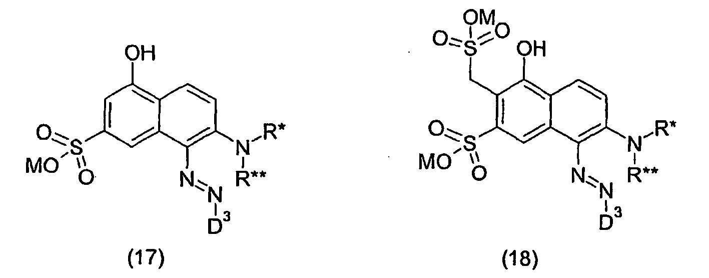 où M, R*, R** et D³ présentent les significations indiquées dans la revendication 1.

4. Mélanges de colorants réactifs selon au moins l'une quelconque des revendications 1 à 3, **caractérisés en ce qu'**ils contiennent en plus au moins un colorant correspondant aux formules générales (Ga)-(Gf) indiquées et définies ci-dessous comme autre composant de mélange ou de nuançage 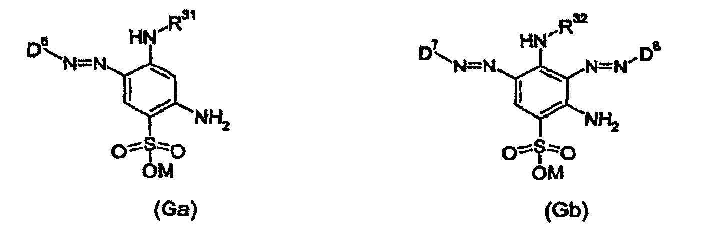 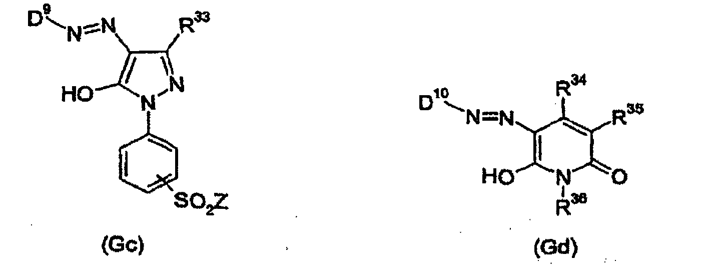 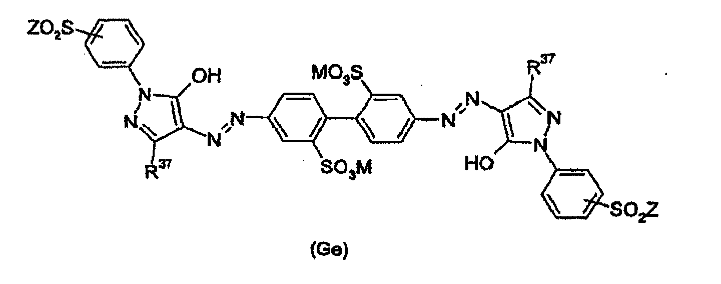 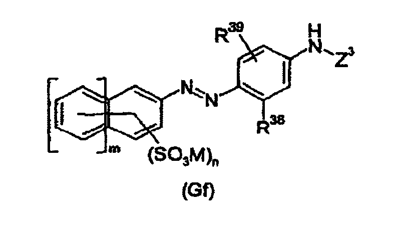 où
D⁶, D⁷, D⁸, D⁹, D¹⁰ présentent une des significations de D¹, D², D³, D⁴ ou D⁵, où D⁶, lorsque R³¹ ne représente pas un groupe des formules générales (4) ou (5), ainsi que D⁷ ou D⁸ et D¹⁰ contiennent au moins un groupe réactif avec des fibres de formule -SO₂Z ou Z² ;
R³¹ représente hydrogène, acétyle, carbamoyle, sulfométhyle ou représente un groupe des formules générales (4-1) ou (5-1), 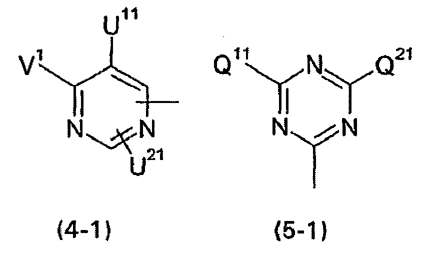 où
V¹ signifie fluor ou chlore ;
U¹¹, U²¹ représentent, indépendamment l'un de l'autre, fluor, chlore ou hydrogène ;
et
Q¹¹, Q²¹ signifient indépendamment l'un de l'autre chlore, fluor, cyanamido, hydroxy, (C₁-C₆)-alcoxy, phénoxy, sulfophénoxy, mercapto, (C₁-C₆)-alkylmercapto, pyridino, carboxypyridino, carbamoylpyridino ou un groupe de formule générale (7-1) ou (8-1) 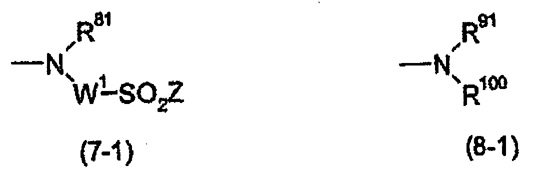
où
R⁸¹ représente hydrogène ou (C₁-C₆)-alkyle, sulfo-(C₁-C₆)-alkyle ou phényle qui est non substitué ou substitué par (C₁-C₄)-alkyle, (C₁-C₄) -alcoxy, sulfo, halogène, carboxy, acétamido, uréido ;
R⁹¹ et R¹⁰⁰ présentent, indépendamment l'un de l'autre, une des significations de R⁸¹, ou forment un système cyclique de formule -(CH₂)ⱼ-, où j vaut 4 ou 5, ou en variante -(CH₂)₂-E-(CH₂)₂-, où E représente oxygène, soufre, sulfonyle, -NR¹¹ avec R¹¹ = (C₁-C₆)-alkyle ;
W¹ représente phénylène, qui est non substitué ou substitué par 1 ou 2 substituants, tels que (C₁-C₄)-alkyle, (C₁-C₄)-alcoxy, carboxy, sulfo, chlore, brome, ou représente (C₁-C₄)-alkylène-arylène ou (C₂-C₆)-alkylène, qui peut être interrompu par oxygène, soufre, sulfonyle, amino, carbonyle, carboxamido, ou représente phénylène-CONH-phénylène, qui est non substitué ou substitué par (C₁-C₄)-alkyle, (C₁-C₄) -alcoxy, hydroxy, sulfo, carboxy, amido, uréido ou halogène, ou représente naphtylène, qui est non substitué ou substitué par un ou deux groupes sulfo ; et
Z a la signification mentionnée dans la revendication 1,
R³² représente hydrogène ou sulfométhyle,
R³³ représente méthyle, carboxy ou carboxyalkyle avec un groupe C₁-C₄-alkyle,
R³⁴ représente hydrogène ou méthyle,
R³⁵ représente hydrogène, cyano, carbamoyle, carboxy ou sulfométhyle,
R³⁶ représente méthyle, éthyle ou β-sulfoéthyle,
R³⁷ représente méthyle, carboxy ou carboxyalkyle avec un groupe C₁-C₄-alkyle,
R³⁸ représente acétamido, uréido ou méthyle,
R³⁹ représente hydrogène, méthyle ou méthoxy,
m vaut 0 ou 1,
n vaut 1, 2 ou 3,
Z³ présente une des significations de Z², et
M et Z présentent une des significations mentionnées dans la revendication 1.

5. Mélanges de colorants réactifs selon au moins l'une quelconque des revendications 1 à 4, **caractérisés en ce que** Z signifie vinyle, ß-chloroéthyle ou β-sulfatoéthyle.

6. Mélanges de colorants réactifs selon au moins l'une quelconque des revendications 1 à 5, **caractérisés en ce que** Q¹ et Q² dans la formule générale (5) signifient, indépendamment l'un de l'autre, fluor, chlore, cyanamido, morpholino, 2-sulfophénylamino, 3-sulfophénylamino, 4-sulfophénylamino, 3-(2-sulfatoéthylsulfonyl)-phénylamino, 4-(2-sulfatoéthylsulfonyl)-phénylamino, 3-(vinylsulfonyl)-phénylamino, 4-(vinylsulfonyl)-phénylamino, N-méthyl-N-(2-(2-sulfatoéthylsulfonyl)-éthyl)-amino ou N-phényl-N-(2-(2-sulfatoéthylsulfonyl)-éthyl)-amino.

7. Mélanges de colorants réactifs selon la revendication 1, contenant un ou plusieurs colorants de formule (I) en une proportion de 25 à 99% en poids et un ou plusieurs colorants de formule (II) en une proportion de 1 à 75% en poids.

8. Procédé pour la préparation de mélanges de colorants selon l'une ou plusieurs des revendications 1 à 7, **caractérisé**
**en ce que** les différents colorants des formules (I), (II) et le cas échéant (III) et (G) sont mélangés les uns avec les autres dans un rapport prédéfini, soit mécaniquement sous forme solide, soit sous forme de solutions aqueuses.

9. Procédé pour la préparation de mélanges de colorants selon l'une ou plusieurs des revendications 1 à 7, pour le cas où D¹, D⁴ et le cas échéant D⁵ selon les formules générales (I), (II) et le cas échéant (III) présenteraient la même signification (D¹ - D⁴ = D⁵), **caractérisé**
**en ce qu'**on diazote une amine de formule générale (19)
D¹-NH₂ (19),
dans laquelle D¹ est défini comme indiqué dans la revendication 1, de manière usuelle et on transforme ensuite le composé de diazonium obtenu avec une solution ou une suspension aqueuse d'un mélange, avec un rapport défini, d'un colorant monoazo selon la formule générale (15), d'un colorant monoazo selon la formule générale (17) et le cas échéant d'un composant de couplage de formule générale (20) 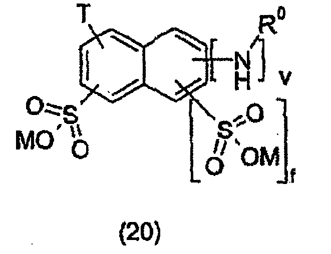 dans laquelle T, R⁰, M, f et v sont définis comme indiqué dans la revendication 1.

10. Procédé pour la préparation de mélanges de colorants selon au moins l'une quelconque des revendications 1 à 7, pour le cas où les groupes D² et D³ ainsi que D¹, D⁴ et le cas échéant D⁵ selon les formules générales (I), (II) et le cas échéant (III) présenteraient la même signification (D² = D³ et D¹ = D⁴ = D⁵), **caractérisé**
**en ce qu'**on diazote une amine de formule générale (21)
D²-NH₂ (21),
dans laquelle D² est défini comme indiqué dans la revendication 1, de manière usuelle puis on couple sur un mélange de composants de couplage des formules générales (22) et (23), 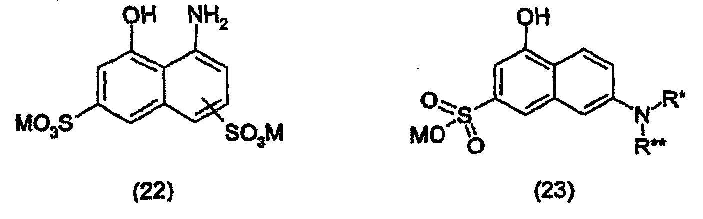 dans lesquelles M, R* et R** sont définis comme indiqué dans la revendication 1, dans une première étape, on mélange le mélange réactionnel obtenu le cas échéant avec un autre composant de couplage de formule générale (20) et on diazote ensuite une amine de formule générale (19) de manière usuelle et on couple avec le mélange obtenu des colorants monoazo des formules générales (15) et (17) ainsi que le cas échéant des composants de couplage de formule générale (20).

11. Procédé pour la préparation de mélanges de colorants selon l'une ou plusieurs des revendications 1 à 7, pour le cas où les groupes D¹ à D⁵ selon les formules générales (I), (II) et le cas échéant (III) présenteraient la même signification (D¹ = D² =D³ = D⁴ = D⁵), **caractérisé**
**en ce qu'**on diazote une amine de formule générale (19) de manière usuelle et on couple sur un mélange présentant un rapport défini des composants de couplage des formules générales (22), (23) et le cas échéant (20) dans une première étape en un mélange des colorants monoazo des formules générales (15) et (17) ainsi que le cas échéant des composants de couplage de formule générale (20), puis on réalise, en augmentant le pH, le deuxième couplage sur le mélange des colorants des formules générales (I), (II) et le cas échéant (III).

12. Préparation liquide aqueuse, contenant un mélange de colorants selon au moins l'une quelconque des revendications 1 à 11 avec une teneur totale en colorants de 5-50% en poids.

13. Utilisation de mélanges de colorants réactifs selon l'une ou plusieurs des revendications 1 à 12 pour la teinture de matériau fibreux contenant des groupes hydroxy et/ou carboxamide.
